(19) Europäisches Patentamt / European Patent Office / Office européen des brevets

(11) **EP 4 682 988 A1**

(12) **EUROPEAN PATENT APPLICATION**
published in accordance with Art. 153(4) EPC

(43) Date of publication:
**21.01.2026 Bulletin 2026/04**

(21) Application number: **24797506.3**

(22) Date of filing: **29.04.2024**

(51) International Patent Classification (IPC):
$H01M\ 4/525^{(2010.01)}$    $H01M\ 4/131^{(2010.01)}$
$H01M\ 4/36^{(2006.01)}$    $H01M\ 10/052^{(2010.01)}$
$H01M\ 4/505^{(2010.01)}$    $H01M\ 4/04^{(2006.01)}$
$H01M\ 10/0525^{(2010.01)}$    $H01M\ 4/02^{(2006.01)}$

(52) Cooperative Patent Classification (CPC):
Y02E 60/10

(86) International application number:
**PCT/KR2024/005816**

(87) International publication number:
**WO 2024/225852 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.04.2023 KR 20230056231**

(71) Applicant: **LG Chem, Ltd.**
**Seoul 07336 (KR)**

(72) Inventors:
• **JEONG, Jin Hoo**
**Daejeon 34122 (KR)**
• **JEONG, Myung Gi**
**Daejeon 34122 (KR)**

• **HWANG, Joo Kyoung**
**Daejeon 34122 (KR)**
• **LEE, Ji Young**
**Daejeon 34122 (KR)**
• **RYU, Hyeon Mo**
**Daejeon 34122 (KR)**
• **HEO, Kook Jin**
**Daejeon 34122 (KR)**
• **LEE, Jung Uk**
**Daejeon 34122 (KR)**
• **BAK, Sang Eun**
**Daejeon 34122 (KR)**
• **KIM, Jong Hyuk**
**Daejeon 34122 (KR)**

(74) Representative: **Hoffmann Eitle**
**Patent- und Rechtsanwälte PartmbB**
**Arabellastraße 30**
**81925 München (DE)**

(54) **CATHODE ACTIVE MATERIAL, CATHODE AND LITHIUM SECONDARY BATTERY**

(57) The present invention relates to a cathode active material and, to a cathode active material, and a cathode and a lithium secondary battery, each including same, in which the cathode active material can solve conventional problems of secondary particles and problems of single-particles at the same time, and comprises, as primary particles, particles like conventional single-particles, and secondary particles formed by aggregation of a plurality of the primary particles, and thus not only provides excellent cell properties of lithium secondary batteries, such as improved lifespan and reduced gas generation, but also provides excellent density properties to improve energy density.

EP 4 682 988 A1

[FIG. 1]

**Description**

**[Technical Field]**

CROSS-REFERENCE TO RELATED APPLICATION

This application claims the benefits of priority to Korean Patent Application No. 10-2023-0056231 dated April 28, 2023 and Korean Patent Application No. 10-2024-0057079 dated April 29, 2024, the disclosures of which are incorporated herein by reference in their entirety.

Technical Field

The present invention relates to a positive electrode active material, and a positive electrode and a lithium secondary battery including the same.

**[Background Art]**

Recently, as technology for electric vehicles and the like has developed, demand for a high-capacity secondary battery has increased, and thus, research on a high-nickel positive electrode active material having excellent capacity characteristics is being actively conducted.

In the high-nickel positive electrode active material formed with a structure of secondary particles in which primary particles are aggregated, structural degradation may occur during charging and discharging of the lithium secondary battery, but a change in a lattice structure constant, that is, a change in volume within a unit lattice, occurs relatively large. This volume change causes cracks in the positive electrode active material. In addition, even when the electrode is rolled, cracks may occur in the positive electrode active material due to pressure.

The cracks in the high-nickel positive electrode active material generated in this way become more severe in the process of charging and discharging the lithium secondary battery, and thus act as voids that the electrolyte cannot reach or that reduce conductivity, thereby lowering the lifespan characteristics of the lithium secondary battery or acting as a factor in increasing resistance.

As a method for minimizing the occurrence of cracks in the secondary particle structure, attempts are being made to manufacture a positive electrode active material in the form of a single particle. However, such a positive electrode active material in the form of a single particle has a problem in that the particle diameter of the particles is non-uniform, and thus the particle diameter distribution of the positive active material in the form of a single particle obtained after pulverization becomes large. In addition, the positive electrode active material in the form of a single particle has a low specific surface area and thus is vulnerable to cell resistance characteristics.

Therefore, there is a need for the development of a positive electrode active material that can simultaneously solve the problems of conventional secondary particles and single particles.

Meanwhile, Korean Registered Patent No. 10-1785262 (Patent Document 1) discloses a large-diameter secondary particle including a secondary particle in which primary particles are aggregated, wherein the secondary particle includes nickel-based lithium transition metal oxide, the primary particles have an average particle diameter of 3 to 5 $\mu$m, and the secondary particles have an average particle diameter of 10 to 20 $\mu$m. Such a large-diameter secondary particle includes the primary particles having an average particle diameter of the micron level, whereby the rolling density can be improved to minimize cracks caused by rolling, etc., and the specific surface area can be improved through the secondary particle structure to improve cell characteristics.

In order to manufacture the positive electrode active material in the form of a secondary particle having the primary particle size of the micron level described above, as also disclosed in Patent Document 1, heat treatment needs to be performed at a higher temperature than that of a secondary particle having a primary particle size of submicron level less than 1 $\mu$m. However, as the heat treatment temperature increases, the layered structure of the lithium transition metal composite oxide degenerates into a rock salt structure, causing a decrease in crystallinity, which in turn causes a decrease in the performance of the positive electrode active material. In particular, since nickel is most vulnerable to the degeneration of the layered structure of the lithium transition metal composite oxide into the rock salt structure at a high heat treatment temperature, the degeneration becomes more severe when the content of nickel in the lithium transition metal composite oxide constituting the positive electrode active material increases. Therefore, conventionally, the positive electrode active material in the form of a secondary particle with a primary particle size of micron level could only be applied to a mid-nickel positive electrode active material with a nickel content level of 50 mol% among the transition metal of the lithium transition metal composite oxide, as shown in Patent Document 1. For a high-nickel positive electrode active material with excellent capacity characteristics due to a high nickel content among the transition metal of the lithium transition metal composite oxide, it was impossible to manufacture the positive electrode active material in the form of a secondary particle with a primary particle size of micron level.

**[Prior Art Literature]**

**[Patent Documents]**

(Patent Document 1) KR 10-1785262 B1
(Patent Document 2) KR 10-2017-0119573 A

**[Disclosure]**

**[Technical Problem]**

An object to be achieved by the present invention is to provide a positive electrode active material capable of simultaneously solving the problems of conventional secondary particles and single particles in a high-nickel positive electrode active material.

That is, the present invention has been devised to solve the problems of the prior art as described above, and aims to provide a positive electrode active material capable of improving not only cell characteristics such as improved lifespan and reduced gas generation but also energy density due to excellent density characteristics by implementing a positive electrode active material in the form of a secondary particle with a primary particle size of micron level, as a high-nickel positive electrode active material with excellent capacity characteristics due to a high nickel content among the transition metal of a lithium transition metal composite oxide.

Further, another object of the present invention is to provide a positive electrode and a lithium secondary battery including the positive electrode active material.

**[Technical Solution]**

In order to solve the above problems, the present invention provides a positive electrode active material, and a positive electrode and a lithium secondary battery including the same.

(1) The present invention provides a positive electrode active material including a secondary particle in which a plurality of primary particles are aggregated; wherein the plurality of primary particles have an average particle size of 1.5 $\mu$m or more and 5.0 $\mu$m or less as measured from an SEM image, the particle size of the primary particle being a particle size based on the long diameter of the primary particle; wherein the plurality of primary particles includes disk-type primary particles; wherein the disk-type primary particle has interior angles on a same side of 150° or more and 210° or less in the primary particle observed from SEM images of a surface or cross-section of the secondary particle, when an imaginary tangent line with a greatest number of contact points is drawn for each of two boundary lines of the primary particle that exist within an angle of 45° or less with respect to a long diameter direction, and one imaginary line is drawn that intersects the two tangent lines, and wherein a (003) plane has a largest area ratio among crystal planes on a surface of the primary particle.

(2) The present invention provides the positive electrode active material according to (1) above, wherein the plurality of primary particles include three or more disk-type primary particles.

(3) The present invention provides the positive electrode active material according to (1) or (2) above, wherein the positive electrode active material comprises a lithium transition metal composite oxide including nickel, cobalt, and manganese.

(4) The present invention provides the positive electrode active material according to any one of (1) to (3) above, wherein the positive electrode active material comprises a lithium transition metal composite oxide including nickel in an amount of 60 mol% or more among all transition metals.

(5) The present invention provides the positive electrode active material according to any one of (1) to (4) above, wherein the positive electrode active material comprises a lithium transition metal composite oxide having an average composition represented by Chemical Formula 1 below:

[Chemical Formula 1]      [30] $Li_xNi_aCo_bMn_cM^1aO_2$

wherein the $M^1$ is at least one selected from the group consisting of Al, Zr, B, W, Mo, Cr, Nb, Mg, Hf, Ta, La, Ti, Sr, Ba, Ce, V, F, P, S, and Y; and $0.9 \leq x \leq 1.3$, $0.6 \leq a < 1.0$, $0 < b < 0.4$, $0 < c < 0.4$, $0 \leq d \leq 0.2$, and $a+b+c+d=1$.

(6) The present invention provides the positive electrode active material according to any one of (1) to (5) above, wherein the plurality of primary particles comprise single crystal primary particles.

(7) The present invention provides the positive electrode active material according to any one of (1) to (6) above, wherein the secondary particle has an average particle diameter ($D_{50}$) of 7.0 $\mu$m or more and 20.0 $\mu$m or less according to a cumulative volume distribution measured using a laser diffraction particle size analyzer.

(8) The present invention provides the positive electrode active material according to any one of (1) to (7) above, wherein the disk-type primary particles have a short diameter of 0.3 $\mu$m or more, and an aspect ratio (long diameter/short diameter) of 1.5 or more.

(9) The present invention provides the positive electrode active material according to any one of (1) to (7) above, wherein the disk-type primary particles have a short diameter of 0.8 $\mu$m or more, and an aspect ratio (long diameter/short diameter) of 1.5 or more.

(10) The present invention provides a positive electrode including the positive electrode active material according to any one of (1) to (9) above.

(11) The present invention provides a lithium secondary battery including: the positive electrode according to (10) above; a negative electrode; and a separator and an electrolyte interposed between the positive electrode and the negative electrode.

**[Advantageous Effects]**

The positive electrode active material of the present invention is a positive electrode active material capable of simultaneously solving the problems of conventional secondary particles and single particles in a high-nickel positive electrode active material, wherein it is possible to improve not only cell characteristics such as improved lifespan and reduced gas generation of the lithium secondary battery but also energy density due to excellent density characteristics by implementing a positive electrode active material in the form of a secondary particle with a primary particle size of micron level.

**[Description of Drawings]**

FIG. 1 is (A) a SEM image of a positive electrode active material of Example 1, and (B) a SEM image of a cross-section of the positive electrode active material.

FIG. 2 is (A) a SEM image of a positive electrode active material of Example 2, and (B) a SEM image of a cross-section of the positive electrode active material.

FIG. 3 is (A) a SEM image of a positive electrode active material of Example 3, and (B) a SEM image of a cross-section of the positive electrode active material.

FIG. 4 is (A) a SEM image of a positive electrode active material of Example 4, and (B) a SEM image of a cross-section of the positive electrode active material.

FIG. 5 is (A) a SEM image of a positive electrode active material of Example 5, and (B) a SEM image of a cross-section of the positive electrode active material.

FIG. 6 is (A) a SEM image of a positive electrode active material of Example 6, and (B) a SEM image of a cross-section of the positive electrode active material.

FIG. 7 is (A) a SEM image of a positive electrode active material of Example 7, and (B) a SEM image of a cross-section of the positive electrode active material.

FIG. 8 is (A) a SEM image of a positive electrode active material of Example 8, and (B) a SEM image of a cross-section of the positive electrode active material.

FIG. 9 is (A) a SEM image of a positive electrode active material of Example 9, and (B) a SEM image of a cross-section of the positive electrode active material.

FIG. 10 is (A) a SEM image of a positive electrode active material of Example 10, and (B) a SEM image of a cross-section of the positive electrode active material.

FIG. 11 is (A) a SEM image of a positive electrode active material of Example 11, and (B) a SEM image of a cross-section of the positive electrode active material.

FIG. 12 is (A) a SEM image of a positive electrode active material of Comparative Example 1, and (B) a SEM image of a cross-section of the positive electrode active material.

FIG. 13 is (A) a SEM image of a positive electrode active material of Comparative Example 2, and (B) a SEM image of a cross-section of the positive electrode active material.

FIG. 14 is (A) a SEM image of a positive electrode active material of Comparative Example 3, and (B) a SEM image of a cross-section of the positive electrode active material.

FIG. 15 is (A) a SEM image of a positive electrode active material of Comparative Example 4, and (B) a SEM image of a cross-section of the positive electrode active material.

FIG. 16 is (A) a SEM image of a positive electrode active material of Comparative Example 5, and (B) a SEM image of a cross-section of the positive electrode active material.

FIG. 17 is a segmentation image showing a plurality of lithium composite transition metal oxides segmented by performing image analysis based on an artificial intelligence model from the SEM image of the positive electrode active material of Example 1.

FIG. 18 is a segmentation image showing a plurality of lithium composite transition metal oxides segmented by performing image analysis based on an artificial intelligence model from the SEM image of the positive electrode active material of Comparative Example 1.

FIG. 19 is a TEM image of a cross-section of a positive electrode active material of Example 1.

FIG. 20 is a TEM image of a cross-section of a positive electrode active material of Example 2.

FIG. 21 is a TEM image of a cross-section of a positive electrode active material of Example 8.

FIG. 22 is an EBSD pattern image of a cross-section of a positive electrode active material of Example 1.

FIG. 23 is an EBSD pattern image of a cross-section of a positive electrode active material of Example 2.

FIG. 24 is an EBSD pattern image of a cross-section of a positive electrode active material of Example 3.

FIG. 25 is an EBSD pattern image of a cross-section of a positive electrode active material of Example 4.

FIG. 26 is an EBSD pattern image of a cross-section of a positive electrode active material of Example 8.

FIG. 27 is an EBSD pattern image of a cross-section of a positive electrode active material of Example 10.

FIG. 28 is an EBSD pattern image of a cross-section of a positive electrode active material of Example 11.

FIG. 29 is an EBSD pattern image of a cross-section of a positive electrode active material of Comparative Example 3.

FIG. 30 is an EPMA analysis image of a positive electrode active material of Example 1.

FIG. 31 is a frequency distribution graph showing a cumulative volume distribution of a positive electrode active material of Example 1 measured using a laser diffraction particle size analyzer, wherein the x-axis represents a linear scale for particle diameter with x-values increasing from left to right, and the y-axis represents weight distribution with y-values increasing from bottom to top.

FIG. 32 is a frequency distribution graph showing a cumulative volume distribution of a positive electrode active material of Example 2 measured using a laser diffraction particle size analyzer, wherein the x-axis represents a linear scale for particle diameter with x-values increasing from left to right, and the y-axis represents weight distribution with y-values increasing from bottom to top.

FIG. 33 is a frequency distribution graph showing a cumulative volume distribution of a positive electrode active material of Example 3 measured using a laser diffraction particle size analyzer, wherein the x-axis represents a linear scale for particle diameter with x-values increasing from left to right, and the y-axis represents weight distribution with y-values increasing from bottom to top.

FIG. 34 is a frequency distribution graph showing a cumulative volume distribution of a positive electrode active material of Example 4 measured using a laser diffraction particle size analyzer, wherein the x-axis represents a linear scale for particle diameter with x-values increasing from left to right, and the y-axis represents weight distribution with y-values increasing from bottom to top.

FIG. 35 is a frequency distribution graph showing a cumulative volume distribution of a positive electrode active material of Example 5 measured using a laser diffraction particle size analyzer, wherein the x-axis represents a linear scale for particle diameter with x-values increasing from left to right, and the y-axis represents weight distribution with y-values increasing from bottom to top.

FIG. 36 is a frequency distribution graph showing a cumulative volume distribution of a positive electrode active material of Example 6 measured using a laser diffraction particle size analyzer, wherein the x-axis represents a linear scale for particle diameter with x-values increasing from left to right, and the y-axis represents weight distribution with y-values increasing from bottom to top.

FIG. 37 is a frequency distribution graph showing a cumulative volume distribution of a positive electrode active material of Example 7 measured using a laser diffraction particle size analyzer, wherein the x-axis represents a linear scale for particle diameter with x-values increasing from left to right, and the y-axis represents weight distribution with y-values increasing from bottom to top.

FIG. 38 is a frequency distribution graph showing a cumulative volume distribution of a positive electrode active material of Example 8 measured using a laser diffraction particle size analyzer, wherein the x-axis represents a linear scale for particle diameter with x-values increasing from left to right, and the y-axis represents weight distribution with y-values increasing from bottom to top.

FIG. 39 is a frequency distribution graph showing a cumulative volume distribution of a positive electrode active material of Example 9 measured using a laser diffraction particle size analyzer, wherein the x-axis represents a linear scale for particle diameter with x-values increasing from left to right, and the y-axis represents weight distribution with y-values increasing from bottom to top.

FIG. 40 is a frequency distribution graph showing a cumulative volume distribution of a positive electrode active material of Example 10 measured using a laser diffraction particle size analyzer, wherein the x-axis represents a linear scale for particle diameter with x-values increasing from left to right, and the y-axis represents weight distribution with y-values increasing from bottom to top.

FIG. 41 is a frequency distribution graph showing a cumulative volume distribution of a positive electrode active material of Example 11 measured using a laser diffraction particle size analyzer, wherein the x-axis represents a linear scale for particle diameter with x-values increasing from left to right, and the y-axis represents weight distribution with y-values increasing from bottom to top.

FIG. 42 is a frequency distribution graph showing a cumulative volume distribution of a positive electrode active material of Comparative Example 1 measured using a laser diffraction particle size analyzer, wherein the x-axis represents a linear scale for particle diameter with x-values increasing from left to right, and the y-axis represents weight distribution with y-values increasing from bottom to top.

FIG. 43 is a frequency distribution graph showing a cumulative volume distribution of a positive electrode active material of Comparative Example 3 measured using a laser diffraction particle size analyzer, wherein the x-axis represents a linear scale for particle diameter with x-values increasing from left to right, and the y-axis represents weight distribution with y-values increasing from bottom to top.

FIG. 44 is a frequency distribution graph showing a cumulative volume distribution of a positive electrode active material of Example 1 measured using a laser diffraction particle size analyzer, wherein the x-axis represents a log scale for particle diameter with x-values increasing from left to right, and the y-axis represents weight distribution with y-values increasing from bottom to top.

FIG. 45 is a frequency distribution graph showing a cumulative volume distribution of a positive electrode active material of Example 2 measured using a laser diffraction particle size analyzer, wherein the x-axis represents a log scale for particle diameter with x-values increasing from left to right, and the y-axis represents weight distribution with y-values increasing from bottom to top.

FIG. 46 is a frequency distribution graph showing a cumulative volume distribution of a positive electrode active material of Example 3 measured using a laser diffraction particle size analyzer, wherein the x-axis represents a log scale for particle diameter with x-values increasing from left to right, and the y-axis represents weight distribution with y-values increasing from bottom to top.

FIG. 47 is a frequency distribution graph showing a cumulative volume distribution of a positive electrode active material of Example 4 measured using a laser diffraction particle size analyzer, wherein the x-axis represents a log scale for particle diameter with x-values increasing from left to right, and the y-axis represents weight distribution with y-values increasing from bottom to top.

FIG. 48 is a frequency distribution graph showing a cumulative volume distribution of a positive electrode active material of Example 5 measured using a laser diffraction particle size analyzer, wherein the x-axis represents a log scale for particle diameter with x-values increasing from left to right, and the y-axis represents weight distribution with y-values increasing from bottom to top.

FIG. 49 is a frequency distribution graph showing a cumulative volume distribution of a positive electrode active material of Example 6 measured using a laser diffraction particle size analyzer, wherein the x-axis represents a log scale for particle diameter with x-values increasing from left to right, and the y-axis represents weight distribution with y-values increasing from bottom to top.

FIG. 50 is a frequency distribution graph showing a cumulative volume distribution of a positive electrode active material of Example 7 measured using a laser diffraction particle size analyzer, wherein the x-axis represents a log scale for particle diameter with x-values increasing from left to right, and the y-axis represents weight distribution with y-values increasing from bottom to top.

FIG. 51 is a frequency distribution graph showing a cumulative volume distribution of a positive electrode active material of Example 8 measured using a laser diffraction particle size analyzer, wherein the x-axis represents a log scale for particle diameter with x-values increasing from left to right, and the y-axis represents weight distribution with y-values increasing from bottom to top.

FIG. 52 is a frequency distribution graph showing a cumulative volume distribution of a positive electrode active material of Example 9 measured using a laser diffraction particle size analyzer, wherein the x-axis represents a log scale for particle diameter with x-values increasing from left to right, and the y-axis represents weight distribution with y-values increasing from bottom to top.

FIG. 53 is a frequency distribution graph showing a cumulative volume distribution of a positive electrode active material of Example 10 measured using a laser diffraction particle size analyzer, wherein the x-axis represents a log scale for particle diameter with x-values increasing from left to right, and the y-axis represents weight distribution with y-values increasing from bottom to top.

FIG. 54 is a frequency distribution graph showing a cumulative volume distribution of a positive electrode active material of Example 11 measured using a laser diffraction particle size analyzer, wherein the x-axis represents a log scale for particle diameter with x-values increasing from left to right, and the y-axis represents weight distribution with y-values increasing from bottom to top.

FIG. 55 is a frequency distribution graph showing a cumulative volume distribution of a positive electrode active material of Comparative Example 1 measured using a laser diffraction particle size analyzer, wherein the x-axis represents a log scale for particle diameter with x-values increasing from left to right, and the y-axis represents weight distribution with y-values increasing from bottom to top.

FIG. 56 is a frequency distribution graph showing a cumulative volume distribution of a positive electrode active material of Comparative Example 3 measured using a laser diffraction particle size analyzer, wherein the x-axis represents a log scale for particle diameter with x-values increasing from left to right, and the y-axis represents weight distribution with y-values increasing from bottom to top.

**[Best Modes of the Invention]**

Hereinafter, the present invention will be described in more detail to help understand the present invention.

The terms or words used in the description and claims of the present invention should not be construed as being limited to their ordinary or dictionary meanings, but should be interpreted as meanings and concepts consistent with the technical spirit of the present invention, based on the principle that the inventor may adequately define the concepts of terms to best describe his invention.

In the present invention, the term "primary particle" refers to a minimum particle unit distinguished as a single lump when a cross-section of a positive electrode active material is observed through a scanning electron microscope (SEM), and may be formed of a single crystal or a plurality of crystal grains.

In the present invention, the term "secondary particle" refers to a secondary structure formed by aggregating a plurality of primary particles. The average particle diameter of the secondary particle can be measured using a particle size analyzer.

In the present invention, the term "average particle diameter ($D_{50}$)" means a particle diameter at 50% point of a cumulative volume distribution according to the particle diameter. The average particle diameter ($D_{50}$) can be measured by dispersing the powder to be measured in a dispersion medium and then introducing it into a commercially available laser diffraction particle size measuring device (e.g., S3500 of Microtrac), measuring a difference in diffraction patterns according to the particle size when the particles pass through the laser beam to obtain a particle size distribution, and calculating a particle diameter at a point that is 50% of the cumulative volume distribution according to the particle size in the measuring device.

In the present invention, the term "long diameter of a primary particle" refers to a length of the longest line segment when lines are drawn passing through two points of the primary particle boundary in the primary particle observed from a SEM image of the surface or cross-section of the secondary particle.

In the present invention, the term "short diameter of a primary particle" refers to a length of the shortest line segment when lines are drawn passing through two points of the primary particle boundary in the primary particle observed from a SEM image of the surface or cross-section of the secondary particle.

Positive Electrode Active Material

The present invention provides a positive electrode active material.

According to an embodiment of the present invention, the positive electrode active material may include a secondary particle in which a plurality of primary particles are aggregated, wherein the plurality of primary particles may have an average particle size of 1.5 $\mu$m or more and 5.0 $\mu$m or less measured from an SEM image.

According to an embodiment of the present invention, the secondary particle is a secondary particle in which a plurality of primary particles are aggregated, and may be a secondary particle in which at least two, for example, at least three or more primary particles are aggregated.

According to an embodiment of the present invention, the plurality of primary particles may have an average particle size of 1.5 $\mu$m or more, 1.6 $\mu$m or more, 1.7 $\mu$m or more, 1.8 $\mu$m or more, 1.9 $\mu$m or more, 2.0 $\mu$m or more, 2.1 $\mu$m or more, 2.2 $\mu$m or more, 2.3 $\mu$m or more, 2.4 $\mu$m or more, or 2.5 $\mu$m or more, and also 5.0 $\mu$m or less, 4.9 $\mu$m or less, 4.8 $\mu$m or less, 4.7 $\mu$m or less, 4.6 $\mu$m

or less, 4.5 $\mu$m or less, 4.4 $\mu$m or less, 4.3 $\mu$m or less, 4.2 $\mu$m or less, 4.1 $\mu$m or less, 4.0 $\mu$m or less, 3.9 $\mu$m or less, 3.8 $\mu$m or less, 3.7 $\mu$m or less, 3.6 $\mu$m or less, 3.5 $\mu$m or less, 3.4 $\mu$m or less, 3.3 $\mu$m or less, 3.2 $\mu$m or less, 3.1 $\mu$m or less, or 3.0 $\mu$m or less as measured from an SEM image. Here, when the average particle size of the plurality of primary particles is measured from the SEM image, the particle size of each primary particle may be a particle size based on the long diameter of the primary particle. Within this range, the rolling density of the positive electrode active material and the lifespan of the lithium secondary battery can be further improved.

According to one embodiment of the present invention, the positive electrode active material may comprise a lithium transition metal composite oxide including nickel, cobalt, and manganese. As a specific example, the positive electrode active material may comprise a lithium transition metal composite oxide including nickel in an amount of 60 mol% or more among all transition metals. The lithium transition metal composite oxide may be a primary particle, a secondary particle, and a positive electrode active material including the same, and as a specific example, the positive electrode active material may include a secondary particle in which a plurality of primary particles formed of a lithium transition metal composite oxide are aggregated.

According to one embodiment of the present invention, the positive electrode active material may comprise a lithium transition metal composite oxide having an average composition represented by Chemical Formula 1 below:

[Chemical Formula 1]      [115] $Li_xNi_aCO_bMn_cM^1_dO_2$

wherein the $M^1$ is at least one selected from the group consisting of Al, Zr, B, W, Mo, Cr, Nb, Mg, Hf, Ta, La, Ti, Sr, Ba, Ce, V, F, P, S, and Y; and $0.9 \leq x \leq 1.3$, $0.6 \leq a < 1.0$, $0 < b < 0.4$, $0 < c < 0.4$, $0 \leq d \leq 0.2$, and $a+b+c+d=1$.

According to an embodiment of the present invention, x in Chemical Formula 1 above is a molar ratio of the lithium to the transition metals in the lithium transition metal composite oxide, and may be 0.9 or more, 0.95 or more, or 1.0 or more, and may also be 1.1 or less, 1.07 or less, 1.05 or less, or 1.03 or less.

According to an embodiment of the present invention, in Chemical Formula 1, a, b, c, and d may be mole fractions of nickel (Ni), cobalt (Co), manganese (Mn), and doping element ($M^1$) among transition metals, respectively. As a specific example, a is a mole fraction of nickel (Ni) among the transition metals, and may be 0.6 or more, 0.7 or more, 0.8 or more, 0.85 or more, 0.88 or more, 0.90 or more, 0.91 or more, 0.92 or more, 0.93 or more, 0.94 or more, 0.95 or more, or 0.96 or more, and may also be less than 1.0, 0.99 or less, 0.98 or less, 0.97 or less, or 0.96 or less. In addition, b is a mole fraction of cobalt (Co) among the transition metals, and may be greater than 0, 0.01 or more, 0.02 or more, or 0.03 or more, and may also be less than 0.4, 0.3 or less, 0.2 or less, 0.1 or less, 0.09 or less, 0.08 or less, 0.07 or less, 0.06 or less, or 0.05 or less. The c may be a mole fraction of manganese (Mn) among the transition metals, and may be greater than 0, 0.01 or more, or 0.05 or more, and may also be less than 0.4, 0.3 or less, 0.2 or less, 0.1 or less, 0.09 or less, 0.08 or less, 0.07 or less, 0.06 or less, or 0.05 or less. The d is a mole fraction of the doping element ($M^1$) among the transition metals, and may be 0, 0.01 or more, 0.02 or more, 0.03 or more, 0.04 or more, 0.05 or more, 0.06 or more, 0.07 or more, 0.08 or more, 0.09 or more, 0.10 or more, 0.11 or more, 0.12 or more, 0.13 or more, 0.14 or more, 0.15 or more, 0.16 or more, 0.17 or more, 0.18 or more, or 0.19 or more and may also be less than 0.20, 0.19 or less, 0.18 or less, 0.17 or less, 0.16 or less, 0.15 or less, 0.14 or less, 0.13 or less, 0.12 or less, 0.11 or less, 0.10 or less, 0.09 or less, 0.08 or less, 0.07 or less, 0.06 or less, 0.05 or less, 0.04 or less, 0.03 or less, 0.02 or less, or 0.01 or less. When the composition of the lithium transition metal composite oxide is adjusted as described above, the capacity can be further improved.

According to one embodiment of the present invention, the plurality of primary particles may include single crystal primary particles, and in this case, the rolling density of the positive electrode active material can be further improved. The single crystal primary particle refers to a primary particle formed of a single crystal.

According to one embodiment of the present invention, the secondary particle may have an average particle diameter ($D_{50}$) of 7.0 $\mu$m or more and 20.0 $\mu$m or less according to a cumulative volume distribution measured using a laser diffraction particle size analyzer. As a specific example, the secondary particle may have an average particle diameter ($D_{50}$) of 7.0 $\mu$m or more, 7.1 $\mu$m or more, 7.2 $\mu$m or more, 7.3 $\mu$m or more, 7.4 $\mu$m or more, 7.5 $\mu$m or more, 7.6 $\mu$m or more, 7.7 $\mu$m or more, 7.8 $\mu$m or more, 7.9 $\mu$m or more, 8.0 $\mu$m or more, 8.1 $\mu$m or more, 8.2 $\mu$m or more, 8.3 $\mu$m or more, 8.4 $\mu$m or more, 8.5 $\mu$m or more, 8.6 $\mu$m or more, 8.7 $\mu$m or more, 8.8 $\mu$m or more, 8.9 $\mu$m or more, or 9.0 $\mu$m or more, and also 20.0 $\mu$m or less, 19.9 $\mu$m or less, 19.8 $\mu$m or less, 19.7 $\mu$m or less, 19.6 $\mu$m or less, 19.5 $\mu$m or less, 19.4 $\mu$m or less, 19.3 $\mu$m or less, 19.2 $\mu$m or less, 19.1 $\mu$m or less, 19.0 $\mu$m or less, 18.9 $\mu$m or less, 18.8 $\mu$m or less, 18.7 $\mu$m or less, 18.6 $\mu$m or less, 18.5 $\mu$m or less, 18.4 $\mu$m or less, 18.3 $\mu$m or less, 18.2 $\mu$m or less, 18.1 $\mu$m or less, 18.0 $\mu$m or less, 17.9 $\mu$m or less, 17.8 $\mu$m or less, 17.7 $\mu$m or less, 17.6 $\mu$m or less, 17.5 $\mu$m or less, 17.4 $\mu$m or less, 17.3 $\mu$m or less, 17.2 $\mu$m or less, 17.1 $\mu$m or less, 17.0 $\mu$m or less, 16.9 $\mu$m or less, 16.8 $\mu$m or less, 16.7 $\mu$m or less, 16.6 $\mu$m or less, 16.5 $\mu$m or less, 16.4 $\mu$m or less, 16.3 $\mu$m or less, 16.2 $\mu$m or less, 16.1 $\mu$m or less, 16.0 $\mu$m or less, 15.9 $\mu$m or less, 15.8 $\mu$m or less, 15.7 $\mu$m or less, 15.6 $\mu$m or less, 15.5 $\mu$m or less, 15.4 $\mu$m or less, 15.3 $\mu$m or less, 15.2 $\mu$m or less, 15.1 $\mu$m or less, or 15.0 $\mu$m or less. Within this range, the rolling density of the positive electrode active material and the lifespan can be further improved.

As a specific example, the positive electrode active material may be a high-nickel positive electrode active material including a lithium transition metal complex oxide containing nickel in an amount of 60 mol% or more among the total transition metals, and may include a large-particle-diameter secondary particle having an average particle diameter ($D_{50}$) of 7.0 $\mu$m or more and 20.0 $\mu$m or less and formed by agglomerating a plurality of primary particles having the same particle size as a conventional single particle of 0.5 $\mu$m or more and 5.0 $\mu$m or less, specifically a micron-level size of 1.0 $\mu$m or more, more specifically an average particle size of 2.0 $\mu$m or more and 3.5 $\mu$m or less as measured from an SEM image. This particle may be expressed as a large single-particle cluster in the sense that primary particles in the form of a single particle are aggregated to form a large particles in the form of a secondary particle.

As described in the Background Art of the present invention above, in order to manufacture the positive electrode active material in the form of a secondary particle having the primary particle size of the micron level, heat treatment needs to be performed at a higher temperature than that of a secondary particle having a primary particle size of submicron level less than 1 $\mu$m. However, as the heat treatment temperature increases, the layered structure of the lithium transition metal composite oxide degenerates into a rock salt structure, causing a decrease in crystallinity, which in turn causes a decrease in the performance of the positive electrode active material. In particular, since nickel is most vulnerable to the degeneration of the layered structure of the lithium transition metal composite oxide into the rock salt structure at a high heat treatment temperature, the degeneration becomes more severe when the content of nickel in the lithium transition metal composite oxide constituting the positive electrode active material increases. Therefore, conventionally, the positive electrode active material in the form of a secondary particle with a primary particle size of micron level could only be applied to a mid-nickel positive electrode active material with a nickel content level of 50 mol% among the transition metal of the lithium transition metal composite oxide. For a high-nickel positive electrode active material with excellent capacity characteristics due to a high nickel content among the transition metal of the lithium transition metal composite oxide, it was impossible to manufacture the positive electrode active material in the form of a secondary particle with a primary particle size of micron level.

However, in the positive electrode active material of the present invention, even if the content of nickel among the transition metals of the lithium transition metal composite oxide is high and thus, the layered structure of the lithium transition metal composite oxide degenerates into a rock salt structure at a high heat treatment temperature, the rock salt structure is recovered into the layered structure to solve the aforementioned problem. Specifically, unlike the conventional mid-nickel positive electrode active material, the positive electrode active material of the present invention is a high-nickel positive electrode active material including a lithium transition metal composite oxide containing nickel in an amount of 60 mol% or more among the total transition metals, and includes secondary particles with the primary particle size of micron level. By recovering the rock salt structure formed by a high heat treatment temperature into the layered structure, however, the crystallinity of the lithium transition metal composite oxide is excellent, so that the problems of the conventional secondary particles and single particles can be solved simultaneously. The positive electrode active material of the present invention may be manufactured by recovering the rock salt structure formed by the high heat treatment temperature to the layered structure as described above, and the method of recovering the rock salt structure to the layered structure is not limited, but according to an embodiment of the present invention, such a method may be a method of applying a cobalt (Co) coating to the lithium transition metal complex oxide containing the rock salt structure formed by a high heat treatment temperature.

According to an embodiment of the present invention, the plurality of primary particles may include disk-type primary particles and, as a specific example, three or more disk-type primary particles, and in this case, the lifespan and energy density of the cell are excellent.

According to an embodiment of the present invention, the disk-type primary particle may mean that the interior angles on the same side are 150° or more and 210° or less, the short diameter of the primary particle is 0.3 $\mu$m or more, and the aspect ratio (long diameter/short diameter) is 1.5 or more, wherein the interior angles on the same side are generated when, with respect to two boundaries of primary particles existing within an angle of 45° or less based on the long diameter direction in primary particles observed from SEM images of the surface or cross-section of the secondary particles, imaginary tangent lines with a greatest number of contact points are drawn, and one imaginary line is drawn that intersects the two tangent lines. As a specific example, the disk-type primary particles may have a short diameter of 0.3 $\mu$m or more, 0.4 $\mu$m or more, 0.5 $\mu$m or more, 0.6 $\mu$m or more, 0.7 $\mu$m or more, 0.8 $\mu$m or more, 0.9 $\mu$m or more, 1.0 $\mu$m or more. Here, when the short diameter of the disk-type primary particle is 0.3 $\mu$m or more and the aspect ratio (long diameter/short diameter) is 1.5 or more, the area ratio of the (003) surface among the crystal planes on the surface of the primary particle may be the largest.

According to an embodiment of the present invention, the disk-type primary particle may mean that the interior angles on the same side are 150° or more and 210° or less, and the area ratio of the (003) plane among the crystal planes on the surface of the primary particle is the largest, wherein the interior angles on the same side are generated when, with respect to two boundaries of primary particles existing within an angle of 45° or less based on the long diameter direction in primary particles observed from SEM images of the surface or cross-section of the secondary particles, imaginary tangent lines with a greatest number of contact points are drawn, and one imaginary line is drawn that intersects the two tangent lines. Here, when the area ratio of the (003) plane is the largest among the crystal planes on the surface of the primary disk-type particle, the primary particle may have a short diameter of 0.3 $\mu$m or more, and the aspect ratio (long diameter/short diameter) of 1.5 or more. In other words, the fact that the area ratio of the (003) plane is the largest among the crystal planes on the surface of the primary particle can be confirmed from the fact that the primary particle has a short diameter of 0.3 $\mu$m or more and the aspect ratio (long diameter/short diameter) of 1.5 or more.

As a specific example, the positive electrode active material may include a secondary particle in which a plurality of primary particles are aggregated; wherein the plurality of primary particles have an average particle size of 1.5 $\mu$m or more and 5.0 $\mu$m or less as measured from an SEM image, the particle size of the primary particle being a particle size based on the long diameter of the primary particle; wherein the plurality of primary particles includes disk-type primary particles, wherein the disk-type primary particle has interior angles on a same side of 150° or more and 210° or less in the primary particle observed from SEM images of a surface or cross-section of the secondary particle, when an imaginary tangent line with a greatest number of contact points is drawn for each of two boundary lines of the primary particle that exist within an angle of 45° or less with respect to a long diameter direction, and one imaginary line is drawn that intersects the two tangent lines, and wherein the (003) plane may be the largest area ratio among crystal planes on a surface of the primary particle.

According to an embodiment of the present invention, in a frequency distribution graph showing a cumulative volume distribution of the positive electrode active material measured using a laser diffraction particle size analyzer wherein the x-axis represents a log scale for particle diameter with x-values increasing from left to right, and the y-axis represents weight distribution with y-values increasing from bottom to top, when a triangle is drawn with the peak point at the top of the y-axis of the peak appearing in the mode and the two contact points of the frequency distribution curve contacting at a full width at half maximum (FWHM) of the mode, the positive electrode active material may have a difference $(\theta_L - \theta_R)$ between the interior angle $(\theta_L)$ at the left contact point and the interior angle $(\theta_R)$ at the right contact point among the two contact points of the frequency distribution curve contacting at the full width at half maximum of 6 or more and 20 or less. As a specific example, the difference $(\theta_L - \theta_R)$ between the interior angle $(\theta_L)$ at the left contact point and the interior angle $(\theta_R)$ at the right contact point may be 6 or more, 7 or more, 8 or more, 9 or more, 10 or more, 11 or more, 12 or more, 13 or more, or 14 or more, and may also be 20 or less, 19 or less, 18 or less, 17 or less, 16 or less, or 15 or less. The positive electrode active material may have a ratio $(\theta_L/\theta_R)$ of the interior angle at the left contact point to the interior angle at the right contact point of 1.100 or more and 2.000 or less. As a specific example, the ratio $(\theta_L/\theta_R)$ of the interior angle at the left contact point to the interior angle at the right contact point may be 1.100 or more, 1.110 or more, 1.120 or more, 1.130 or more, 1.140 or more, 1.150 or more, 1.160 or more, 1.170 or more, 1.180 or more, 1.190 or more, 1.200 or more, 1.210 or more, 1.220 or more, 1.230 or more, 1.240 or more, 1.250 or more, 1.260 or more, 1.270 or more, 1.280 or more, 1.290 or more, 1.300 or more, 1.310 or more, 1.320 or more, 1.330 or more, 1.340 or more, 1.350 or more, 1.360 or more, 1.370 or more, 1.380 or more, 1.390 or more, 1.400 or more, 1.410 or more, 1.420 or more, 1.430 or more, or 1.440 or more, and may also be 1.450 or less, 1.460 or less, 1.470 or less, 1.480 or less, 1.490 or less, 1.500 or less, 1.550 or less, 1.600 or less, 1.650 or less, 1.700 or less, 1.750 or less, 1.800 or less, 1.850 or less, 1.900 or less, 1.950 or less, or 2.000 or less. Here, the frequency distribution graph may be a unimodal distribution graph.

According to an embodiment of the present invention, the positive electrode active material may exhibit positive skewness in a frequency distribution graph showing a cumulative volume distribution of the positive electrode active material measured using a laser diffraction particle size analyzer, wherein the x-axis represents a linear scale for particle diameter with x-values increasing from left to right, and the y-axis represents weight distribution with y-values increasing from bottom to top. Here, the frequency distribution graph may be a unimodal distribution graph.

According to an embodiment of the present invention, the positive electrode active material may have a ratio $(S/P_{MODE})$ of the skewness value (S) to the y value $(P_{MODE})$ of the peak point at the top of the y-axis of the peak appearing in the mode according to the cumulative volume distribution of 0.037 or more and 0.150 or less. As a specific example, in the positive electrode active material, the ratio $(S/P_{MODE})$ of the skewness value (S) to the y value $(P_{MODE})$ of the peak point at the top of the y-axis of the peak appearing in the mode according to the cumulative volume distribution may be 0.037 or more, 0.038 or more, 0.039 or more, 0.040 or more, 0.041 or more, 0.042 or more, 0.043 or more, 0.044 or more, 0.045 or more, 0.046 or more, 0.047 or more, 0.048 or more, 0.049 or more, 0.050 or more, 0.051 or more, 0.052 or more, 0.053 or more, 0.054 or more, 0.055 or more, 0.056 or more, 0.057 or more, 0.058 or more, 0.059 or more, 0.060 or more, 0.061 or more, 0.062 or more, 0.063 or more, 0.064 or more, 0.065 or more, 0.066 or more, 0.067 or more, 0.068 or more, 0.069 or more, 0.070 or more, 0.071 or more, 0.072 or more, 0.073 or more, 0.074 or more, 0.075 or more, 0.076 or more, 0.077 or more, 0.078 or more, 0.079 or more, 0.080 or more, 0.081 or more, 0.082 or more, 0.083 or more, 0.083 or more0.084 or more, 0.085 or more, 0.086 or more, 0.087 or more, 0.088 or more, 0.089 or more, 0.090 or more, 0.091 or more, 0.092 or more, 0.093 or more, 0.094 or more, 0.095 or more, 0.096 or more, 0.097 or more, 0.098 or more, 0.099 or more, or 0.100 or more, and may also be 0.150 or less, 0.140 or less, 0.130 or less, 0.120 or less, or 0.110 or less. Here, the skewness value (S) may be calculated from Equation 3 below:

$$\text{Skewness value (S)} = 3 \times \{(\text{volume average particle diameter}) - (D_{50})\} / (\text{standard deviation of positive electrode active material particle diameter}) \qquad \text{[Equation 3]}$$

According to one embodiment of the present invention, the positive electrode active material may have a BET specific surface area measured through nitrogen adsorption BET specific surface area analysis of 0.20 m²/g or more and 0.35 m²/g or less. As a specific example, in the positive electrode active material, the BET specific surface area measured through nitrogen adsorption BET specific surface area analysis may be 0.20 m²/g or more, 0.21 m²/g or more, 0.22 m²/g or

more, 0.23 m$^2$/g or more, 0.24 m$^2$/g or more, 0.25 m$^2$/g or more, 0.26 m$^2$/g or more, 0.27 m$^2$/g or more, 0.28 m$^2$/g or more, 0.29 m$^2$/g or more, 0.30 m$^2$/g or more, or 0.31 m$^2$/g or more, and may also be 0.35 m$^2$/g or less, or 0.34 m$^2$/g or less. Within this range, direct current resistance can be reduced and the rolling density can be improved.

According to one embodiment of the present invention, in the positive electrode active material, the average particle diameter ($D_{50}$) according to a cumulative volume distribution measured using a laser diffraction particle size analyzer for the secondary particles may be of 7.0 $\mu$m or more and 20.0 $\mu$m or less; and for the cross-section of the secondary particle having a size within the range of the average particle diameter ($D_{50}$) of the secondary particle as observed from an SEM image of the cross-section of the secondary particle, the number of cross-sections of the primary particles identified within a unit area of 5 $\mu$m in width X 5 $\mu$m in length in the cross-section of the secondary particle may be 1 or more and 100 or less.

According to one embodiment of the present invention, for the cross-section of the secondary particle having a size within the range of the average particle diameter ($D_{50}$) of the secondary particle as observed from an SEM image of the cross-section of the secondary particle, the number of cross-sections of the primary particles identified within a unit area of 5 $\mu$m in width X 5 $\mu$m in length in the cross-section of the secondary particle refers to the number of cross-sections of all primary particles, including the primary particles in which at least a portion of the cross-section thereof is included within the unit area, in addition to the primary particles in which the entire cross-section thereof is included within the unit area. In addition, the unit area of 5 $\mu$m in width X 5 $\mu$m in length within the cross-section of the secondary particle refers to a unit area at any point within the cross-section of the secondary particle, and the location is not limited as long as it is within the cross-section of the secondary particle.

According to one embodiment of the present invention, in the positive electrode active material, for the cross-section of the secondary particle having a size within the range of the average particle diameter ($D_{50}$) of the secondary particle as observed from an SEM image of the cross-section of the secondary particle, the number of cross-sections of the primary particles identified within a unit area of 5 $\mu$m in width X 5 $\mu$m in length in the cross-section of the secondary particle may be 1 or more and 100 or less, and as a specific example, may be 1 or more, 2 or more, 3 or more, 4 or more, 5 or more, 6 or more, 7 or more, 8 or more, 9 or more, or 10 or more, and may also be 100 or less, 95 or less, 90 or less, 85 or less, 80 or less, 75 or less, 70 or less, 65 or less, 60 or less, 55 or less, 50 or less, 45 or less, 40 or less, 35 or less, 30 or less, or 25 or less. When satisfying this range, the positive electrode active material may include a large-particle-diameter secondary particle having an average particle diameter ($D_{50}$) of 7.0 $\mu$m or more and 20.0 $\mu$m or less and formed by agglomerating a plurality of primary particles having the same particle size as a conventional single particle of 0.5 $\mu$m or more and 5.0 $\mu$m or less, specifically a micron-level size of 1.0 $\mu$m or more, more specifically an average particle size of 2.0 $\mu$m or more and 3.5 $\mu$m or less as measured from an SEM image.

According to one embodiment of the present invention, in the positive electrode active material, the average particle diameter ($D_{50}$) according to a cumulative volume distribution measured using a laser diffraction particle size analyzer for the secondary particles may be of 7.0 $\mu$m or more and 20.0 $\mu$m or less; and for the cross-section of the secondary particle having a size within the range of the average particle diameter ($D_{50}$) of the secondary particle as observed from the electron backscatter diffraction (EBSD) pattern of the SEM image of the cross-section of the secondary particle (measured under the conditions of acceleration voltage 20 kV, WD 16 mm, measurement magnification 5,000 times (width 16 $\mu$m X height 16 $\mu$m), and step size 0.025 $\mu$m), the number of cross-sections of the grains identified within a unit area of 5 $\mu$m in width X 5 $\mu$m in length in the cross-section of the secondary particle may be 1 or more and 150 or less.

According to one embodiment of the present invention, for the cross-section of the secondary particle having a size within the range of the average particle diameter ($D_{50}$) of the secondary particle as observed from the electron backscatter diffraction (EBSD) pattern of the SEM image of the cross-section of the secondary particle (measured under the conditions of acceleration voltage 20 kV, WD 16 mm, measurement magnification 5,000 times (width 16 $\mu$m X height 16 $\mu$m), and step size 0.025 $\mu$m), the number of cross-sections of the grains identified within a unit area of 5 $\mu$m in width X 5 $\mu$m in length in the cross-section of the secondary particle refers to the number of cross-sections of all grains, including the grains in which at least a portion of the cross-section thereof is included within the unit area, in addition to the grains in which the entire cross-section thereof is included within the unit area. In addition, the unit area of 5 $\mu$m in width X 5 $\mu$m in length within the cross-section of the secondary particle refers to a unit area at any point within the cross-section of the secondary particle, and the location is not limited as long as it is within the cross-section of the secondary particle.

According to one embodiment of the present invention, in the positive electrode active material, for the cross-section of the secondary particle having a size within the range of the average particle diameter ($D_{50}$) of the secondary particle as observed from the electron backscatter diffraction (EBSD) pattern of the SEM image of the cross-section of the secondary particle (measured under the conditions of acceleration voltage 20 kV, WD 16 mm, measurement magnification 5,000 times (width 16 $\mu$m X height 16 $\mu$m), and step size 0.025 $\mu$m), the number of cross-sections of the grains identified within a unit area of 5 $\mu$m in width X 5 $\mu$m in length in the cross-section of the secondary particle may be 1 or more and 150 or less, and as a specific example, may be 1 or more, 2 or more, 3 or more, 4 or more, 5 or more, 6 or more, 7 or more, 8 or more, or 9 or more, and may also be 150 or less, 145 or less, 140 or less, 135 or less, 130 or less, 125 or less, 120 or less, 115 or less, 110 or less, 105 or less, 100 or less, 95 or less, 90 or less, 85 or less, 80 or less, 75 or less, 70 or less, 65 or less, 60 or less, 55 or less, 50 or less, 45 or less, 40 or less, 35 or less, 30 or less, 25 or less, or 20 or less. When satisfying this range, the positive electrode active material may include a large-particle-diameter secondary particle having an average particle diameter ($D_{50}$) of 7.0 $\mu$m or more and 20.0 $\mu$m or less and formed by agglomerating a plurality of primary particles having the same particle size as a conventional single particle of 0.5 $\mu$m or more and 5.0 $\mu$m or less, specifically a micron-level size of 1.0 $\mu$m or more, more specifically an average particle size of 2.0 $\mu$m or more and 3.5 $\mu$m or less as measured from an SEM image.

According to one embodiment of the present invention, the positive electrode active material may have a single crystallinity of 0.15 $\mu$m$^3$ or more calculated from Equation 1 below:

[Equation 1]

$$\text{Single crystallinity} = \frac{\sum_1^n \frac{4\pi}{3} \times radius(grain)^3}{n}$$

wherein the radius (grain) is a radius of the cross-section of the grain, assuming that the cross-section of the grain is circular, with respect to the cross-section of the grain having a cross-section area of 0.196 $\mu$m$^2$ or more, among the cross-sections of all grains that can be identified from the cross-section of secondary particles having a size within the range of the average particle diameter ($D_{50}$) of the secondary particles as observed from the electron backscatter diffraction (EBSD) pattern of the SEM image of the cross-section of the secondary particle (measured under the conditions of acceleration voltage 20 kV, WD 16 mm, measurement magnification 5,000 times (width 16 $\mu$m X height 16 $\mu$m), and step size 0.025 $\mu$m); and n is the number of grains.

According to one embodiment of the present invention, the positive electrode active material may have a single crystallinity of 0.15 $\mu$m$^3$ or more and 12.70 $\mu$m$^3$ or less calculated from Equation 1 above. As a specific example, the positive electrode active material may have a single crystallinity calculated from Equation 1 above of 0.15 $\mu$m$^3$ or more, 0.20 $\mu$m$^3$ or more, 0.25 $\mu$m$^3$ or more, 0.30 $\mu$m$^3$ or more, 0.35 $\mu$m$^3$ or more, 0.40 $\mu$m$^3$ or more, 0.45 $\mu$m$^3$ or more, 0.50 $\mu$m$^3$ or more, 0.55 $\mu$m$^3$ or more, 0.60 $\mu$m$^3$ or more, 0.65 $\mu$m$^3$ or more, 0.70 $\mu$m$^3$ or more, 0.75 $\mu$m$^3$ or more, 0.80 $\mu$m$^3$ or more, 0.85 $\mu$m$^3$ or more, 0.90 $\mu$m$^3$ or more, 0.95 $\mu$m$^3$ or more, 1.00 $\mu$m$^3$ or more, or 1.05 $\mu$m$^3$ or more, and also 20.00 $\mu$m$^3$ or less, 19.00 $\mu$m$^3$ or less, 18.00 $\mu$m$^3$ or less, 17.00 $\mu$m$^3$ or less, 16.00 $\mu$m$^3$ or less, 15.00 $\mu$m$^3$ or less, 14.00 $\mu$m$^3$ or less, 13.00 $\mu$m$^3$ or less, or 12.70 $\mu$m$^3$ or less, but the upper limit is not particularly limited.

According to one embodiment of the present invention, the positive electrode active material may comprise a lithium transition metal composite oxide including aluminum (Al), yttrium (Y), and zirconium (Zr). As a specific example, the positive electrode active material may include aluminum (Al), yttrium (Y), and zirconium (Zr) as doping elements.

According to one embodiment of the present invention, the aluminum (Al) may be included in an amount of 500 ppm to 3,000 ppm based on the total weight of the lithium transition metal composite oxide. For a specific example, the aluminum (Al) may be included in an amount of 500 ppm or more, 1,000 ppm or more, or 1,500 ppm or more, and also 3,000 ppm or less, 2,500 ppm or less, or 2,000 ppm or less, based on the total weight of the lithium transition metal composite oxide.

According to one embodiment of the present invention, the yttrium (Y) may be included in an amount of 100 ppm to 2,000 ppm based on the total weight of the lithium transition metal composite oxide. For a specific example, the yttrium (Y) may be included in an amount of 100 ppm or more, 200 ppm or more, 300 ppm or more, 400 ppm or more, or 500 ppm or more, and also 2,000 ppm or less, 1,900 ppm or less, 1,800 ppm or less, 1,700 ppm or less, 1,600 ppm or less, or 1,500 ppm or less, based on the total weight of the lithium transition metal composite oxide.

According to one embodiment of the present invention, the zirconium (Zr) may be included in an amount of 500 ppm to 5,000 ppm based on the total weight of the lithium transition metal composite oxide. For a specific example, the zirconium (Zr) may be included in an amount of 500 ppm or more, 1,000 ppm or more, or 1,500 ppm or more, and also 5,000 ppm or less, 4,500 ppm or less, 4,000 ppm or less, 3,500 ppm or less, or 3,000 ppm or less, based on the total weight of the lithium transition metal composite oxide.

According to one embodiment of the present invention, the positive electrode active material may comprise a lithium transition metal composite oxide having an average composition represented by Chemical Formula 2 below:

[Chemical Formula 2]     [151] $Li_x[Ni_aCo_bMn_cAl_eY_fZr_gM^2_d]O_{2-y}A_y$

wherein the $M^2$ is one or more selected from the group consisting of B, W, Mo, Cr, Nb, Mg, Hf, Ta, La, Ti, Sr, Ba, Ce, V, F, P and S; A is one or more selected from the group consisting of F, Cl, Br, I and S; and $0.9 \leq x \leq 1.3$, $0.6 \leq a < 1.0$, $0 < b < 0.4$,

$0 < c < 0.4$, $0 \leq d \leq 0.2$, $0 < e \leq 0.01$, $0 < f \leq 0.0006$, $0 < g \leq 0.0005$, $a+b+c+d+e+f+g=1$, $0 \leq y \leq 0.2$.

According to an embodiment of the present invention, x in Chemical Formula 2 above is a molar ratio of the lithium to the transition metals in the lithium transition metal composite oxide, and may be 0.9 or more, 0.95 or more, or 1.0 or more, and may also be 1.1 or less, 1.07 or less, 1.05 or less, or 1.03 or less.

According to one embodiment of the present invention, a, b, c, d, e, f, and g in Chemical Formula 2 may be mole fractions of nickel (Ni), cobalt (Co), manganese (Mn), and doping elements ($M^2$), aluminum (Al), yttrium (Y) and zirconium (Zr) among the transition metals, respectively. As a specific example, a is a mole fraction of nickel (Ni) among the transition metals, and may be 0.6 or more, 0.7 or more, 0.8 or more, 0.85 or more, 0.88 or more, 0.90 or more, 0.91 or more, 0.92 or more, 0.93 or more, 0.94 or more, 0.95 or more, or 0.96 or more, and may also be less than 1.0, 0.99 or less, 0.98 or less, 0.97 or less, or 0.96 or less. In addition, b is a mole fraction of cobalt (Co) among the transition metals, and may be greater than 0, 0.01 or more, 0.02 or more, or 0.03 or more, and may also be less than 0.4, 0.3 or less, 0.2 or less, 0.1 or less, 0.09 or less, 0.08 or less, 0.07 or less, 0.06 or less, or 0.05 or less. The c may be a mole fraction of manganese (Mn) among the transition metals, and may be greater than 0, 0.01 or more, or 0.05 or more, and may also be less than 0.4, 0.3 or less, 0.2 or less, 0.1 or less, 0.09 or less, 0.08 or less, 0.07 or less, 0.06 or less, or 0.05 or less. The d is a mole fraction of the doping element ($M^2$) among the transition metals, and may be 0, 0.01 or more, 0.02 or more, 0.03 or more, 0.04 or more, 0.05 or more, 0.06 or more, 0.07 or more, 0.08 or more, 0.09 or more, 0.10 or more, 0.11 or more, 0.12 or more, 0.13 or more, 0.14 or more, 0.15 or more, 0.16 or more, 0.17 or more, 0.18 or more, or 0.19 or more and may also be less than 0.20, 0.19 or less, 0.18 or less, 0.17 or less, 0.16 or less, 0.15 or less, 0.14 or less, 0.13 or less, 0.12 or less, 0.11 or less, 0.10 or less, 0.09 or less, 0.08 or less, 0.07 or less, 0.06 or less, 0.05 or less, 0.04 or less, 0.03 or less, 0.02 or less, or 0.01 or less. The e is a mole fraction of aluminum (Al) among the transition metals, and may be greater than 0, 0.001 or more, 0.002 or more, 0.003 or more, 0.004 or more, or 0.005 or more, and also 0.01 or less, 0.009 or less, or 0.008 or less. The f is a mole fraction of yttrium (Y) among the transition metals, and may be greater than 0, 0.0001 or more, 0.0002 or more, or 0.0003 or more, and also 0.0006 or less, 0.0005 or less, or 0.0004 or less. The g is a mole fraction of zirconium (Zr) among the transition metals, and may be greater than 0, 0.0001 or more, or 0.0002 or more, and also 0.0005 or less, or 0.0004 or less.

According to an embodiment of the present invention, the y in Chemical Formula 2 is a molar ratio of element A in which oxygen in the lithium transition metal composite oxide is substituted, and may be greater than 0, 0.01 or more, 0.02 or more, or 0.03 or more, and also 0.2 or less, 0.15 or less, or 0.1 or less.

According to one embodiment of the present invention, the positive electrode active material may comprise a lithium transition metal composite oxide including aluminum (Al), zirconium (Zr), and $M^3$. As a specific example, the positive electrode active material may include aluminum (Al), zirconium (Zr), and $M^3$ as doping elements.

According to an embodiment of the present invention, the $M^3$ may be a metal element having an oxidation number of +4 or more. For example, the $M^3$ may be at least one selected from the group consisting of titanium (Ti), tantalum (Ta), tungsten (W), vanadium (V), molybdenum (Mo), and niobium (Nb).

According to one embodiment of the present invention, the aluminum (Al) may be included in an amount of 500 ppm to 3,000 ppm based on the total weight of the lithium transition metal composite oxide. For a specific example, the aluminum (Al) may be included in an amount of 500 ppm or more, 1,000 ppm or more, or 1,500 ppm or more, and also 3,000 ppm or less, 2,500 ppm or less, or 2,000 ppm or less, based on the total weight of the lithium transition metal composite oxide.

According to one embodiment of the present invention, the zirconium (Zr) may be included in an amount of 500 ppm to 3,000 ppm based on the total weight of the lithium transition metal composite oxide. For a specific example, the zirconium (Zr) may be included in an amount of 500 ppm or more, 1,000 ppm or more, or 1,500 ppm or more, and also 3,000 ppm or less, 2,500 ppm or less, or 2,000 ppm or less, based on the total weight of the lithium transition metal composite oxide.

According to one embodiment of the present invention, the $M^3$ may be included in an amount of 100 ppm to 2,000 ppm based on the total weight of the lithium transition metal composite oxide. For a specific example, the $M^3$ may be included in an amount of 100 ppm or more, 200 ppm or more, 300 ppm or more, 400 ppm or more, or 500 ppm or more, and also 2,000 ppm or less, 1,900 ppm or less, 1,800 ppm or less, 1,700 ppm or less, 1,600 ppm or less, or 1,500 ppm or less, based on the total weight of the lithium transition metal composite oxide.

According to an embodiment of the present invention, the positive electrode active material may include a coating part formed on at least one of a primary particle surface, a primary particle interface, and a secondary particle surface, wherein the coating part may include at least one coating element selected from the group consisting of cobalt (Co) and boron (B).

According to an embodiment of the present invention, the coating part may be an island-type coating part formed on a portion of at least one of a primary particle surface, a primary particle interface, and a secondary particle surface.

According to an embodiment of the present invention, the coating part may be a coating layer formed to surround at least one of a primary particle surface, a primary particle interface, and a secondary particle surface.

According to an embodiment of the present invention, the coating part may include at least one of a coating part including cobalt (Co), a coating part including cobalt (Co) and boron (B), and a coating part including boron (B).

According to an embodiment of the present invention, the coating part may include a coating part in which a coating part including cobalt (Co), a coating part including cobalt (Co) and boron (B), and a coating part including boron (B) are formed sequentially.

According to one embodiment of the present invention, the coating part may include cobalt-boron oxide.

According to one embodiment of the present invention, the positive electrode active material may have a rolling density calculated by Equation 2 below of 3.60 $g/cm^3$ or more when a pellet is formed using an automatic pellet press by putting the positive electrode active material into a cylindrical frame with a diameter of 13 mm and applying force until a force equivalent to 9,000 kgf is reached:

$$\text{Rolling density } (g/cm^3) = \text{weight of positive electrode active material } (g) \text{ / pellet volume } (cm^3) \qquad \text{[Equation 2]}$$

According to an embodiment of the present invention, the positive electrode active material may have a rolling density calculated by Equation 2 above of 3.60 $g/cm^3$ or more, and as specific examples, 3.61 $g/cm^3$ or more, 3.62 $g/cm^3$ or more, 3.63 $g/cm^3$ or more, 3.64 $g/cm^3$ or more, 3.65 $g/cm^3$ or more, 3.66 $g/cm^3$ or more, 3.67 $g/cm^3$ or more, 3.68 $g/cm^3$ or more, 3.69 $g/cm^3$ or more, 3.70 $g/cm^3$ or more, or 3.71 $g/cm^3$ or more, and also 10.0 $g/cm^3$ or less, but the upper limit is not particularly limited.

According to an embodiment of the present invention, for a lithium secondary battery including a positive electrode including the positive electrode active material, a negative electrode, and a separator and an electrolyte interposed between the positive electrode and the negative electrode, the positive electrode active material may have a discharge capacity of 92.0% or more when the lithium secondary battery is charged with a current of 0.5 C and then discharged with a current of 1.0 C, compared to the discharge capacity when the lithium secondary battery is charged with a current of 0.5 C and then discharged with a current of 0.1 C. Here, the lithium secondary battery is used to check the discharge capacity according to output characteristics of the positive electrode active material, wherein the components other than the positive electrode active material are not particularly limited as long as they may be used for the lithium secondary battery. As a specific example, the positive electrode active material may have a discharge capacity of 92.0 % or more, 92.1 % or more, 92.2 % or more, 92.3 % or more, 92.4 % or more, 92.5 % or more, 92.6 % or more, 92.7 % or more, 92.8 % or more, 92.9 % or more, 93.0 % or more, or 93.1 % or more, and also 100 % or less when the lithium secondary battery is charged with a current of 0.5 C and then discharged with a current of 1.0 C, compared to the discharge capacity when the lithium secondary battery is charged with a current of 0.5 C and then discharged with a current of 0.1 C, but the upper limit is not particularly limited.

According to an embodiment of the present invention, for a lithium secondary battery including a positive electrode including the positive electrode active material, a negative electrode, and a separator and an electrolyte interposed between the positive electrode and the negative electrode, the discharge capacity may be 89.0% or more when the lithium secondary battery is charged with a current of 0.5 C and then discharged with a current of 2.0 C, compared to the discharge capacity when the lithium secondary battery is charged with a current of 0.5 C and then discharged with a current of 0.1 C. Here, the lithium secondary battery is used to check the discharge capacity according to output characteristics of the positive electrode active material, wherein the components other than the positive electrode active material are not particularly limited as long as they may be used for the lithium secondary battery. As a specific example, the positive electrode active material may have a discharge capacity of 89.0 % or more, 89.1 % or more, 89.2 % or more, 89.3 % or more, 89.4 % or more, 89.5 % or more, 89.6 % or more, 89.7 % or more, 89.8 % or more, 89.9 % or more, 90.0 % or more, 90.1 % or more, 90.2 % or more, 90.3 % or more, or 90.4 % or more, and also 100 % or less when the lithium secondary battery is charged with a current of 0.5 C and then discharged with a current of 2.0 C, compared to the discharge capacity when the lithium secondary battery is charged with a current of 0.5 C and then discharged with a current of 0.1 C, but the upper limit is not particularly limited.

According to one embodiment of the present invention, the positive electrode active material may have a degree of single-particle formation ($Dv_{50}$) of 1.2 $\mu$m or more and 3.8 $\mu$m or less, which corresponds to a diameter of a volume at 50% point of a cumulative volume distribution of the primary particles when the volume value is calculated from Equation 5 below for each of the primary particles observed from a SEM image (measurement magnification 3,000 times) of the surface of the secondary particle:

[Equation 5]

$$Volume = \frac{4\pi}{3} \times radius^3$$

In Equation 5 above:

the radius is a radius of the surface of the primary particle assuming that the surface of the primary particle observed from the SEM image (measurement magnification 3,000 times) of the surface of the secondary particle is circular.

As a specific example, the positive electrode active material may have a degree of single-particle formation ($Dv_{50}$) of 1.2 $\mu$m or more, 1.3 $\mu$m or more, 1.4 $\mu$m or more, 1.5 $\mu$m or more, 1.6 $\mu$m or more, or 1.65 $\mu$m or more, and also 3.8 $\mu$m or less, 3.7 $\mu$m or less, 3.6 $\mu$m or less, 3.59 $\mu$m or less, 3.58 $\mu$m or less, 3.57 $\mu$m or less, 3.56 $\mu$m or less, or 3.55 $\mu$m or less.

Method of Manufacturing a Positive Electrode Active Material

The present invention provides a method of manufacturing a positive electrode active material.

According to an embodiment of the present invention, the method of manufacturing a positive electrode active material may be a method for preparing the positive electrode active material described above.

According to an embodiment of the present invention, the method of manufacturing a positive electrode active material may include a step (S10) of preparing a fired product by mixing a positive electrode active material precursor including nickel, cobalt, and manganese with a lithium raw material, and firing the mixture.

According to an embodiment of the present invention, the step (S10) may be performed by a method of performing firing by dividing temperature sections within one firing step (one-step method), a method of performing firing by dividing it into two firing steps (two-step method), a method of performing preliminary firing and then performing firing by dividing temperature sections within one firing step (preliminary firing method), or the like.

According to an embodiment of the present invention, the one-step method is a method of continuously performing firing in two temperature sections in one firing step. In this method, one-stage firing may be performed on a mixture of a positive electrode active material precursor and a lithium raw material, and then immediately two-stage firing may be performed by changing the temperature section. In this case, the two-stage firing may be performed at a temperature lower than that of the one-stage firing, and each firing temperature may be adjusted according to the nickel content. Through such temperature adjustment, the shape and size of the primary particles and the average particle diameter of the secondary particles can be controlled.

According to an embodiment of the present invention, the two-step method is a method of performing firing by dividing it into a primary firing and a secondary firing, in which the primary firing may be carried out on a mixture of the positive electrode active material precursor and the lithium raw material, the first fired product produced by the primary firing may be pulverized, and then the pulverized product may be secondarily fired. In this case, the secondary firing may be performed at a temperature lower than that of the primary firing, and each firing temperature may be adjusted according to the nickel content. Through such temperature adjustment, the shape and size of the primary particles and the average particle diameter of the secondary particles can be controlled.

According to an embodiment of the present invention, the preliminary firing method is a method of performing preliminary firing prior to one-step firing, in which the preliminary firing may be performed on a mixture of the positive electrode active material precursor and the lithium raw material, and the one-step method may be performed on the pre-calcined product. In this case, the preliminary firing may be performed at a temperature lower than that of the one-step firing, and each firing temperature may be adjusted according to the nickel content. Through such temperature adjustment, the shape and size of the primary particles and the average particle diameter of the secondary particles can be controlled.

According to one embodiment of the present invention, the positive electrode active material precursor may include 60 mol% or more of nickel among transition metals. As a specific example, the positive electrode active material precursor may be a transition metal hydroxide containing nickel, cobalt, and manganese, and containing 60 mol% or more of nickel among transition metals. As a specific example, the transition metal hydroxide may have an average composition represented by Formula 3 below:

[Chemical Formula 3]          [190] $Ni_{a'}CO_{b'}Mn_{c'}(OH)_2$

wherein $0.6 \leq a' < 1.0$, $0 < b' < 0.4$, $0 < c' < 0.4$, $a' + b' + c' = 1$.

According to an embodiment of the present invention, in Chemical Formula 3, a', b' and c' may be mole fractions of nickel (Ni), cobalt (Co), and manganese (Mn) among the transition metals, respectively. As a specific example, the a' is a mole fraction of nickel (Ni) among the transition metals, and may be 0.6 or more, 0.7 or more, 0.8 or more, 0.85 or more, 0.88 or more, 0.90 or more, 0.91 or more, 0.92 or more, 0.93 or more, 0.94 or more, 0.95 or more, or 0.96 or more, and may also be less than 1.0, 0.99 or less, 0.98 or less, 0.97 or less, or 0.96 or less. In addition, the b' is a mole fraction of cobalt (Co) among the transition metals, and may be greater than 0, 0.01 or more, 0.02 or more, or 0.03 or more, and may also be less than 0.4, 0.3 or less, 0.2 or less, 0.1 or less, 0.09 or less, 0.08 or less, 0.07 or less, 0.06 or less, or 0.05 or less. The c' may be a mole fraction of manganese (Mn) among the transition metals, and may be greater than 0, 0.01 or more, or 0.05 or more, and may also be less than 0.4, 0.3 or less, 0.2 or less, 0.1 or less, 0.09 or less, 0.08 or less, 0.07 or less, 0.06 or less, or 0.05 or less.

According to an embodiment of the present invention, the lithium raw material may be lithium-containing sulfate, nitrate, acetate, carbonate, oxalate, citrate, halide, hydroxide, or oxyhydroxide, and for example, $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $CH_3COOLi$, $Li_3C_6H_5O_7$, or a mixture thereof.

According to an embodiment of the present invention, the step (S10) may be performed by further including at least one doping raw material selected from the group consisting of Al, Zr, B, W, Mo, Cr, Nb, Mg, Hf, Ta, La, Ti, Sr, Ba, Ce, F, P, S, and Y. The doping raw material may be acetate, nitrate, sulfate, halide, sulfide, hydroxide, oxide, or oxyhydroxide including the above element and, for example, $Al_2O_3$, $Al(OH)_3$, $Al(NO_3)_3 \cdot 9H_2O$, $Al_2(SO_4)_3$, $Y_2O_3$, $ZrO_2$, or the like.

According to an embodiment of the present invention, the doping raw material may include Al, Y, and Zr. Also, the doping raw material may include Al, Zr, and a metal element ($M^3$) having an oxidation number of +4 or more.

According to one embodiment of the present invention, when the positive electrode active material precursor and the lithium raw material are mixed in step (S10), the molar ratio (Li/M) of lithium (Li) in the lithium raw material to the transition metal (M) of the positive electrode active material precursor may be 0.9 or more and 1.3 or less. As a specific example, the Li/M may be 0.9 or more, 0.95 or more, or 1.0 or more, and may also be 1.1 or less, 1.07 or less, 1.05 or less, or 1.04 or less, and the Li/M may be adjusted depending on the content of nickel in the transition metal.

According to one embodiment of the present invention, the method of preparing a positive electrode active material may further include a step (S20) of coating the positive electrode active material prepared in step (S10). As a specific example, the step (S20) may be carried out by including at least one coating raw material selected from the group consisting of Co and B. In addition, the step (S20) may be carried out by further including an Al coating raw material.

According to an embodiment of the present invention, the coating in step (S20) may be performed by simultaneously coating each coating raw material, or may be divided and performed sequentially. As a specific example, the coating in step (S20) may include a step (S21) of mixing a Co coating raw material and an Al coating raw material with a positive electrode active material and performing heat treatment, and a step (S22) of mixing a B coating raw material with the coating product prepared in step (S21) and performing heat treatment.

According to an embodiment of the present invention, the Co coating raw material may be cobalt hydroxide such as $Co(OH)_2$, the Al coating raw material may be aluminum hydroxide such as $Al(OH)_3$, and the B coating raw material may be $H_3BO_3$.

According to an embodiment of the present invention, in performing steps (S10) and (S20), the method of producing the positive electrode active material may include the step of pulverizing the fired product as necessary after firing, wherein the pulverization may be performed without particular limitation using any pulverizing device capable of pulverizing the positive electrode active material.

According to an embodiment of the present invention, the doping raw material and the coating raw material may be added by adjusting them to satisfy the doping element content and coating element content of the positive electrode active material described above.

Positive Electrode

The present invention provides a positive electrode including the positive electrode active material.

According to an embodiment of the present invention, the positive electrode may include a positive electrode current collector and a positive electrode active material layer formed on the positive electrode current collector, wherein the positive electrode active material layer may include the positive electrode active material.

According to an embodiment of the present invention, the positive electrode current collector may include a highly conductive metal, and is not particularly limited as long as the positive electrode active material layer can be easily adhered thereto and is non-reactive within the voltage range of the battery. The positive electrode current collector may be, for example, stainless steel, aluminum, nickel, titanium, calcined carbon, or aluminum or stainless steel having a surface treated with carbon, nickel, titanium, silver, etc. In addition, the positive electrode current collector may typically have a thickness of 3 $\mu$m to 500 $\mu$m, and may have fine irregularities formed on the surface of the current collector to increase the adhesion of the positive electrode active material. For example, it may be used in various forms such as a film, a sheet, a foil, a net, a porous body, a foam, a non-woven fabric, or the like.

According to an embodiment of the present invention, the positive electrode active material layer, along with the positive electrode active material, may optionally include a conductive material and a binder, if necessary. In this case, the positive electrode active material may be included in an amount of 80% to 99% by weight, more specifically 85% to 98.5% by weight, based on the total weight of the positive electrode active material layer, and can exhibit excellent capacity characteristics within this range.

According to an embodiment of the present invention, the conductive material is used to impart conductivity to the electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, and carbon fiber; a powder or fiber of metal such as copper, nickel, aluminum, silver, etc.; a conductive tube such as carbon nanotube; a conductive whisker such as a zinc oxide whisker and a potassium titanate whisker; a conductive metal oxide such as a titanium oxide; or a conductive polymer such as a polyphenylene derivative, and any one or a mixture of two or more thereof may be used. The conductive material may be included in an amount of 0.1% by weight to 15% by weight based on the total weight of the positive electrode active material layer.

According to an embodiment of the present invention, the binder serves to improve the bonding between the positive electrode active material particles and the adhesion between the positive electrode active material and the current collector. Specific examples thereof may include polyvinylidene fluoride (PVDF), polyvinylidene fluoride-hexafluoropropylene copolymer (PVDF-co-HFP), polyvinyl alcohol, polyacrylonitrile, polymethyl methacrylate, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber (SBR), fluorine rubber, polyacrylic acid, the polymers in which hydrogen is substituted with Li, Na, or Ca, or various copolymers thereof, and any one or a mixture of two or more thereof may be used. The binder may be included in an amount of 0.1% by weight to 15% by weight based on the total weight of the positive electrode active material layer.

According to an embodiment of the present invention, the positive electrode may be manufactured according to a conventional positive electrode manufacturing method except for the use of the positive electrode active material described above. Specifically, the above positive electrode active material and, if necessary, a binder, a conductive material, and a dispersant may be dissolved or dispersed in a solvent to prepare a composition for forming a positive electrode active material layer, which may be applied on a positive electrode current collector, and then dried and rolled to produce the positive electrode. Alternatively, the positive electrode may be manufactured by casting the composition for forming a positive electrode active material layer on a separate support, peeling a film from the support, and then laminating the film on a positive electrode current collector.

According to an embodiment of the present invention, the solvent may be any solvent commonly used in the art, for example, dimethyl sulfoxide (DMSO), isopropyl alcohol, N-methyl pyrrolidone (NMP), dimethylformamide (DMF), acetone, water, or the like, and any one or a mixture of two or more thereof may be used. The solvent may be used in an amount sufficient to dissolve or disperse the positive electrode active material, conductive material, binder, and dispersant in consideration of the application thickness of the slurry and the manufacturing yield, and to allow the slurry to have a viscosity capable of exhibiting excellent thickness uniformity when applied for the subsequent positive electrode production.

Lithium Secondary Battery

The present invention provides a lithium secondary battery including the positive electrode described above.

According to one embodiment of the present invention, the lithium secondary battery may include: the positive electrode; a negative electrode; and a separator and an electrolyte interposed between the positive electrode and the negative electrode. In addition, the lithium secondary battery may optionally further include a battery container for accommodating an electrode assembly formed of the positive electrode, negative electrode, and separator, and a sealing member for sealing the battery container.

According to one embodiment of the present invention, the negative electrode may include a negative electrode current collector and a negative electrode active material layer disposed on the negative electrode current collector.

According to one embodiment of the present invention, the negative electrode current collector is not particularly limited as long as it has a high conductivity without causing a chemical change in a battery, and may be, for example, copper, stainless steel, aluminum, nickel, titanium, calcined carbon, copper or stainless steel that is surface-treated with carbon, nickel, titanium, silver, or the like, an aluminum-cadmium alloy, or the like. Additionally, the negative electrode current collector may typically have a thickness of 3 $\mu$m to 500 $\mu$m, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

According to one embodiment of the present invention, the negative electrode active material layer may optionally include a binder and a conductive material along with the negative electrode active material.

According to one embodiment of the present invention, as the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as $SiO_\beta$ $(0<\beta<2)$, $SnO_2$, vanadium oxide, and lithium vanadium oxide; or a composite including the metallic compound and the carbonaceous material, such as an Si-C composite or an Sn-C composite, and any one or a mixture of two or more thereof may be used. Also, a metal lithium thin film may also be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes. The negative electrode active material may be included in an amount of 80% to 99% by weight based on the total weight of the negative electrode active material layer.

According to one embodiment of the present invention, the binder of the negative electrode active material layer is a component that assists in bonding between the conductive material, the active material, and the current collector, and is usually added in an amount of 0.1% to 10% by weight based on the total weight of the negative electrode active material layer. Examples of such binders include polyvinylidene fluoride (PVDF), polyvinyl alcohol, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber, nitrile-butadiene rubber, fluorine rubber, and various copolymers thereof.

According to one embodiment of the present invention, the conductive material of the negative electrode active material layer is a component to further improve the conductivity of the negative electrode active material, and may be added in an amount of 10% by weight or less, preferably 5% by weight or less, based on the total weight of the negative electrode active material layer. The conductive material is not particularly limited as long as it has conductivity without causing a chemical change in the battery, and may be, for example, graphite such as natural graphite or artificial graphite; carbon black such as acetylene black, Ketjen black, channel black, furnace black, lamp black, and thermal black; conductive fibers such as carbon fiber and metal fiber; fluorinated carbon; metal powder such as aluminum powder and nickel powder; conductive whiskers such as zinc oxide and potassium titanate; conductive metal oxides such as titanium oxide; conductive materials such as polyphenylene derivatives.

According to one embodiment of the present invention, the negative electrode active material and optionally a binder and a conductive material may be dissolved or dispersed in a solvent to prepare a composition for forming a negative electrode active material layer, which may be applied on a negative electrode current collector and dried to produce the negative electrode. Alternatively, the negative electrode may be manufactured by casting the composition for forming a negative electrode active material layer on a separate support, peeling a film from the support, and then laminating the film on a negative electrode current collector.

Meanwhile, according to one embodiment of the present invention, the separator is to separate the negative electrode and the positive electrode, and to provide a passage for lithium ions to move. Any separator may be used without particular limitation as long as it is generally used as a separator in the lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multi-layer structure.

According to one embodiment of the present invention, the electrolyte may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto. As specific example, the electrolyte may include an organic solvent and a lithium salt.

According to one embodiment of the present invention, as the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), ethyl methyl carbonate (EMC), ethylene carbonate (EC), or propylene carbonate (PC); an alcohol-based solvent such as ethyl alcohol or isopropyl alcohol; nitriles such as R-CN (R is a straight, branched or cyclic hydrocarbon group having 2 to 20 carbon atoms, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable.

According to one embodiment of the present invention, the lithium salt may be any compound without particular limitation as long as it can provide lithium ions used in a lithium secondary battery. Specifically, the anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, and the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like. The lithium salt is preferably used at a concentration ranging from 0.1 M to 2.0 M. When the concentration of the lithium salt is within the above range, the electrolyte has an appropriate conductivity and viscosity, whereby excellent electrolyte performance can be exhibited, and lithium ions can effectively move.

According to one embodiment of the present invention, in order to improve the lifespan characteristics of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 5% by weight based on the total weight of the electrolyte.

Since the lithium secondary battery including the positive electrode active material according to the present invention stably exhibits excellent capacity characteristics, output characteristics, and lifespan characteristics, it is useful in the field of portable devices such as mobile phones, laptop computers, digital cameras, and electric vehicles such as hybrid electric vehicle (HEV) and electric vehicle (EV).

The external shape of the lithium secondary battery of the present invention is not particularly limited, but may be a cylindrical type using a can, a prismatic type, a pouch type, or a coin type.

The lithium secondary battery according to the present invention can not only be used in battery cells used as a power source for small devices, but can also be preferably used as a unit cell in medium to large-sized battery modules containing multiple battery cells.

Accordingly, in accordance with one embodiment of the present invention, a battery module including the lithium secondary battery as a unit cell and a battery pack including the same are provided.

According to an embodiment of the present invention, the battery module or battery pack may be used as a power source for any one or more medium and large-sized devices among a power tool; electric vehicles, including electric vehicles (EV), hybrid electric vehicles, and plug-in hybrid electric vehicles (PHEV); or a system for power storage.

[Modes of the Invention]

Hereinafter, examples of the present invention will be described in detail so that those skilled in the art can easily implement the present invention. However, the present invention may be embodied in a variety of forms and is not limited to the examples described herein.

**Examples and Comparative Examples**

**Example 1**

A transition metal composite hydroxide ($D_{50}$: 10.2 $\mu$m) in the form of a secondary particle formed by agglomerating tens to hundreds of primary particles and having a composition expressed as $Ni_{0.89}Co_{0.03}Mn_{0.08}(OH)_2$ was mixed with LiOH so that the molar ratio (Li/(Ni+Co+Mn)) of the lithium (Li) to the transition metals (Ni+Co+Mn) was 1.04. 1,470 ppm of $Al(OH)_3$, 1,000 ppm of $Y_2O_3$, and 1,500 ppm of $ZrO_2$ based on the total weight of the transition metal composite hydroxide were further added and mixed to prepare a mixture.

The mixture was fired under an oxygen atmosphere at 850°C for 6 hours and then at 800°C for 9 hours to obtain a fired product. The fired product was pulverized at room temperature to prepare a lithium transition metal oxide having an average particle diameter ($D_{50}$) of 9.8 $\mu$m and a composition expressed as $LiNi_{0.8833}Co_{0.0298}Mn_{0.0794}Al_{0.0050}Y_{0.0010}Zr_{0.0015}O_2$ and being in the form of a secondary particle in which primary particles are aggregated.

To the lithium transition metal oxide in the form of a secondary particle prepared above, $Co(OH)_2$ was added so that the molar ratio (Co/(Ni+Co+Mn+Al+Y+Zr)) of cobalt (Co) to metal (Ni+Co+Mn+Al+Y+Zr) excluding lithium was 0.02, and $Al(OH)_3$ was added in an amount of 500 ppm based on the total weight of the above lithium transition metal oxide, and mixed uniformly to prepare a mixture. The mixture was heat-treated under an oxygen atmosphere at 740°C for 3 hours, and then at 500°C for 3 hours to obtain a first coating product. The first coating product was pulverized at room temperature to have an average particle diameter ($D_{50}$) of 10.2 $\mu$m, thereby preparing a positive electrode active material in which a coating part including Co and Al was formed on the lithium transition metal oxide in the form of a secondary particle in which primary particles were aggregated. The total composition of the positive electrode active material including the coating part was $LiNi_{0.8641}Co_{0.0491}Mn_{0.0777}Al_{0.0066}Y_{0.0010}Zr_{0.0015}O_2$.

To the pulverized first coating product, $H_3BO_3$ was added in an amount of 500 ppm based on the total weight of the pulverized first coating product and mixed to prepare a mixture. The mixture was heat-treated at 330°C for 5 hours under an atmospheric atmosphere to obtain a second coating product. The second coating product was pulverized at room temperature to have an average particle diameter ($D_{50}$) of 10.2 $\mu$m, thereby preparing a positive electrode active material in which a coating part including Co, Al and B was formed on the lithium transition metal oxide in the form of a secondary particle in which primary particles were aggregated. The total composition of the positive electrode active material including the coating part was $LiNi_{0.8602}Co_{0.0489}Mn_{0.0773}Al_{0.0066}Y_{0.0010}Zr_{0.0015}B_{0.0045}O_2$.

Example 2

A transition metal composite hydroxide ($D_{50}$: 10.2 $\mu$m) in the form of a secondary particle formed by agglomerating tens to hundreds of primary particles and having a composition expressed as $Ni_{0.89}Co_{0.03}Mn_{0.08}(OH)_2$ was mixed with LiOH so that the molar ratio (Li/(Ni+Co+Mn)) of the lithium (Li) to the transition metals (Ni+Co+Mn) was 1.00. 1,470 ppm of $Al(OH)_3$, 1,000 ppm of $Y_2O_3$, and 1,500 ppm of $ZrO_2$ based on the total weight of the transition metal composite hydroxide were further added and mixed to prepare a mixture.

The mixture was first fired under an oxygen atmosphere at 850°C for 6 hours to obtain a first fired product. Thereafter, the first fired product was pulverized at room temperature to have an average particle diameter ($D_{50}$) of 9.8 $\mu$m.

The pulverized first fired product and LiOH were mixed such that a molar ratio (Li/(Ni+Co+Mn)) of lithium (Li) to transition metal (Ni+Co+Mn) was 0.04, and secondarily fired at 800°C for 9 hours under an oxygen atmosphere, thereby obtaining a second fired product. The second fired product was pulverized at room temperature to prepare a lithium transition metal oxide having an average particle diameter ($D_{50}$) of 9.8 $\mu$m and a composition expressed as $LiNi_{0.8833}Co_{0.0298}Mn_{0.0794}Al_{0.0050}Y_{0.0010}Zr_{0.0015}O_2$ and being in the form of a secondary particle in which primary particles are aggregated.

To the lithium transition metal oxide in the form of a secondary particle prepared above, $Co(OH)_2$ was added so that the molar ratio (Co/(Ni+Co+Mn+Al+Y+Zr)) of cobalt (Co) to metal (Ni+Co+Mn+Al+Y+Zr) excluding lithium was 0.02, and $Al(OH)_3$ was added in an amount of 500 ppm based on the total weight of the above lithium transition metal oxide, and mixed uniformly to prepare a mixture. The mixture was heat-treated under an oxygen atmosphere at 740°C for 3 hours, and then at 500°C for 3 hours to obtain a first coating product. The first coating product was pulverized at room temperature to have an average particle diameter ($D_{50}$) of 10.2 $\mu$m, thereby preparing a positive electrode active material in which a coating part including Co and Al was formed on the lithium transition metal oxide in the form of a secondary particle in which primary particles were aggregated. The total composition of the positive electrode active material including the coating part was $LiNi_{0.8641}Co_{0.0491}Mn_{0.0777}Al_{0.0066}Y_{0.0010}Zr_{0.0015}O_2$.

To the pulverized first coating product, $H_3BO_3$ was added in an amount of 500 ppm based on the total weight of the pulverized first coating product and mixed to prepare a mixture. The mixture was heat-treated at 330°C for 5 hours under an atmospheric atmosphere to obtain a second coating product. The second coating product was pulverized at room temperature to have an average particle diameter ($D_{50}$) of 10.2 $\mu$m, thereby preparing a positive electrode active material in which a coating part including Co, Al and B was formed on the lithium transition metal oxide in the form of a secondary particle in which primary particles were aggregated. The total composition of the positive electrode active material including the coating part was $LiNi_{0.8602}Co_{0.0489}Mn_{0.0773}Al_{0.0066}Y_{0.0010}Zr_{0.0015}B_{0.0045}O_2$.

Example 3

A transition metal composite hydroxide ($D_{50}$: 10.2 $\mu$m) in the form of a secondary particle formed by agglomerating tens to hundreds of primary particles and having a composition expressed as $Ni_{0.89}Co_{0.03}Mn_{0.08}(OH)_2$ was mixed with LiOH so that the molar ratio (Li/(Ni+Co+Mn)) of the lithium (Li) to the transition metals (Ni+Co+Mn) was 1.04. 1,470 ppm of $Al(OH)_3$, 1,000 ppm of $Y_2O_3$, and 1,500 ppm of $ZrO_2$ based on the total weight of the transition metal composite hydroxide were further added and mixed to prepare a mixture.

The mixture was preliminarily fired at 550°C for 5 hours under an oxygen atmosphere to obtain a pre-fired product. Thereafter, the pre-fired product was pulverized at room temperature to have an average particle diameter ($D_{50}$)

of 9.8 µm.

The pulverized pre-fired product was fired under an oxygen atmosphere at 850°C for 6 hours and then at 800°C for 9 hours to obtain a fired product. The fired product was pulverized at room temperature to prepare a lithium transition metal oxide having an average particle diameter ($D_{50}$) of 9.8 µm and a composition expressed as $LiNi_{0.8833}Co_{0.0298}Mn_{0.0794}Al_{0.0050}Y_{0.0010}Zr_{0.0015}O_2$ and being in the form of a secondary particle in which primary particles are aggregated.

To the lithium transition metal oxide in the form of a secondary particle prepared above, $Co(OH)_2$ was added so that the molar ratio (Co/(Ni+Co+Mn+Al+Y+Zr)) of cobalt (Co) to metal (Ni+Co+Mn+Al+Y+Zr) excluding lithium was 0.02, and $Al(OH)_3$ was added in an amount of 500 ppm based on the total weight of the above lithium transition metal oxide, and mixed uniformly to prepare a mixture. The mixture was heat-treated under an oxygen atmosphere at 740°C for 3 hours, and then at 500°C for 3 hours to obtain a first coating product. The first coating product was pulverized at room temperature to have an average particle diameter ($D_{50}$) of 10.2 µm, thereby preparing a positive electrode active material in which a coating part including Co and Al was formed on the lithium transition metal oxide in the form of a secondary particle in which primary particles were aggregated. The total composition of the positive electrode active material including the coating part was $LiNi_{0.8641}Co_{0.0491}Mn_{0.0777}Al_{0.0066}Y_{0.0010}Zr_{0.0015}O_2$.

To the pulverized first coating product, $H_3BO_3$ was added in an amount of 500 ppm based on the total weight of the pulverized first coating product and mixed to prepare a mixture. The mixture was heat-treated at 330°C for 5 hours under an atmospheric atmosphere to obtain a second coating product. The second coating product was pulverized at room temperature to have an average particle diameter ($D_{50}$) of 10.2 µm, thereby preparing a positive electrode active material in which a coating part including Co, Al and B was formed on the lithium transition metal oxide in the form of a secondary particle in which primary particles were aggregated. The total composition of the positive electrode active material including the coating part was $LiNi_{0.8602}Co_{0.0489}Mn_{0.0773}Al_{0.0066}Y_{0.0010}Zr_{0.0015}B_{0.0045}O_2$.

**Example 4**

A transition metal composite hydroxide ($D_{50}$: 10.2 µm) in the form of a secondary particle formed by agglomerating tens to hundreds of primary particles and having a composition expressed as $Ni_{0.89}Co_{0.03}Mn_{0.08}(OH)_2$ was mixed with LiOH so that the molar ratio (Li/(Ni+Co+Mn)) of the lithium (Li) to the transition metals (Ni+Co+Mn) was 1.04. 1,470 ppm of $Al(OH)_3$, 1,000 ppm of $Y_2O_3$, and 1,500 ppm of $ZrO_2$ based on the total weight of the transition metal composite hydroxide were further added and mixed to prepare a mixture.

The mixture was fired under an oxygen atmosphere at 880°C for 6 hours and then at 800°C for 9 hours to obtain a fired product. The fired product was pulverized at room temperature to prepare a lithium transition metal oxide having an average particle diameter ($D_{50}$) of 9.8 µm and a composition expressed as $LiNi_{0.8833}Co_{0.0298}Mn_{0.0794}Al_{0.0050}Y_{0.0010}Zr_{0.0015}O_2$ and being in the form of a secondary particle in which primary particles are aggregated.

To the lithium transition metal oxide in the form of a secondary particle prepared above, $Co(OH)_2$ was added so that the molar ratio (Co/(Ni+Co+Mn+Al+Y+Zr)) of cobalt (Co) to metal (Ni+Co+Mn+Al+Y+Zr) excluding lithium was 0.02, and $Al(OH)_3$ was added in an amount of 500 ppm based on the total weight of the above lithium transition metal oxide, and mixed uniformly to prepare a mixture. The mixture was heat-treated under an oxygen atmosphere at 740°C for 3 hours, and then at 500°C for 3 hours to obtain a first coating product. The first coating product was pulverized at room temperature to have an average particle diameter ($D_{50}$) of 10.2 µm, thereby preparing a positive electrode active material in which a coating part including Co and Al was formed on the lithium transition metal oxide in the form of a secondary particle in which primary particles were aggregated. The total composition of the positive electrode active material including the coating part was $LiNi_{0.8641}Co_{0.0491}Mn_{0.0777}Al_{0.0066}Y_{0.0010}Zr_{0.0015}O_2$.

To the pulverized first coating product, $H_3BO_3$ was added in an amount of 500 ppm based on the total weight of the pulverized first coating product and mixed to prepare a mixture. The mixture was heat-treated at 330°C for 5 hours under an atmospheric atmosphere to obtain a second coating product. The second coating product was pulverized at room temperature to have an average particle diameter ($D_{50}$) of 10.2 µm, thereby preparing a positive electrode active material in which a coating part including Co, Al and B was formed on the lithium transition metal oxide in the form of a secondary particle in which primary particles were aggregated. The total composition of the positive electrode active material including the coating part was $LiNi_{0.8602}Co_{0.0489}Mn_{0.0773}Al_{0.0066}Y_{0.0010}Zr_{0.0015}B_{0.0045}O_2$.

**Example 5**

A transition metal composite hydroxide ($D_{50}$: 10.2 µm) in the form of a secondary particle formed by agglomerating tens to hundreds of primary particles and having a composition expressed as $Ni_{0.89}Co_{0.03}Mn_{0.08}(OH)_2$ was mixed with LiOH so that the molar ratio (Li/(Ni+Co+Mn)) of the lithium (Li) to the transition metals (Ni+Co+Mn) was 1.04. 1,470 ppm of $Al(OH)_3$, 2,000 ppm of $Y_2O_3$, and 1,500 ppm of $ZrO_2$ based on the total weight of the transition metal composite hydroxide were further added and mixed to prepare a mixture.

The mixture was fired under an oxygen atmosphere at 850°C for 6 hours and then at 800°C for 9 hours to obtain a fired product. The fired product was pulverized at room temperature to prepare a lithium transition metal oxide having an average particle diameter ($D_{50}$) of 9.8 $\mu$m and a composition expressed as $LiNi_{0.8824}Co_{0.0297}Mn_{0.0793}Al_{0.0050}Y_{0.0021}Zr_{0.0015}O_2$ and being in the form of a secondary particle in which primary particles are aggregated.

To the lithium transition metal oxide in the form of a secondary particle prepared above, $Co(OH)_2$ was added so that the molar ratio (Co/(Ni+Co+Mn+Al+Y+Zr)) of cobalt (Co) to metal (Ni+Co+Mn+Al+Y+Zr) excluding lithium was 0.02, and $Al(OH)_3$ was added in an amount of 500 ppm based on the total weight of the above lithium transition metal oxide, and mixed uniformly to prepare a mixture. The mixture was heat-treated under an oxygen atmosphere at 740°C for 3 hours, and then at 500°C for 3 hours to obtain a first coating product. The first coating product was pulverized at room temperature to have an average particle diameter ($D_{50}$) of 10.2 $\mu$m, thereby preparing a positive electrode active material in which a coating part including Co and Al was formed on the lithium transition metal oxide in the form of a secondary particle in which primary particles were aggregated. The total composition of the positive electrode active material including the coating part was $LiNi_{0.8632}Co_{0.0491}Mn_{0.0776}Al_{0.0066}Y_{0.0020}Zr_{0.0015}O_2$.

To the pulverized first coating product, $H_3BO_3$ was added in an amount of 500 ppm based on the total weight of the pulverized first coating product and mixed to prepare a mixture. The mixture was heat-treated at 330°C for 5 hours under an atmospheric atmosphere to obtain a second coating product. The second coating product was pulverized at room temperature to have an average particle diameter ($D_{50}$) of 10.2 $\mu$m, thereby preparing a positive electrode active material in which a coating part including Co, Al and B was formed on the lithium transition metal oxide in the form of a secondary particle in which primary particles were aggregated. The total composition of the positive electrode active material including the coating part was $LiNi_{0.8593}Co_{0.0489}Mn_{0.0772}Al_{0.0066}Y_{0.0020}Zr_{0.0015}B_{0.0045}O_2$.

**Example 6**

A transition metal composite hydroxide ($D_{50}$: 10.2 $\mu$m) in the form of a secondary particle formed by agglomerating tens to hundreds of primary particles and having a composition expressed as $Ni_{0.89}Co_{0.03}Mn_{0.08}(OH)_2$ was mixed with LiOH so that the molar ratio (Li/(Ni+Co+Mn)) of the lithium (Li) to the transition metals (Ni+Co+Mn) was 1.04. 2,940 ppm of $Al(OH)_3$, 1,000 ppm of $Y_2O_3$, and 1,500 ppm of $ZrO_2$ based on the total weight of the transition metal composite hydroxide were further added and mixed to prepare a mixture.

The mixture was fired under an oxygen atmosphere at 850°C for 6 hours and then at 800°C for 9 hours to obtain a fired product. The fired product was pulverized at room temperature to prepare a lithium transition metal oxide having an average particle diameter ($D_{50}$) of 9.8 $\mu$m and a composition expressed as $LiNi_{0.8789}Co_{0.0296}Mn_{0.0790}Al_{0.0100}Y_{0.0010}Zr_{0.0015}O_2$ and being in the form of a secondary particle in which primary particles are aggregated.

To the lithium transition metal oxide in the form of a secondary particle prepared above, $Co(OH)_2$ was added so that the molar ratio (Co/(Ni+Co+Mn+Al+Y+Zr)) of cobalt (Co) to metal (Ni+Co+Mn+Al+Y+Zr) excluding lithium was 0.02, and $Al(OH)_3$ was added in an amount of 500 ppm based on the total weight of the above lithium transition metal oxide, and mixed uniformly to prepare a mixture. The mixture was heat-treated under an oxygen atmosphere at 740°C for 3 hours, and then at 500°C for 3 hours to obtain a first coating product. The first coating product was pulverized at room temperature to have an average particle diameter ($D_{50}$) of 10.2 $\mu$m, thereby preparing a positive electrode active material in which a coating part including Co and Al was formed on the lithium transition metal oxide in the form of a secondary particle in which primary particles were aggregated. The total composition of the positive electrode active material including the coating part was $LiNi_{0.8597}Co_{0.0490}Mn_{0.0773}Al_{0.015}Y_{0.0010}Zr_{0.0015}O_2$.

To the pulverized first coating product, $H_3BO_3$ was added in an amount of 500 ppm based on the total weight of the pulverized first coating product and mixed to prepare a mixture. The mixture was heat-treated at 330°C for 5 hours under an atmospheric atmosphere to obtain a second coating product. The second coating product was pulverized at room temperature to have an average particle diameter ($D_{50}$) of 10.2 $\mu$m, thereby preparing a positive electrode active material in which a coating part including Co, Al and B was formed on the lithium transition metal oxide in the form of a secondary particle in which primary particles were aggregated. The total composition of the positive electrode active material including the coating part was $LiNi_{0.8559}Co_{0.0488}Mn_{0.0769}Al_{0.0115}Y_{0.0010}Zr_{0.0014}B_{0.0045}O_2$.

**Example 7**

A transition metal composite hydroxide ($D_{50}$: 10.2 $\mu$m) in the form of a secondary particle formed by agglomerating tens to hundreds of primary particles and having a composition expressed as $Ni_{0.89}Co_{0.03}Mn_{0.08}(OH)_2$ was mixed with LiOH so that the molar ratio (Li/(Ni+Co+Mn)) of the lithium (Li) to the transition metals (Ni+Co+Mn) was 1.04. 1,470 ppm of $Al(OH)_3$, 1,000 ppm of $Y_2O_3$, and 3,500 ppm of $ZrO_2$ based on the total weight of the transition metal composite hydroxide were further added and mixed to prepare a mixture.

The mixture was fired under an oxygen atmosphere at 850°C for 6 hours and then at 800°C for 9 hours to obtain a fired product. The fired product was pulverized at room temperature to prepare a lithium transition metal oxide having an average particle diameter ($D_{50}$) of 9.8 $\mu$m and a composition expressed as $LiNi_{0.8815}Co_{0.0297}Mn_{0.0793}Al_{0.0050}Y_{0.0010}Zr$-

$r_{0.0035}O_2$ and being in the form of a secondary particle in which primary particles are aggregated.

To the lithium transition metal oxide in the form of a secondary particle prepared above, $Co(OH)_2$ was added so that the molar ratio (Co/(Ni+Co+Mn+Al+Y+Zr)) of cobalt (Co) to metal (Ni+Co+Mn+Al+Y+Zr) excluding lithium was 0.02, and $Al(OH)_3$ was added in an amount of 500 ppm based on the total weight of the above lithium transition metal oxide, and mixed uniformly to prepare a mixture. The mixture was heat-treated under an oxygen atmosphere at 740°C for 3 hours, and then at 500°C for 3 hours to obtain a first coating product. The first coating product was pulverized at room temperature to have an average particle diameter ($D_{50}$) of 10.2 $\mu$m, thereby preparing a positive electrode active material in which a coating part including Co and Al was formed on the lithium transition metal oxide in the form of a secondary particle in which primary particles were aggregated. The total composition of the positive electrode active material including the coating part was $LiNi_{0.8623}Co_{0.0491}Mn_{0.0775}Al_{0.0066}Y_{0.0010}Zr_{0.0035}O_2$.

To the pulverized first coating product, $H_3BO_3$ was added in an amount of 500 ppm based on the total weight of the pulverized first coating product and mixed to prepare a mixture. The mixture was heat-treated at 330°C for 5 hours under an atmospheric atmosphere to obtain a second coating product. The second coating product was pulverized at room temperature to have an average particle diameter ($D_{50}$) of 10.2 $\mu$m, thereby preparing a positive electrode active material in which a coating part including Co, Al and B was formed on the lithium transition metal oxide in the form of a secondary particle in which primary particles were aggregated. The total composition of the positive electrode active material including the coating part was $LiNi_{0.8584}Co_{0.0489}Mn_{0.0772}Al_{0.0066}Y_{0.0010}Zr_{0.0034}B_{0.0045}O_2$.

**Example 8**

A transition metal composite hydroxide ($D_{50}$: 14.5 $\mu$m) in the form of a secondary particle formed by agglomerating tens to hundreds of primary particles and having a composition expressed as $Ni_{0.96}Co_{0.03}Mn_{0.01}(OH)_2$ was mixed with LiOH so that the molar ratio (Li/(Ni+Co+Mn)) of the lithium (Li) to the transition metals (Ni+Co+Mn) was 1.02. 1,470 ppm of $Al(OH)_3$, 1,000 ppm of $Y_2O_3$, and 1,500 ppm of $ZrO_2$ based on the total weight of the transition metal composite hydroxide were further added and mixed to prepare a mixture.

The mixture was fired under an oxygen atmosphere at 800°C for 6 hours and then at 760°C for 9 hours to obtain a fired product. The fired product was pulverized at room temperature to prepare a lithium transition metal oxide having an average particle diameter ($D_{50}$) of 14.2 $\mu$m and a composition expressed as $LiNi_{0.9528}Co_{0.0298}Mn_{0.0099}Al_{0.0050}Y_{0.0010}Zr_{0.0015}O_2$ and being in the form of a secondary particle in which primary particles are aggregated.

To the lithium transition metal oxide in the form of a secondary particle prepared above, $Co(OH)_2$ was added so that the molar ratio (Co/(Ni+Co+Mn+Al+Y+Zr)) of cobalt (Co) to metal (Ni+Co+Mn+Al+Y+Zr) excluding lithium was 0.02, and $Al(OH)_3$ was added in an amount of 500 ppm based on the total weight of the above lithium transition metal oxide, and mixed uniformly to prepare a mixture. The mixture was heat-treated under an oxygen atmosphere at 700°C for 3 hours, and then at 500°C for 3 hours to obtain a first coating product. The first coating product was pulverized at room temperature to have an average particle diameter ($D_{50}$) of 14.5 $\mu$m, thereby preparing a positive electrode active material in which a coating part including Co and Al was formed on the lithium transition metal oxide in the form of a secondary particle in which primary particles were aggregated. The total composition of the positive electrode active material including the coating part was $LiNi_{0.9320}Co_{0.0491}Mn_{0.0097}Al_{0.0067}Y_{0.0010}Zr_{0.0015}O_2$.

To the pulverized first coating product, $H_3BO_3$ was added in an amount of 500 ppm based on the total weight of the pulverized first coating product and mixed to prepare a mixture. The mixture was heat-treated at 330°C for 5 hours under an atmospheric atmosphere to obtain a second coating product. The second coating product was pulverized at room temperature to have an average particle diameter ($D_{50}$) of 14.2 $\mu$m, thereby preparing a positive electrode active material in which a coating part including Co, Al and B was formed on the lithium transition metal oxide in the form of a secondary particle in which primary particles were aggregated. The total composition of the positive electrode active material including the coating part was $LiNi_{0.9278}Co_{0.0489}Mn_{0.0097}Al_{0.0066}Y_{0.0010}Zr_{0.0015}B_{0.0045}O_2$.

Example 9

A transition metal composite hydroxide ($D_{50}$: 14.5 $\mu$m) in the form of a secondary particle formed by agglomerating tens to hundreds of primary particles and having a composition expressed as $Ni_{0.96}Co_{0.03}Mn_{0.01}(OH)_2$ was mixed with LiOH so that the molar ratio (Li/(Ni+Co+Mn)) of the lithium (Li) to the transition metals (Ni+Co+Mn) was 0.98. 1,470 ppm of $Al(OH)_3$, 1,000 ppm of $Y_2O_3$, and 1,500 ppm of $ZrO_2$ based on the total weight of the transition metal composite hydroxide were further added and mixed to prepare a mixture.

The mixture was first fired under an oxygen atmosphere at 800°C for 6 hours to obtain a first fired product. Thereafter, the first fired product was pulverized at room temperature to have an average particle diameter ($D_{50}$) of 14.2 $\mu$m.

The pulverized first fired product and LiOH were mixed such that a molar ratio (Li/(Ni+Co+Mn)) of lithium (Li) to transition metal (Ni+Co+Mn) was 0.04, and secondarily fired at 760°C for 9 hours under an oxygen atmosphere, thereby obtaining a second fired product. The second fired product was pulverized at room temperature to prepare a lithium transition metal oxide having an average particle diameter ($D_{50}$) of 14.2 $\mu$m and a composition expressed as $LiNi_{0.9528}Co_{0.0298}Mn_{0.0099}Al_{0.0050}Y_{0.0010}Zr_{0.0015}O_2$ and being in the form of a secondary particle in which primary particles are aggregated.

To the lithium transition metal oxide in the form of a secondary particle prepared above, $Co(OH)_2$ was added so that the molar ratio (Co/(Ni+Co+Mn+Al+Y+Zr)) of cobalt (Co) to metal (Ni+Co+Mn+Al+Y+Zr) excluding lithium was 0.02, and $Al(OH)_3$ was added in an amount of 500 ppm based on the total weight of the above lithium transition metal oxide, and mixed uniformly to prepare a mixture. The mixture was heat-treated under an oxygen atmosphere at 700°C for 3 hours, and then at 500°C for 3 hours to obtain a first coating product. The first coating product was pulverized at room temperature to have an average particle diameter ($D_{50}$) of 14.5 $\mu$m, thereby preparing a positive electrode active material in which a coating part including Co and Al was formed on the lithium transition metal oxide in the form of a secondary particle in which primary particles were aggregated. The total composition of the positive electrode active material including the coating part was $LiNi_{0.9320}Co_{0.0491}Mn_{0.0097}Al_{0.0067}Y_{0.0010}Zr_{0.0015}O_2$.

To the pulverized first coating product, $H_3BO_3$ was added in an amount of 500 ppm based on the total weight of the pulverized first coating product and mixed to prepare a mixture. The mixture was heat-treated at 330°C for 5 hours under an atmospheric atmosphere to obtain a second coating product. The second coating product was pulverized at room temperature to have an average particle diameter ($D_{50}$) of 14.2 $\mu$m, thereby preparing a positive electrode active material in which a coating part including Co, Al and B was formed on the lithium transition metal oxide in the form of a secondary particle in which primary particles were aggregated. The total composition of the positive electrode active material including the coating part was $LiNi_{0.9278}Co_{0.0489}Mn_{0.0097}Al_{0.0066}Y_{0.0010}Zr_{0.0015}B_{0.0045}O_2$.

Example 10

A transition metal composite hydroxide ($D_{50}$: 14.5 $\mu$m) in the form of a secondary particle formed by agglomerating tens to hundreds of primary particles and having a composition expressed as $Ni_{0.96}Co_{0.03}Mn_{0.01}(OH)_2$ was mixed with LiOH so that the molar ratio (Li/(Ni+Co+Mn)) of the lithium (Li) to the transition metals (Ni+Co+Mn) was 1.02. 1,470 ppm of $Al(OH)_3$, 1,000 ppm of $Y_2O_3$, and 1,500 ppm of $ZrO_2$ based on the total weight of the transition metal composite hydroxide were further added and mixed to prepare a mixture.

The mixture was preliminarily fired at 550°C for 5 hours under an oxygen atmosphere to obtain a pre-fired product. Thereafter, the pre-fired product was pulverized at room temperature to have an average particle diameter ($D_{50}$) of 14.2 $\mu$m.

The pulverized pre-fired product was fired under an oxygen atmosphere at 800°C for 6 hours and then at 760°C for 9 hours to obtain a fired product. The fired product was pulverized at room temperature to prepare a lithium transition metal oxide having an average particle diameter ($D_{50}$) of 14.2 $\mu$m and a composition expressed as $LiNi_{0.9528}Co_{0.0298}Mn_{0.0099}Al_{0.0050}Y_{0.0010}Zr_{0.0015}O_2$ and being in the form of a secondary particle in which primary particles are aggregated.

To the lithium transition metal oxide in the form of a secondary particle prepared above, $Co(OH)_2$ was added so that the molar ratio (Co/(Ni+Co+Mn+Al+Y+Zr)) of cobalt (Co) to metal (Ni+Co+Mn+Al+Y+Zr) excluding lithium was 0.02, and $Al(OH)_3$ was added in an amount of 500 ppm based on the total weight of the above lithium transition metal oxide, and mixed uniformly to prepare a mixture. The mixture was heat-treated under an oxygen atmosphere at 700°C for 3 hours, and then at 500°C for 3 hours to obtain a first coating product. The first coating product was pulverized at room temperature to have an average particle diameter ($D_{50}$) of 14.5 $\mu$m, thereby preparing a positive electrode active material in which a coating part including Co and Al was formed on the lithium transition metal oxide in the form of a secondary particle in which primary particles were aggregated. The total composition of the positive electrode active material including the coating part was $LiNi_{0.9320}Co_{0.0491}Mn_{0.0097}Al_{0.0067}Y_{0.0010}Zr_{0.0015}O_2$.

To the pulverized first coating product, $H_3BO_3$ was added in an amount of 500 ppm based on the total weight of the pulverized first coating product and mixed to prepare a mixture. The mixture was heat-treated at 330°C for 5 hours under an atmospheric atmosphere to obtain a second coating product. The second coating product was pulverized at room temperature to have an average particle diameter ($D_{50}$) of 14.2 $\mu$m, thereby preparing a positive electrode active material in which a coating part including Co, Al and B was formed on the lithium transition metal oxide in the form of a secondary particle in which primary particles were aggregated. The total composition of the positive electrode active material including the coating part was $LiNi_{0.9278}Co_{0.0489}Mn_{0.0097}Al_{0.0066}Y_{0.0010}Zr_{0.0015}B_{0.0045}O_2$.

**Example 11**

A transition metal composite hydroxide ($D_{50}$: 14.5 $\mu$m) in the form of a secondary particle formed by agglomerating tens to hundreds of primary particles and having a composition expressed as $Ni_{0.96}Co_{0.03}Mn_{0.01}(OH)_2$ was mixed with LiOH so that the molar ratio (Li/(Ni+Co+Mn)) of the lithium (Li) to the transition metals (Ni+Co+Mn) was 1.02. 1,470 ppm of $Al(OH)_3$, 1,000 ppm of $Y_2O_3$, and 1,500 ppm of $ZrO_2$ based on the total weight of the transition metal composite hydroxide were further added and mixed to prepare a mixture.

The mixture was fired under an oxygen atmosphere at 830°C for 6 hours and then at 760°C for 9 hours to obtain a fired product. The fired product was pulverized at room temperature to prepare a lithium transition metal oxide having an average particle diameter ($D_{50}$) of 14.2 $\mu$m and a composition expressed as $LiNi_{0.9528}Co_{0.0298}Mn_{0.0099}Al_{0.0050}Y_{0.0010}Zr_{0.0015}O_2$ and being in the form of a secondary particle in which primary particles are aggregated.

To the lithium transition metal oxide in the form of a secondary particle prepared above, $Co(OH)_2$ was added so that the molar ratio (Co/(Ni+Co+Mn+Al+Y+Zr)) of cobalt (Co) to metal (Ni+Co+Mn+Al+Y+Zr) excluding lithium was 0.02, and $Al(OH)_3$ was added in an amount of 500 ppm based on the total weight of the above lithium transition metal oxide, and mixed uniformly to prepare a mixture. The mixture was heat-treated under an oxygen atmosphere at 700°C for 3 hours, and then at 500°C for 3 hours to obtain a first coating product. The first coating product was pulverized at room temperature to have an average particle diameter ($D_{50}$) of 14.5 $\mu$m, thereby preparing a positive electrode active material in which a coating part including Co and Al was formed on the lithium transition metal oxide in the form of a secondary particle in which primary particles were aggregated. The total composition of the positive electrode active material including the coating part was $LiNi_{0.9320}Co_{0.0491}Mn_{0.0097}Al_{0.0067}Y_{0.0010}Zr_{0.0015}O_2$.

To the pulverized first coating product, $H_3BO_3$ was added in an amount of 500 ppm based on the total weight of the pulverized first coating product and mixed to prepare a mixture. The mixture was heat-treated at 330°C for 5 hours under an atmospheric atmosphere to obtain a second coating product. The second coating product was pulverized at room temperature to have an average particle diameter ($D_{50}$) of 14.2 $\mu$m, thereby preparing a positive electrode active material in which a coating part including Co, Al and B was formed on the lithium transition metal oxide in the form of a secondary particle in which primary particles were aggregated. The total composition of the positive electrode active material including the coating part was $LiNi_{0.9278}Co_{0.0489}Mn_{0.0097}Al_{0.0066}Y_{0.0010}Zr_{0.0015}B_{0.0045}O_2$.

**Comparative Example 1**

A transition metal composite hydroxide ($D_{50}$: 10.2 $\mu$m) in the form of a secondary particle formed by agglomerating tens to hundreds of primary particles and having a composition expressed as $Ni_{0.87}Co_{0.05}Mn_{0.08}(OH)_2$ was mixed with LiOH so that the molar ratio (Li/(Ni+Co+Mn)) of the lithium (Li) to the transition metals (Ni+Co+Mn) was 1.05. 1,470 ppm of $Al(OH)_3$, 1,000 ppm of $Y_2O_3$, and 1,500 ppm of $ZrO_2$ based on the total weight of the transition metal composite hydroxide were further added and mixed to prepare a mixture.

The mixture was fired under an oxygen atmosphere at 780°C for 5 hours to obtain a fired product. The fired product was pulverized at room temperature to prepare a lithium transition metal oxide having an average particle diameter ($D_{50}$) of 9.8 $\mu$m and a composition expressed as $LiNi_{0.8635}Co_{0.0496}Mn_{0.0794}Al_{0.0050}Y_{0.0010}Zr_{0.0015}O_2$ and being in the form of a secondary particle in which primary particles are aggregated. Subsequently, 100 parts by weight of the prepared lithium transition metal oxide in the form of a secondary particle and 100 parts by weight of water were stirred for 5 minutes and then washed with water using a filter press. The washed product was dried at 130°C for 4 hours to prepare a dried product.

To the prepared dried product, $H_3BO_3$ was added in an amount of 1,000 ppm based on the total weight of the lithium transition metal oxide and mixed to prepare a mixture. The mixture was heat-treated at 300°C for 5 hours under an atmospheric atmosphere to obtain a coating product. The coating product was pulverized at room temperature to have an average particle diameter ($D_{50}$) of 10.2 $\mu$m, thereby preparing a positive electrode active material in which a coating part including B was formed on the lithium transition metal oxide in the form of a secondary particle in which primary particles were aggregated. The total composition of the positive electrode active material including the coating part was $LiNi_{0.8558}Co_{0.0492}Mn_{0.0787}Al_{0.0049}Y_{0.0010}Zr_{0.0015}B_{0.0089}O_2$.

**Comparative Example 2**

A transition metal composite hydroxide ($D_{50}$: 12.2 $\mu$m) in the form of a secondary particle formed by agglomerating tens to hundreds of primary particles and having a composition expressed as $Ni_{0.87}Co_{0.05}Mn_{0.08}(OH)_2$ was mixed with LiOH so that the molar ratio (Li/(Ni+Co+Mn)) of the lithium (Li) to the transition metals (Ni+Co+Mn) was 1.05. 1,470 ppm of $Al(OH)_3$, 1,000 ppm of $Y_2O_3$, and 1,500 ppm of $ZrO_2$ based on the total weight of the transition metal composite hydroxide were further added and mixed to prepare a mixture.

The mixture was fired under an oxygen atmosphere at 780°C for 5 hours to obtain a fired product. The fired product was pulverized at room temperature to prepare a lithium transition metal oxide having an average particle diameter ($D_{50}$) of 11.8 $\mu$m and a composition expressed as $LiNi_{0.8635}Co_{0.0496}Mn_{0.0794}Al_{0.0050}Y_{0.0010}Zr_{0.0015}O_2$ and being in the form of a secondary particle in which primary particles are aggregated. Subsequently, 100 parts by weight of the prepared lithium transition metal oxide in the form of a secondary particle and 100 parts by weight of water were stirred for 5 minutes and then washed with water using a filter press. The washed product was dried at 130°C for 4 hours to prepare a dried product.

To the prepared dried product, $H_3BO_3$ was added in an amount of 1,000 ppm based on the total weight of the lithium transition metal oxide and mixed to prepare a mixture. The mixture was heat-treated at 300°C for 5 hours under an atmospheric atmosphere to obtain a coating product. The coating product was pulverized at room temperature to have an average particle diameter ($D_{50}$) of 12.2 $\mu$m, thereby preparing a positive electrode active material in which a coating part including B was formed on the lithium transition metal oxide in the form of a secondary particle in which primary particles were aggregated. The total composition of the positive electrode active material including the coating part was $LiNi_{0.8558}Co_{0.0492}Mn_{0.0787}Al_{0.0049}Y_{0.0010}Zr_{0.0015}B_{0.0089}O_2$.

Comparative Example 3

A transition metal composite hydroxide ($D_{50}$: 14.5 $\mu$m) in the form of a secondary particle formed by agglomerating tens to hundreds of primary particles and having a composition expressed as $Ni_{0.94}Co_{0.05}Mn_{0.01}(OH)_2$ was mixed with LiOH so that the molar ratio (Li/(Ni+Co+Mn)) of the lithium (Li) to the transition metals (Ni+Co+Mn) was 1.02. 1,470 ppm of $Al(OH)_3$, 1,000 ppm of $Y_2O_3$, and 1,500 ppm of $ZrO_2$ based on the total weight of the transition metal composite hydroxide were further added and mixed to prepare a mixture.

The mixture was fired under an oxygen atmosphere at 730°C for 5 hours to obtain a fired product. The fired product was pulverized at room temperature to prepare a lithium transition metal oxide having an average particle diameter ($D_{50}$) of 14.2 $\mu$m and a composition expressed as $LiNi_{0.9330}Co_{0.0496}Mn_{0.0099}Al_{0.0050}Y_{0.0010}Zr_{0.0015}O_2$ and being in the form of a secondary particle in which primary particles are aggregated. Subsequently, 100 parts by weight of the prepared lithium transition metal oxide in the form of a secondary particle and 100 parts by weight of water were stirred for 5 minutes and then washed with water using a filter press. The washed product was dried at 130°C for 4 hours to prepare a dried product.

To the prepared dried product, $H_3BO_3$ was added in an amount of 1,000 ppm based on the total weight of the lithium transition metal oxide and mixed to prepare a mixture. The mixture was heat-treated at 300°C for 5 hours under an atmospheric atmosphere to obtain a coating product. The coating product was pulverized at room temperature to have an average particle diameter ($D_{50}$) of 14.2 $\mu$m, thereby preparing a positive electrode active material in which a coating part including B was formed on the lithium transition metal oxide in the form of a secondary particle in which primary particles were aggregated. The total composition of the positive electrode active material including the coating part was $LiNi_{0.9246}Co_{0.0492}Mn_{0.0098}Al_{0.0050}Y_{0.0010}Zr_{0.0015}B_{0.0089}O_2$.

Comparative Example 4

A transition metal composite hydroxide ($D_{50}$: 10.2 $\mu$m) in the form of a secondary particle formed by agglomerating tens to hundreds of primary particles and having a composition expressed as $Ni_{0.94}Co_{0.05}Mn_{0.01}(OH)_2$ was mixed with LiOH so that the molar ratio (Li/(Ni+Co+Mn)) of the lithium (Li) to the transition metals (Ni+Co+Mn) was 1.02. 1,470 ppm of $Al(OH)_3$, 1,000 ppm of $Y_2O_3$, and 1,500 ppm of $ZrO_2$ based on the total weight of the transition metal composite hydroxide were further added and mixed to prepare a mixture.

The mixture was fired under an oxygen atmosphere at 730°C for 5 hours to obtain a fired product. The fired product was pulverized at room temperature to prepare a lithium transition metal oxide having an average particle diameter ($D_{50}$) of 9.8 $\mu$m and a composition expressed as $LiNi_{0.9330}Co_{0.0496}Mn_{0.0099}Al_{0.0050}Y_{0.0010}Zr_{0.0015}O_2$ and being in the form of a secondary particle in which primary particles are aggregated. Subsequently, 100 parts by weight of the prepared lithium transition metal oxide in the form of a secondary particle and 100 parts by weight of water were stirred for 5 minutes and then washed with water using a filter press. The washed product was dried at 130°C for 4 hours to prepare a dried product.

To the prepared dried product, $H_3BO_3$ was added in an amount of 1,000 ppm based on the total weight of the lithium transition metal oxide and mixed to prepare a mixture. The mixture was heat-treated at 300°C for 5 hours under an atmospheric atmosphere to obtain a coating product. The coating product was pulverized at room temperature to have an average particle diameter ($D_{50}$) of 10.2 $\mu$m, thereby preparing a positive electrode active material in which a coating part including B was formed on the lithium transition metal oxide in the form of a secondary particle in which primary particles were aggregated. The total composition of the positive electrode active material including the coating part was $LiNi_{0.9246}Co_{0.0492}Mn_{0.0098}Al_{0.0050}Y_{0.0010}Zr_{0.0015}B_{0.0089}O_2$.

Comparative Example 5

A transition metal composite hydroxide ($D_{50}$: 4.2 $\mu$m) in the form of a secondary particle formed by agglomerating tens to hundreds of primary particles and having a composition expressed as $Ni_{0.89}Co_{0.03}Mn_{0.08}(OH)_2$ was mixed with LiOH so that the molar ratio (Li/(Ni+Co+Mn)) of the lithium (Li) to the transition metals (Ni+Co+Mn) was 1.04. 1,470 ppm of $Al(OH)_3$, 1,000 ppm of $Y_2O_3$, and 1,500 ppm of $ZrO_2$ based on the total weight of the transition metal composite hydroxide were further added and mixed to prepare a mixture.

The mixture was fired under an oxygen atmosphere at 930°C for 6 hours and then at 830°C for 9 hours to obtain a fired product. The fired product was pulverized at room temperature to prepare a lithium transition metal oxide having an average particle diameter ($D_{50}$) of 3.8 $\mu$m and a composition expressed as $LiNi_{0.8833}Co_{0.0298}Mn_{0.0794}Al_{0.0050}Y_{0.0010}Zr_{0.0015}O_2$ and being in the form of a single particle.

To the lithium transition metal oxide in the form of a single particle prepared above, $Co(OH)_2$ was added so that the molar ratio (Co/(Ni+Co+Mn+Al+Y+Zr)) of cobalt (Co) to metal (Ni+Co+Mn+Al+Y+Zr) excluding lithium was 0.02, and $Al(OH)_3$ was added in an amount of 500 ppm based on the total weight of the above lithium transition metal oxide, and mixed uniformly to prepare a mixture. The mixture was heat-treated under an oxygen atmosphere at 740°C for 3 hours, and then at 500°C for 3 hours to obtain a coating product. The coating product was pulverized at room temperature to have an average particle diameter ($D_{50}$) of 3.8 $\mu$m, thereby preparing a positive electrode active material in which a coating part including Co and Al was formed on the lithium transition metal oxide in the form of a single particle. The total composition of the positive electrode active material including the coating part was $LiNi_{0.8641}Co_{0.0491}Mn_{0.0777}Al_{0.0066}Y_{0.0010}Zr_{0.0015}O_2$.

**Experimental Example**

**Experimental Example 1: Particle Analysis 1**

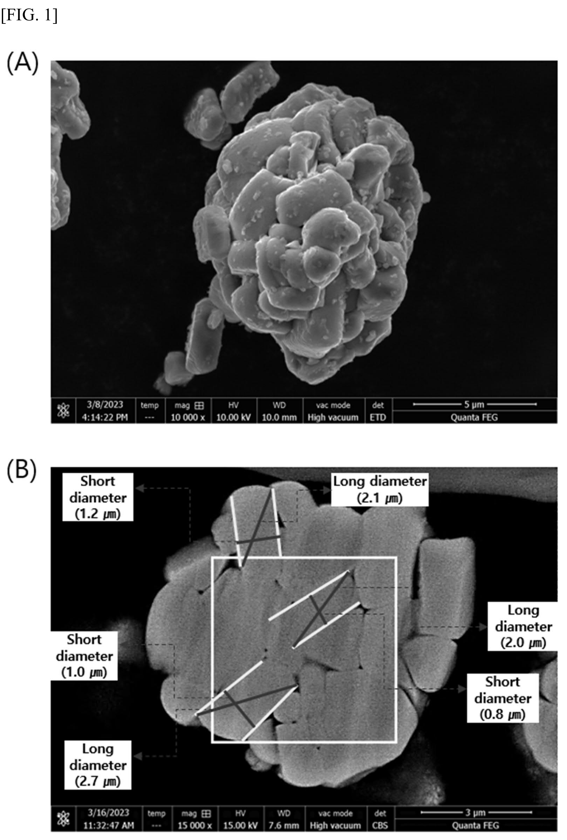

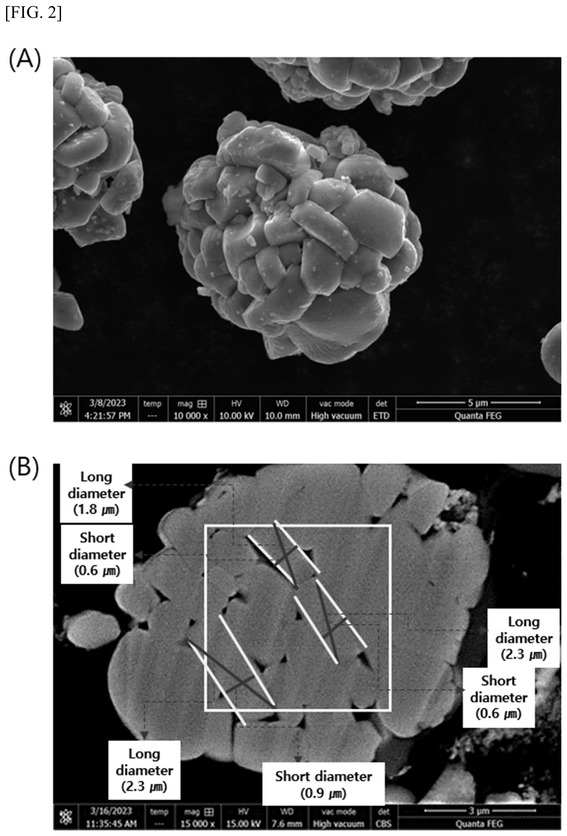

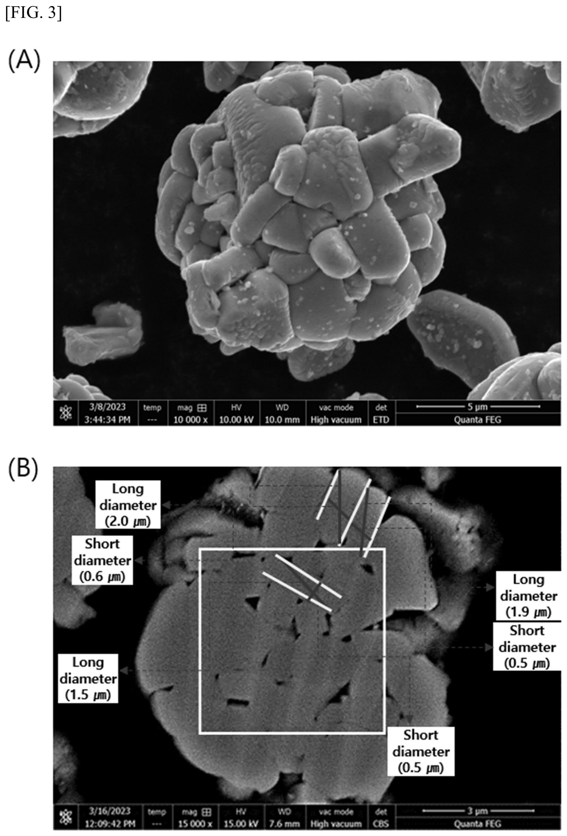

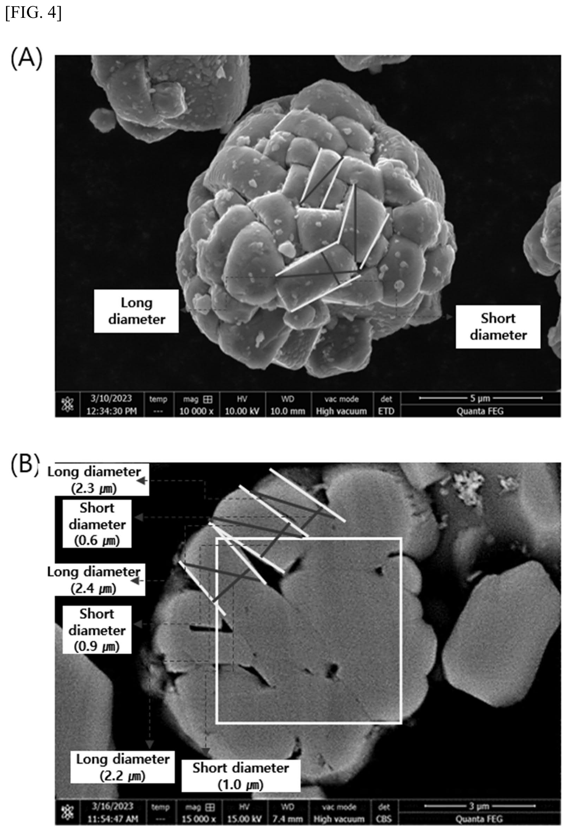

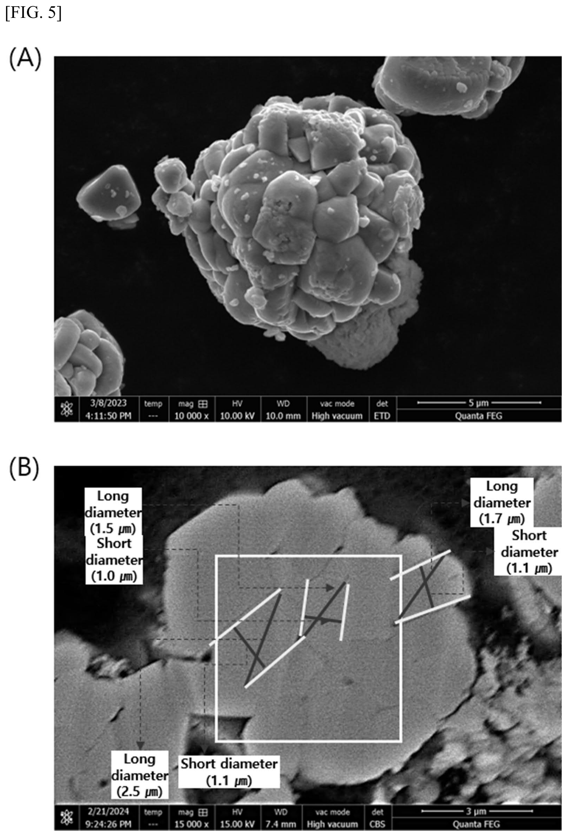

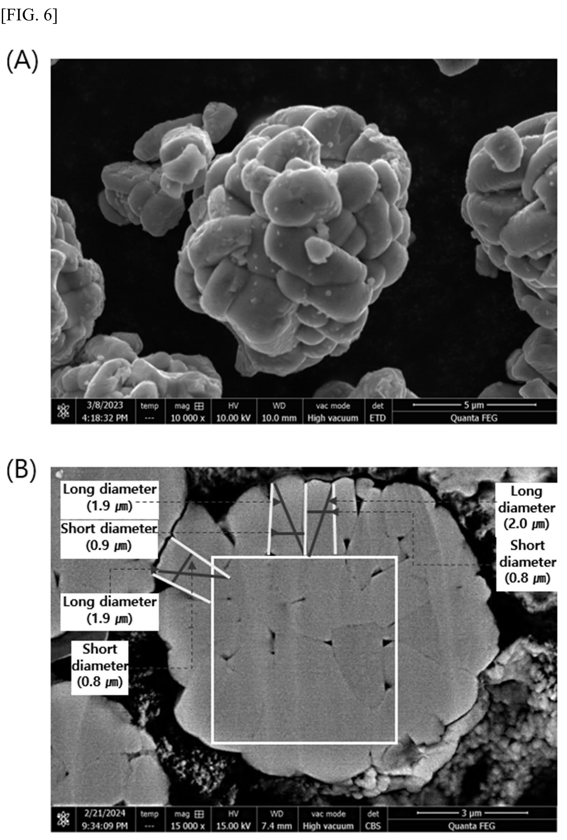

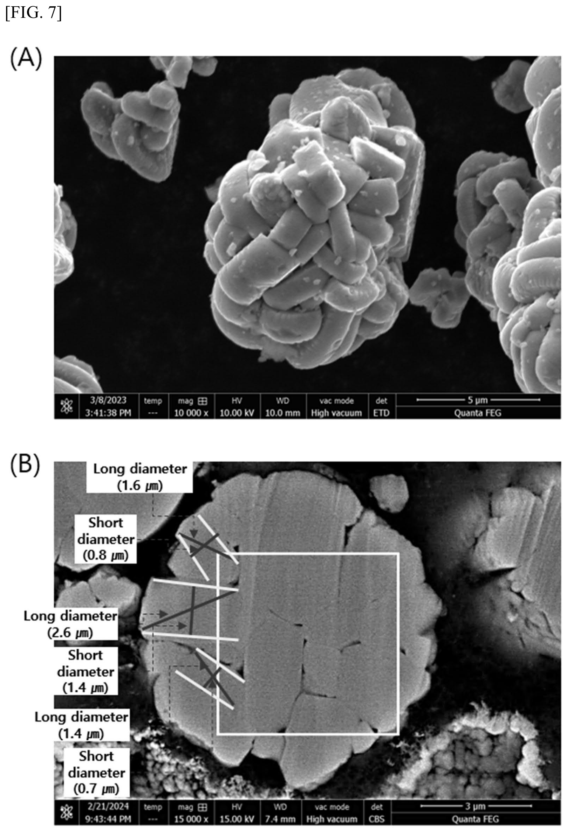

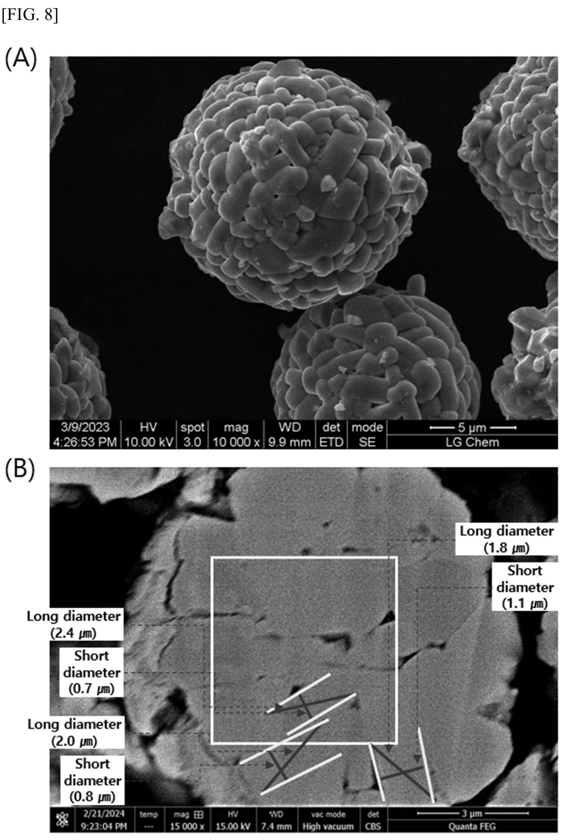

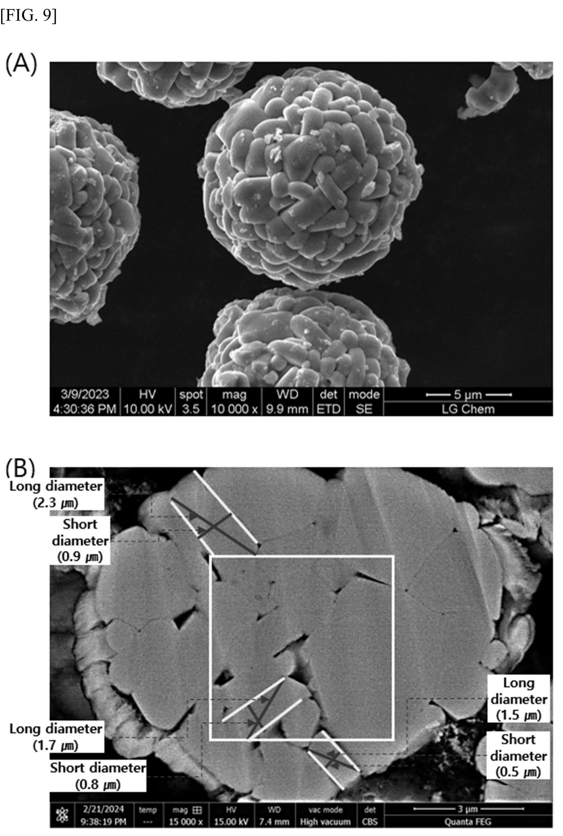

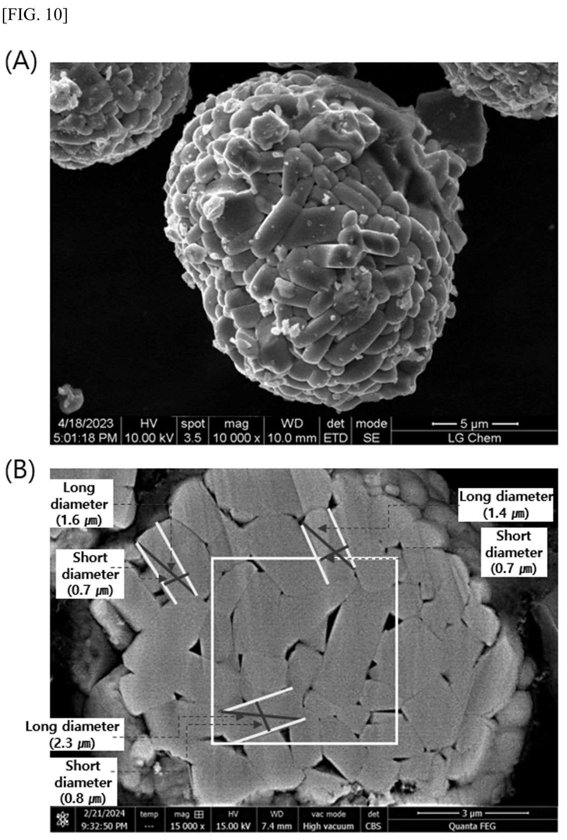

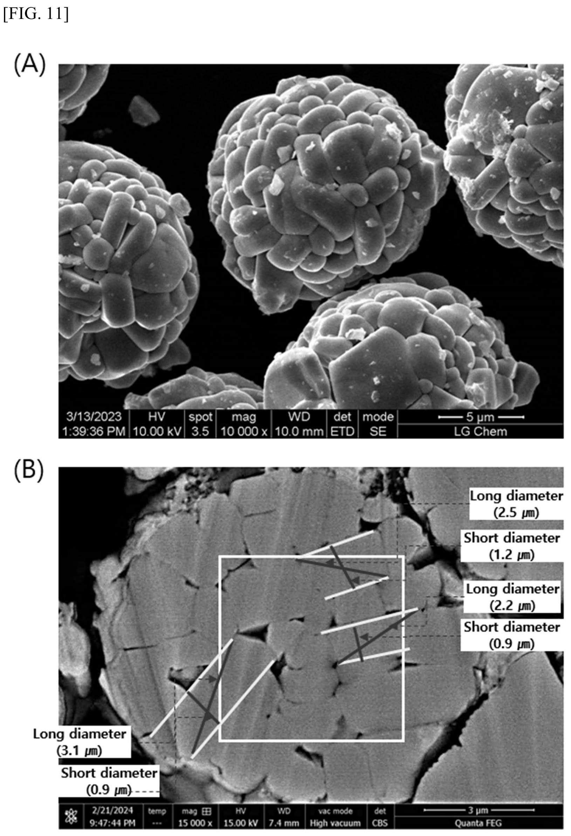

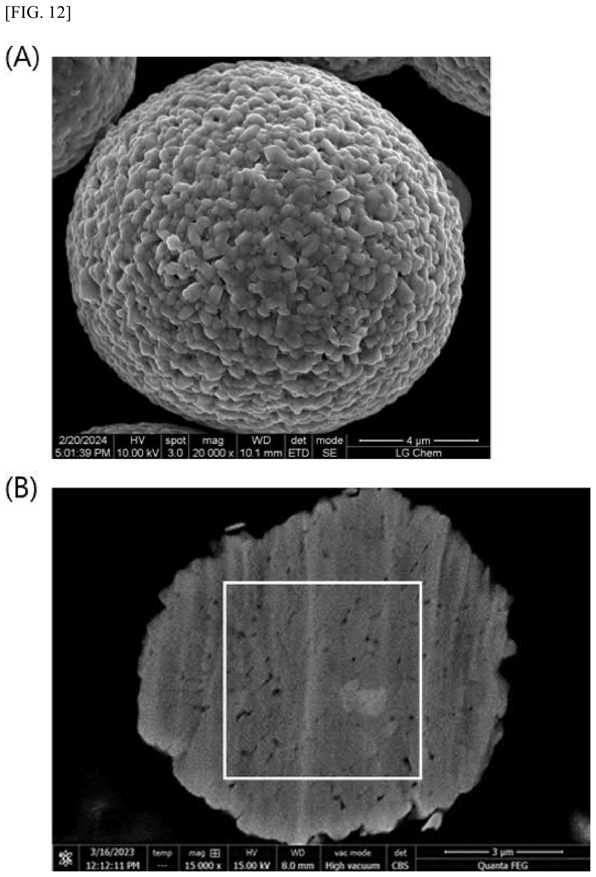

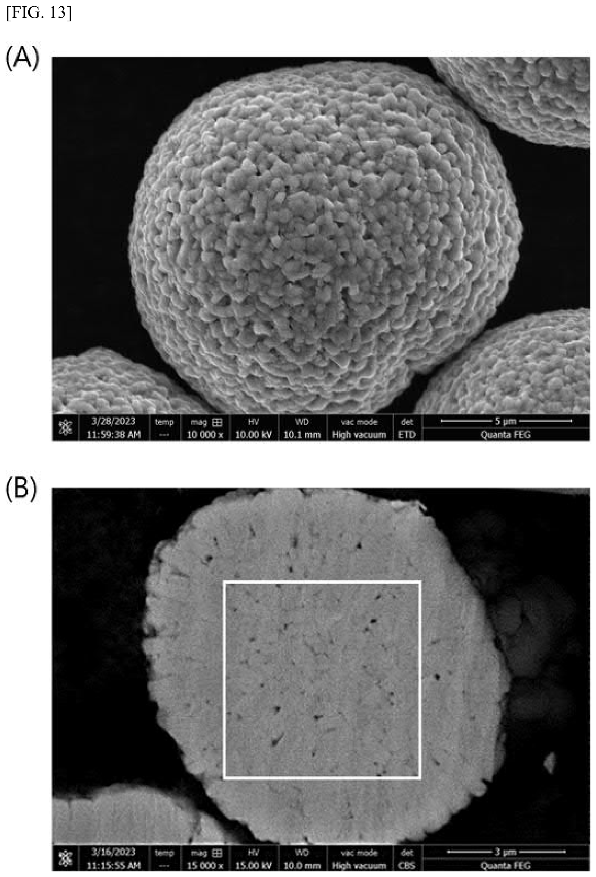

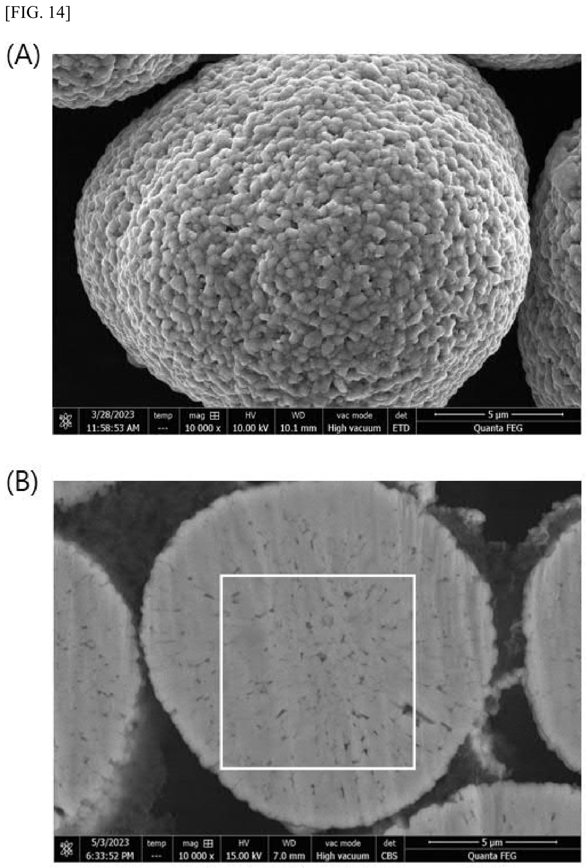

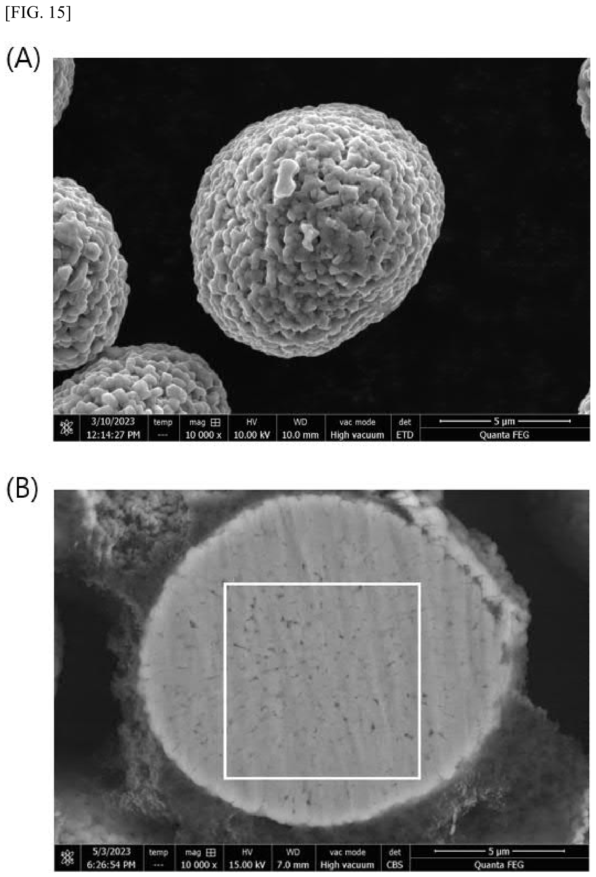

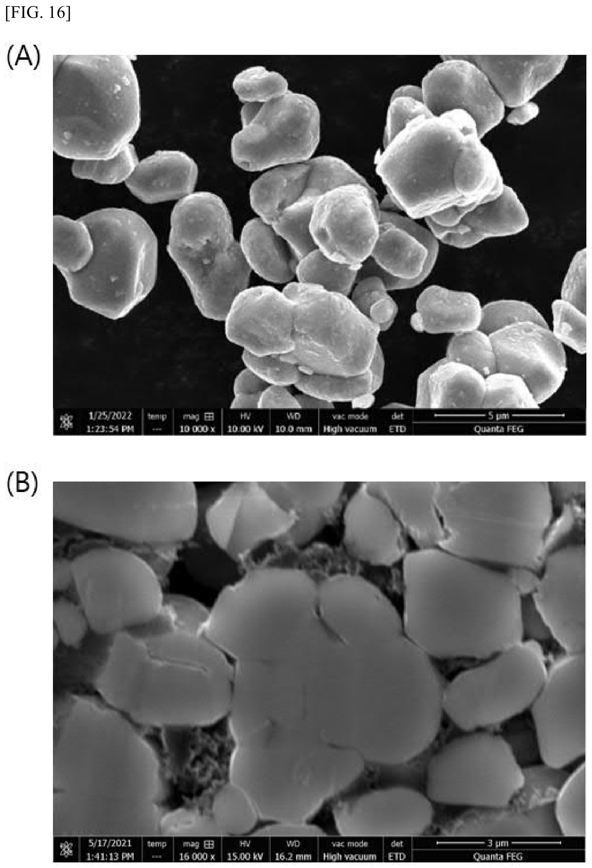

The positive electrode active materials prepared in Examples 1 to 11 and Comparative Examples 1 to 5 were respectively photographed using a scanning electron microscope (FEI quanta 250 FEG), and the SEM images of Examples 1 to 11 were sequentially shown in (A) of FIGS. 1 to 11, respectively, and the SEM images of Comparative Examples 1 to 5 were sequentially shown in (A) of FIGS. 12 to 16, respectively. From the SEM images, the average particle sizes of the primary particles present in each of the Examples and Comparative Examples were measured and shown in Table 1 below.

In addition, the positive electrode active materials prepared in Examples 1 to 11 and Comparative Examples 1 to 5 were respectively ion-milled and then photographed using a scanning electron microscope, and the SEM images of Examples 1 to 11 were sequentially shown in (B) of FIGS. 1 to 11, respectively, and the SEM images of Comparative Examples 1 to 5 were sequentially shown in (B) of FIGS. 12 to 16, respectively. In (B) of FIGS. 1 to 15, the white square represents a unit area of 5 $\mu$m in width X 5 $\mu$m in length set in the cross-section of the secondary particle for an SEM image of the cross-section of the secondary particle having a size within the range of the average particle diameter ($D_{50}$) of the secondary particle as observed from the SEM image of the cross-section of the secondary particle taken for the cross-section of the positive electrode active material, and the number of cross-sections of the primary particles identified within the above unit area is shown in Table 1 below.

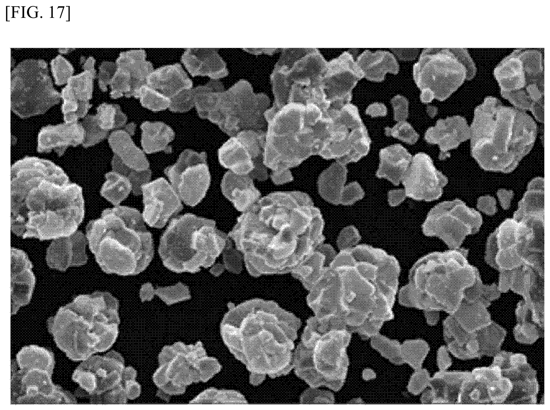

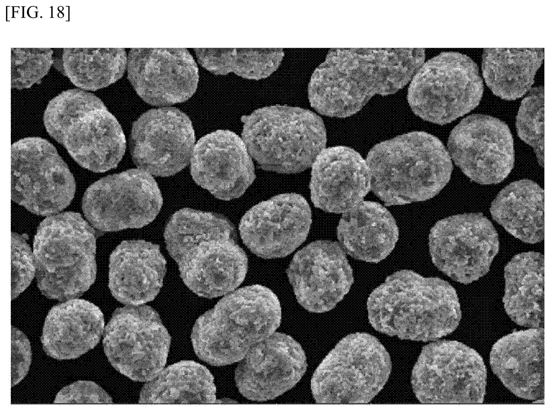

In addition, a segmentation image showing a plurality of lithium composite transition metal oxides segmented by performing image analysis based on an artificial intelligence model from the SEM image of Example 1 of the present invention was shown in FIG. 17, and a segmentation image of Comparative Example 1 was shown in FIG. 18.

[Table 1]

| Division | Average particle size of primary particles measured from SEM images ($\mu$m) | Number of cross-sections of primary particles within a unit area |
|---|---|---|
| Example 1 | 2.5 | 13 |
| Example 2 | 2.7 | 18 |
| Example 3 | 2.8 | 22 |
| Example 4 | 3.2 | 10 |
| Example 5 | 2.6 | 8 |
| Example 6 | 2.4 | 15 |
| Example 7 | 2.6 | 11 |
| Example 8 | 1.7 | 13 |
| Example 9 | 1.8 | 14 |
| Example 10 | 1.9 | 24 |
| Example 11 | 2.1 | 19 |
| Comparative Example 1 | < 0.5 | 120 |

(continued)

| Division | Average particle size of primary particles measured from SEM images (μm) | Number of cross-sections of primary particles within a unit area |
|---|---|---|
| Comparative Example 2 | < 0.5 | 161 |
| Comparative Example 3 | < 0.5 | 145 |
| Comparative Example 4 | < 0.5 | 127 |
| Comparative Example 5 | 4.0 | - |

**Experimental Example 2:** Particle Analysis 2

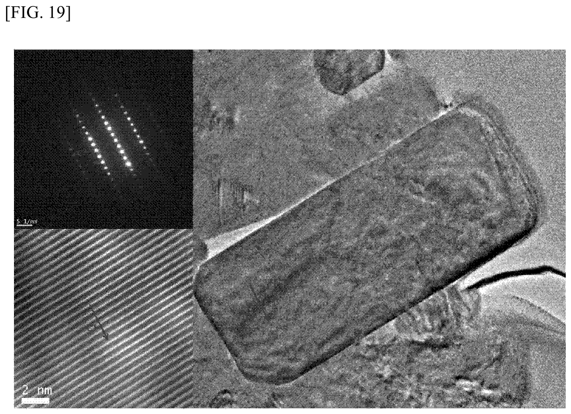

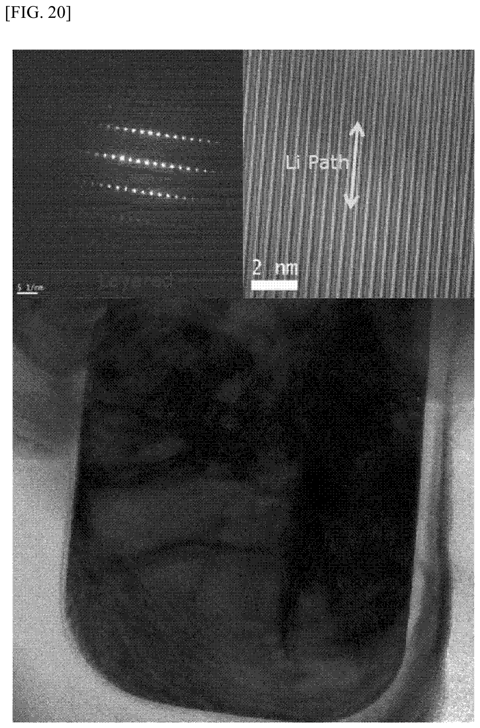

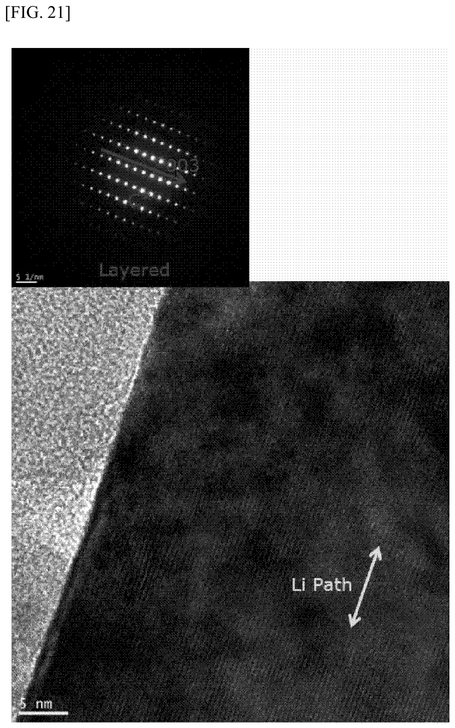

The positive electrode active materials prepared in Examples 1, 2, and 8 were respectively ion-milled and then photographed using a transmission electron microscope (FEI Titan cubed G2 60-300), and TEM images of cross-sections of the primary particles of the positive electrode active materials of Examples 1, 2, and 8 were sequentially shown in FIGS. 19 to 21, respectively.

Referring to FIGS. 1 to 11 and Table 1, it can be confirmed that the positive electrode active materials Examples 1 to 11 include a secondary particle in which a plurality of primary particles are aggregated, wherein the plurality of primary particles have an average particle size of 1.5 μm or more and 5.0 μm or less measured from an SEM image. In addition, it can be confirmed that the plurality of primary particles include three or more disk-type primary particles. In this case, the disk-type primary particle refers to a primary particle having interior angles on the same side of 150° or more and 210° or less when, with respect to two boundaries of primary particles existing within an angle of 45° or less based on the long diameter direction in primary particles observed from SEM images of the surface or cross-section of the secondary particles, imaginary tangent lines with a greatest number of contact points are drawn, and one imaginary line is drawn that intersects the two tangent lines. For reference, with respect to two boundaries of primary particles existing within an angle of 45° or less based on the red long diameter direction in (B) of FIGS. 1 to 11, when imaginary yellow tangent lines with a greatest number of contact points are drawn, one imaginary line (not shown) crossing the two yellow tangent lines satisfies the interior angles on the same side of 150° or more and 210° or less. The primary particle in this case is defined as the disk-type primary particle. In addition, it can be confirmed that the disk-type primary particles have a short diameter of 0.3 μm or more, and an aspect ratio (long diameter/short diameter) of 1.5 or more. In addition, it can be confirmed that the number of cross-sections of primary particles within a unit area is 1 or more and 100 or less. Specifically, it can be confirmed that the number of cross-sections of primary particles within a unit area is 8 or more and 24 or less.

In addition, referring to FIGS. 1 to 11 and 19 to 21, it can be seen that in the case of the positive electrode active material according to an embodiment of the present invention, the area ratio of the (003) plane among the crystal planes on the surface of the primary particle is the largest.

Meanwhile, it can be confirmed that in the case of the positive electrode active materials of Comparative Examples 1 to 4, the average particle size of the primary particles measured from the SEM image is small, less than 500 nm. In addition, it can be confirmed that the positive electrode active material of Comparative Example 5 does not include the disk-type primary particle.

In addition, referring to FIGS. 17 and 18, it can be confirmed that the positive electrode active material in accordance with an embodiment of the present invention includes single crystal primary particles.

**Experimental Example 3: Particle Analysis 3**

The positive electrode active materials prepared in Examples 1 to 11 and Comparative Examples 1 to 5 were respectively photographed using a scanning electron microscope provided with EBSD (FEI quanta 250 FEG).

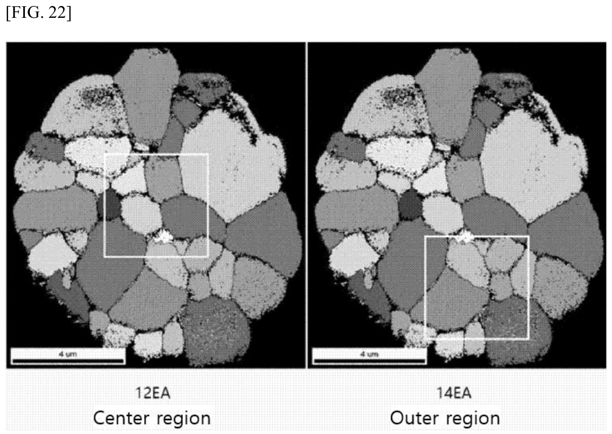

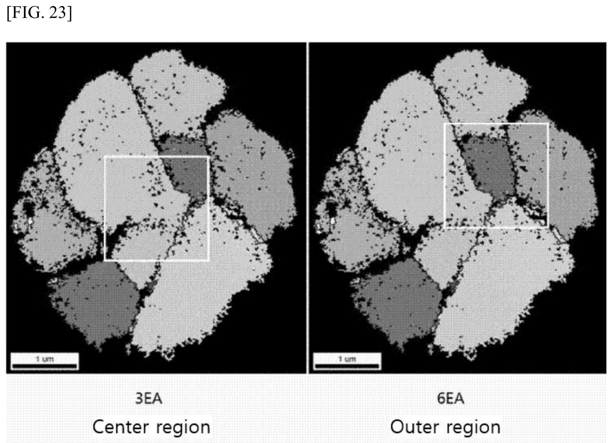

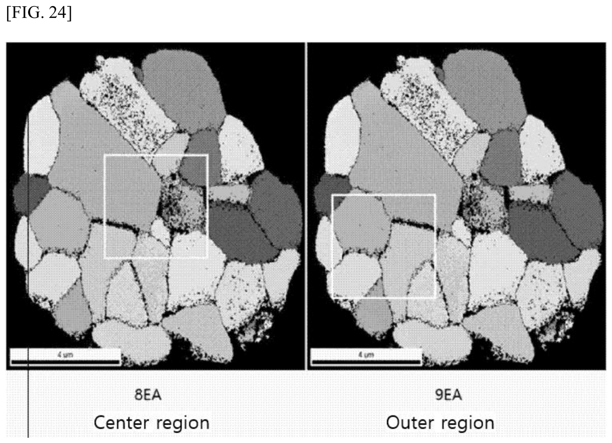

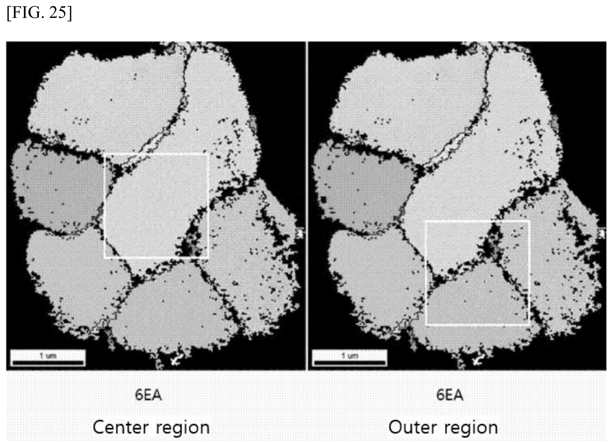

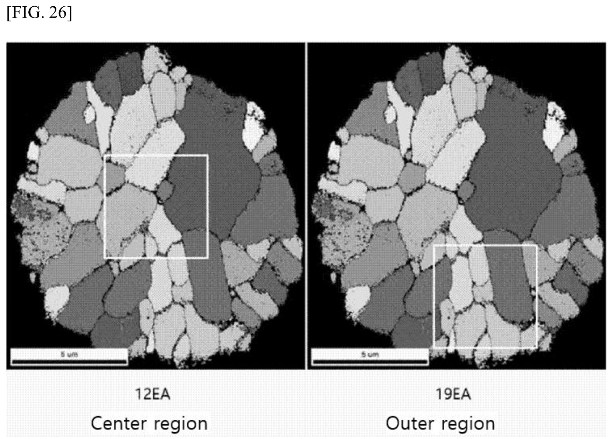

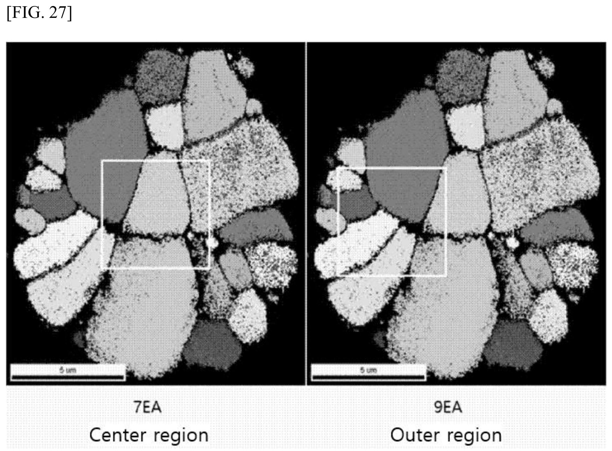

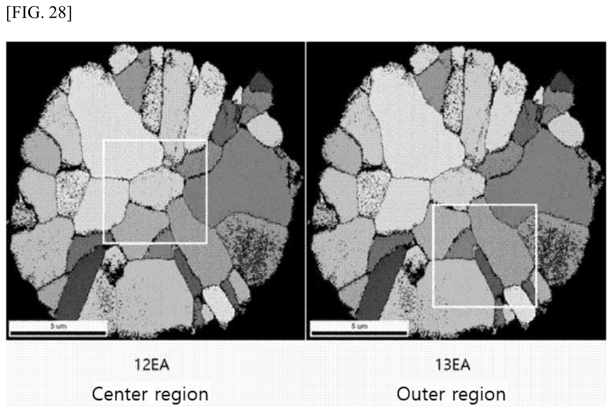

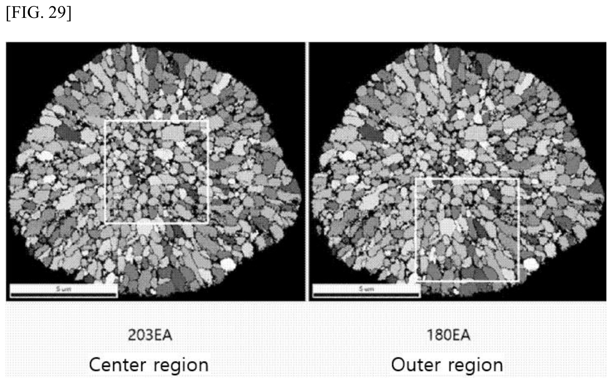

Among them, for the electron backscatter diffraction (EBSD) pattern of the cross-section of the secondary particle having a size within the range of the average particle diameter ($D_{50}$) of the secondary particle as observed from the EBSD pattern of the SEM image of the cross-section of the secondary particle taken for the cross-section of the positive electrode active material of Examples 1 to 4, 8, 10, and 11 and Comparative Example 3 (measured under the conditions of acceleration voltage 20 kV, WD 16 mm, measurement magnification 5,000 times (width 16 μm X height 16 μm), and step size 0.025 μm), unit areas of 5 μm in width and 5 μm in length in the cross-section of the secondary particle were set in the center region and the outer region, and shown in FIG. 22 (Example 1), FIG. 23 (Example 2), FIG. 24 (Example 3), FIG. 25 (Example 4), FIG. 26 (Example 8), FIG. 27 (Example 10), FIG. 28 (Example 11), and FIG. 29 (Comparative Example 3), respectively. Further, the number of cross-sections of the grains identified within the unit area, and the single crystallinity calculated according to Equation 1 below were shown in Table 2 below.

[Equation 1]

$$\text{Single crystallinity} = \frac{\sum_1^n \frac{4\pi}{3} \times radius(grain)^3}{n}$$

[Table 2]

| Division | Number of cross-sections of grains within the unit area in the center region | Number of cross-sections of grains within the unit area in the outer region | Single crystallinity ($\mu m^3$) |
|---|---|---|---|
| Example 1 | 12 | 14 | 0.86 |
| Example 2 | 3 | 6 | 0.90 |
| Example 3 | 8 | 9 | 0.92 |
| Example 4 | 6 | 6 | 0.98 |
| Example 5 | - | - | 0.87 |
| Example 6 | - | - | 0.87 |
| Example 7 | - | - | 0.88 |
| Example 8 | 12 | 19 | 1.09 |
| Example 9 | - | - | 1.20 |
| Example 10 | 7 | 9 | 1.57 |
| Example 11 | 12 | 13 | 1.56 |
| Comparative Example 1 | - | - | 0.046 |
| Comparative Example 2 | - | - | 0.040 |
| Comparative Example 3 | 203 | 180 | 0.050 |
| Comparative Example 4 | - | - | 0.070 |
| Comparative Example 5 | - | - | 3.1 |

Referring to Table 2, it can be confirmed that in the case of the positive electrode active materials of Examples 1 to 11, the number of cross-sections of grains within the unit area is 1 or more and 150 or less. Specifically, it can be confirmed that the number of cross-sections of grains within the unit area is 3 or more and 19 or less. Also, it can be confirmed that the single crystallinity is 0.15 $\mu m^3$ or more. Specifically, it can be confirmed that the single crystallinity is 0.86 $\mu m^3$ or more and 1.57 $\mu m^3$ or less.

**Experimental Example 4: Particle Analysis 4**

From the SEM image of the positive electrode active material obtained in Experimental Example 1, a degree of single-particle formation ($Dv_{50}$) corresponding to a diameter of a volume at 50% point of a cumulative volume distribution of the primary particles present in each of Examples and Comparative Examples was measured and shown in Table 3 below.
Specifically, the area of each primary particle is measured through the number of pixels corresponding to each of the n primary particles observed from images obtained by projecting the SEM images of the surfaces of secondary particles taken on the surfaces of the positive electrode active materials of Examples 1 to 11 and Comparative Examples 1 to 5 onto a two-dimensional plane. Thereafter, the radius of the surface of the primary particle was derived assuming that the surface of the primary particle is circular, that is, using the radius of a circle having the same surface area as that of each of the primary particles. Using the radius, a volume value was calculated according to Equation 5 below, and a degree of single-particle formation ($Dv_{50}$) corresponding to a diameter of a volume at 50% point of a cumulative volume distribution of the primary particles was calculated and shown in Table 3 below.

[Equation 5]

$$Volume = \frac{4\pi}{3} \times radius^3$$

[Table 3]

| Division | degree of single-particle formation ($DV_{50}$) ($\mu$m) |
|---|---|
| Example 1 | 2.23 |
| Example 2 | 2.24 |
| Example 3 | 2.26 |
| Example 4 | 3.51 |
| Example 5 | 2.34 |
| Example 6 | 2.21 |
| Example 7 | 2.33 |
| Example 8 | 1.69 |
| Example 9 | 1.70 |
| Example 10 | 1.72 |
| Example 11 | 2.83 |
| Comparative Example 1 | 1.05 |
| Comparative Example 2 | 1.01 |
| Comparative Example 3 | 0.80 |
| Comparative Example 4 | 0.87 |
| Comparative Example 5 | 3.48 |

Referring to Table 3, it can be confirmed that in the case of the positive electrode active materials of Examples 1 to 11, the degree of single-particle formation is 1.2 $\mu$m or more and 3.8 $\mu$m or less. Specifically, it can be confirmed that the degree of single-particle formation is 1.65 $\mu$m or more and 3.55 $\mu$m or less.

**Experimental Example 5: Particle Analysis 5**

For the positive electrode active materials prepared in Examples 1 to 11 and Comparative Examples 1 to 4, electron spectroscopy chemical analysis (ESCA) was performed using K-alpha XPS equipment from Thermo Fisher to analyze the elemental distribution of Co and B coating layers present on the surface. For depth profiling, etching was performed at a rate of 0.3 nm/10s using an Ar ion source, and the contents (atomic %) of each of B and Co contained in the coating layer with a thickness of 0 to 100 nm were measured, and the results were shown in Tables 4 (B coating layer) and 5 (Co coating layer), respectively.

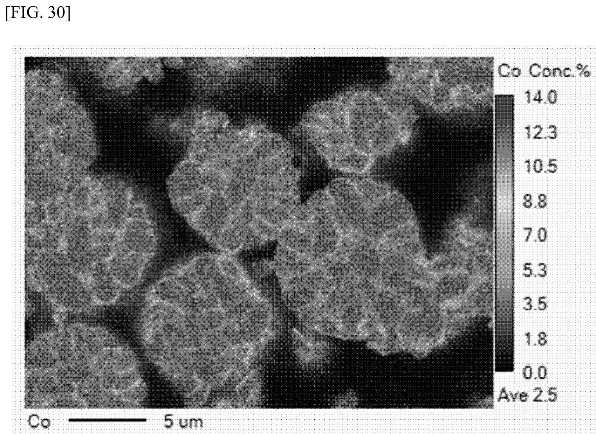

The positive electrode active material of Example 1 was subjected to EPMA cross-sectional analysis to confirm surface coating properties. First, the positive electrode active material of Example 1, a carbon black conductive material, and a PVDF binder were mixed in N-methyl pyrrolidone (NMP) solvent at a weight ratio of 95:2:3 to prepare a positive electrode slurry. The prepared positive electrode slurry was coated on one surface of an aluminum current collector, dried at 130°C, and rolled to have an electrode porosity of 20%, thereby preparing a positive electrode. In order to create a flat surface for EPMA cross-sectional analysis, the positive electrode was subjected to Ar-ion milling under an acceleration voltage of 6 kV using a HITACHI IM-5000 equipment to obtain a cross-section of the positive electrode sample, and then the cross-sectional image of the positive electrode sample was observed under the conditions of an acceleration voltage of 15 kV and a probe current of 50 nA using a JEOL JXA-iHP200F equipment and shown in FIG. 30.

[Table 4]

| Etchin g time (s) | 0 | 10 | 30 | 50 | 100 | 200 | 300 | 500 | 100 0 | 200 0 | 300 0 |
|---|---|---|---|---|---|---|---|---|---|---|---|
| Examp le 1 | 10.4 | 10.7 | 9.4 | 8.4 | 6.6 | 4.3 | 3.4 | 2.4 | 1.6 | 1.3 | 1 |
| Examp le 2 | 11 | 10.8 | 9.4 | 8.1 | 6.5 | 4 | 3.7 | 2.8 | 1.9 | 1.1 | 1 |
| Examp le 3 | 10.4 | 10.8 | 9.4 | 8.9 | 6.7 | 4.3 | 3.7 | 2.4 | 1.7 | 1.2 | 1 |
| Examp le 4 | 10.4 | 10.2 | 9.2 | 9 | 6.8 | 4.8 | 3.5 | 2.8 | 1.8 | 1.5 | 1 |
| Examp le 5 | 10.4 | 10.7 | 9.9 | 8.1 | 6.7 | 4.5 | 3.4 | 2.9 | 1.1 | 1.5 | 1 |
| Examp le 6 | 10.4 | 10.1 | 9.2 | 8.2 | 6.1 | 4.4 | 3.8 | 2.8 | 1.2 | 1.5 | 1 |
| Examp le 7 | 10.4 | 10.8 | 9.7 | 8.4 | 6.2 | 4 | 3 | 2.4 | 1.5 | 1.2 | 1 |
| Examp le 8 | 11.2 | 11.2 | 9.1 | 8.7 | 6.8 | 4.2 | 3.1 | 2.9 | 1.9 | 1.4 | 1 |
| Examp le 9 | 10.7 | 10.7 | 9.1 | 8.1 | 6.4 | 4.9 | 3 | 2.8 | 1.7 | 1.5 | 1 |
| Examp le 10 | 10.7 | 10.8 | 9.4 | 8 | 6.4 | 4.2 | 3.4 | 2.5 | 1.8 | 1.5 | 1 |
| Examp le 11 | 11 | 11.2 | 9.2 | 8.7 | 6.1 | 4.5 | 3.7 | 2.9 | 1.9 | 1.5 | 1 |
| Compa rative Examp le 1 | 16.4 | 17.5 | 15.1 | 14.8 | 11.8 | 8.9 | 7 | 5.9 | 3.5 | 2.4 | 1.5 |
| Compa rative Examp le 2 | 16 | 17.5 | 14.8 | 14.8 | 12 | 8.7 | 7.8 | 5.1 | 3 | 2 | 1 |
| Compa rative Examp le 3 | 16 | 16.8 | 15.1 | 14.8 | 11.4 | 8.8 | 7.5 | 5.9 | 3.5 | 1.9 | 1.5 |
| Compa rative Examp le 4 | 15.4 | 16.4 | 15 | 14.8 | 11.2 | 8.7 | 7 | 5.5 | 3.8 | 2 | 1.1 |

[Table 5]

| Etching time (s) | 0 | 10 | 30 | 50 | 100 | 200 | 300 | 500 | 100 0 | 200 0 | 300 0 |
|---|---|---|---|---|---|---|---|---|---|---|---|
| Exampl e 1 | 1.8 | 3 | 4.5 | 5.4 | 5.9 | 4.8 | 3.9 | 2.2 | 1.1 | 0.9 | 0.8 |
| Exampl e 2 | 1.7 | 2.9 | 4.9 | 5.1 | 6 | 4.5 | 3.8 | 2.1 | 1.2 | 1 | 1 |
| Exampl e 3 | 1.6 | 2.6 | 4.5 | 5.1 | 6.1 | 4.6 | 3.9 | 2 | 1 | 0.7 | 0.7 |
| Exampl e 4 | 1.9 | 2.7 | 4.1 | 5.2 | 6.2 | 4.7 | 3.4 | 2.4 | 1.2 | 0.8 | 0.8 |
| Exampl e 5 | 1.7 | 2.8 | 4.2 | 5.3 | 5.8 | 4.7 | 4 | 1.9 | 1.1 | 0.9 | 0.9 |
| Exampl e 6 | 2 | 2.8 | 4.2 | 5.5 | 5.9 | 4.8 | 3.7 | 2 | 0.9 | 0.7 | 0.8 |
| Exampl e 7 | 1.8 | 2.7 | 4.5 | 5.4 | 5.5 | 4.9 | 3.8 | 2.1 | 1.1 | 0.9 | 0.6 |
| Exampl e 8 | 1.6 | 3 | 4.5 | 5.3 | 5.9 | 4.5 | 3.5 | 2.2 | 1.3 | 1 | 0.7 |
| Exampl e 9 | 1.7 | 3.1 | 4.2 | 5.3 | 5.9 | 4.8 | 3.8 | 2.1 | 1 | 1.1 | 0.9 |
| Exampl e 10 | 2 | 3.1 | 4.4 | 5.1 | 6 | 4.9 | 3.9 | 2 | 1.2 | 0.9 | 0.8 |
| Exampl e 11 | 1.9 | 3.3 | 4.5 | 5.1 | 6.1 | 4.9 | 4 | 2.1 | 0.9 | 1.1 | 0.7 |
| Compar ative Exampl e 1 | 0 | 0.1 | 0.1 | 0.3 | 0.3 | 0.3 | 0.4 | 0.8 | 0.9 | 0.9 | 0.6 |
| Compar ative Exampl e 2 | 0 | 0.1 | 0.2 | 0.3 | 0.2 | 0.4 | 0.5 | 0.7 | 0.8 | 0.6 | 0.5 |
| Compar ative Exampl e 3 | 0.1 | 0.1 | 0.2 | 0.2 | 0.3 | 0.5 | 0.4 | 0.7 | 0.7 | 0.8 | 1.0 |
| Compar ative Exampl e 4 | 0.1 | 0.2 | 0.1 | 0.2 | 0.3 | 0.3 | 0.4 | 0.7 | 0.7 | 0.8 | 1.0 |

Referring to the SEM images of FIGS. 1 to 11 and Tables 4, 5, and 30 above, it can be confirmed that in the case of the positive electrode active materials of Examples 1 to 11, the coating part including Co and/or B is formed on the surface of the primary particle, the interface of the primary particle, and/or the surface of the secondary particle. In addition, it can be seen that the coating part has both an island type formed on a portion of the surface of the primary particle, the interface of the primary particle, and/or the surface of the secondary particle, and a coating layer type formed to surround the surface of the primary particle, the interface of the primary particle, and/or the surface of the secondary particle.

Experimental Example 6: Cumulative Volume Distribution Analysis

For the positive electrode active materials prepared in Examples 1 to 11 and Comparative Examples 1 to 5, $D_{min}$, $D_{50}$ and $D_{max}$, mode value (Mode) in the cumulative volume distribution according to particle diameter, y value ($P_{MODE}$) of the peak point at the top of the y-axis of the peak appearing in the mode value (Mode) according to the cumulative volume distribution, $\theta_L$ and $\theta_R$ were measured using a particle size analyzer (PSD, Malvern, martersizer 3500) and $\theta_L$ - $\theta_R$ was calculated and shown in table 6 below.

Further, the skewness value (S) was calculated from Equation 3 below, and the ratio ($S/P_{MODE}$) of the skewness value (S) to the y value ($P_{MODE}$) of the peak point at the top of the y-axis of the peak appearing in the mode according to the cumulative volume distribution was calculated and shown in Table 6 below.

$$\text{Skewness value (S)} = 3 \times \{(\text{volume average particle diameter}) - (D_{50})\} / (\text{standard deviation of positive electrode active material particle diameter}) \qquad \text{[Equation 3]}$$

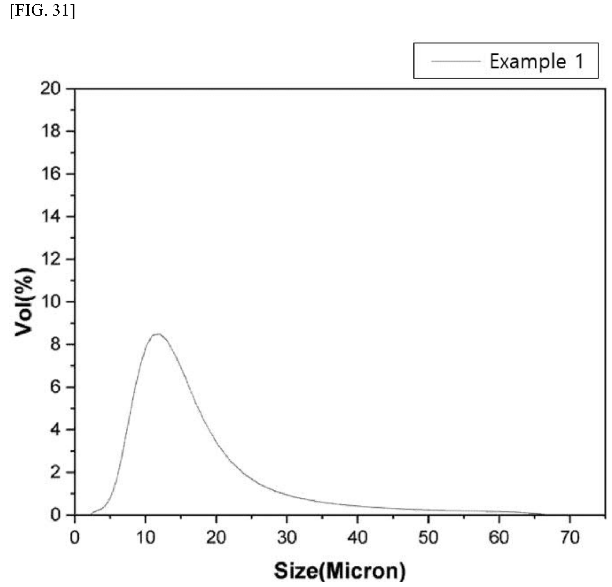

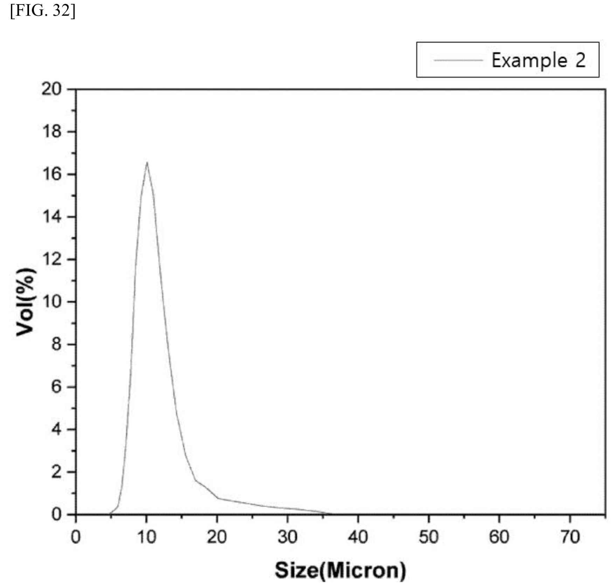

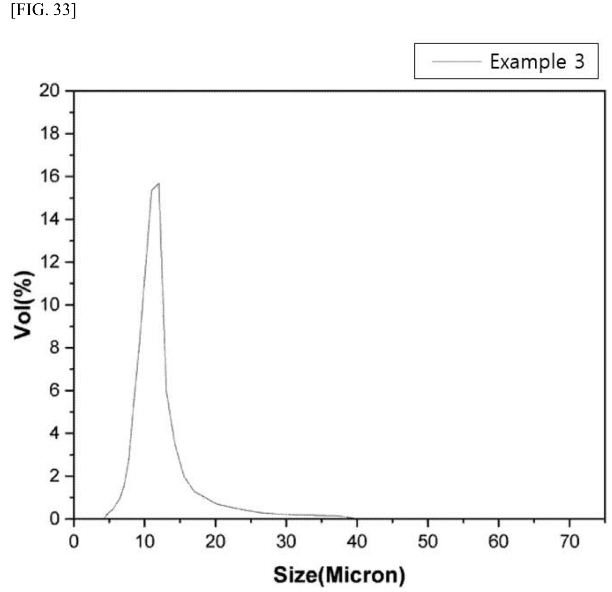

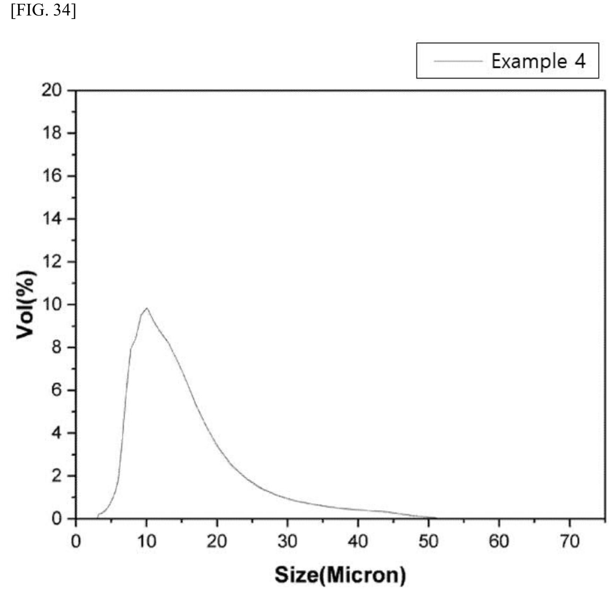

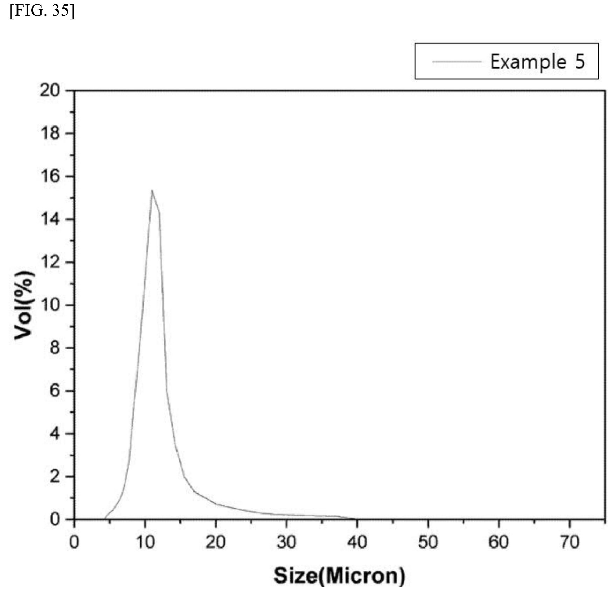

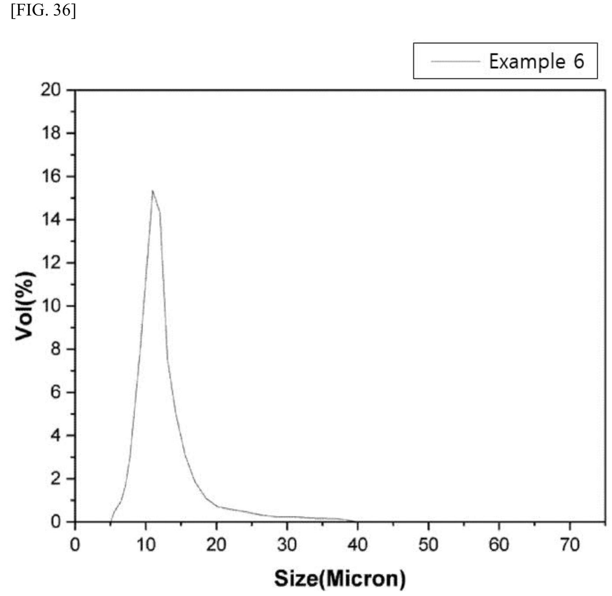

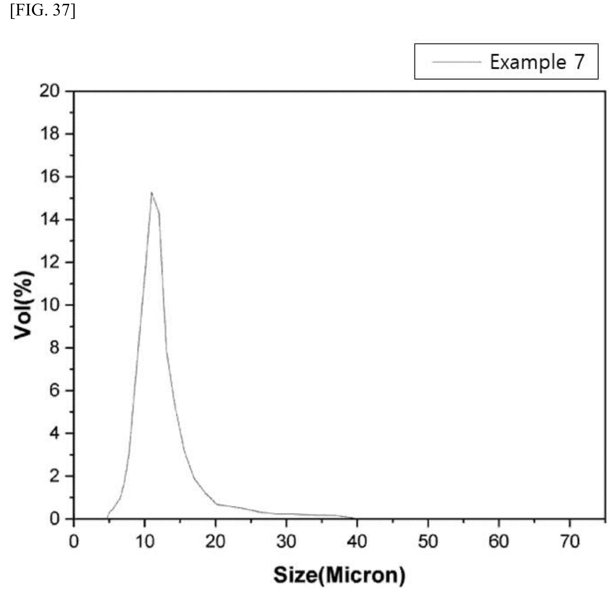

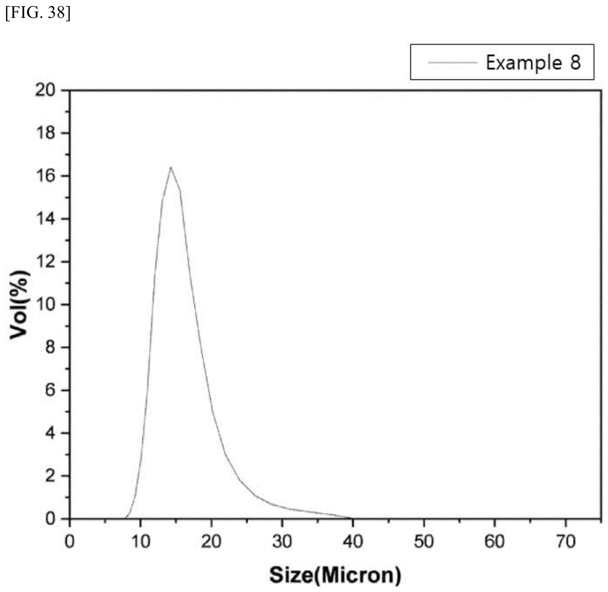

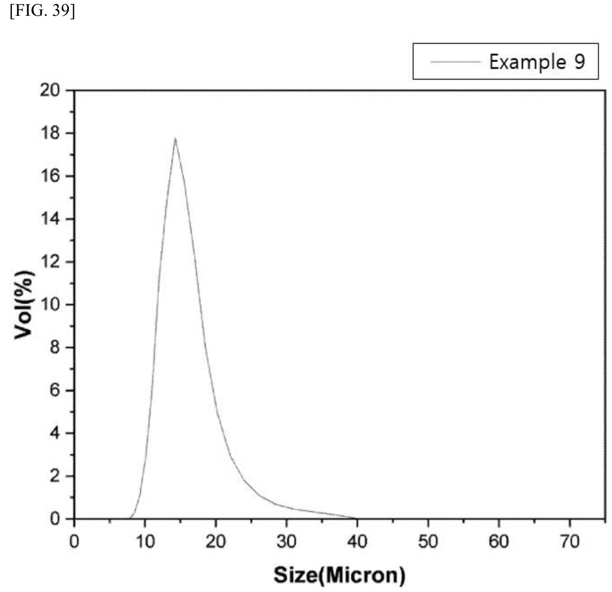

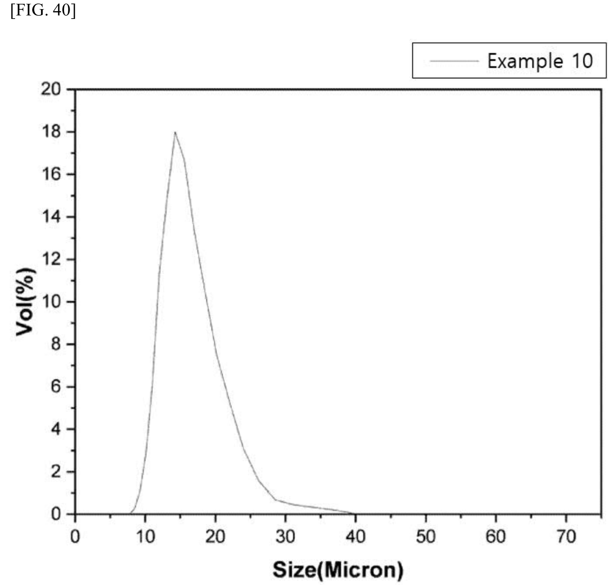

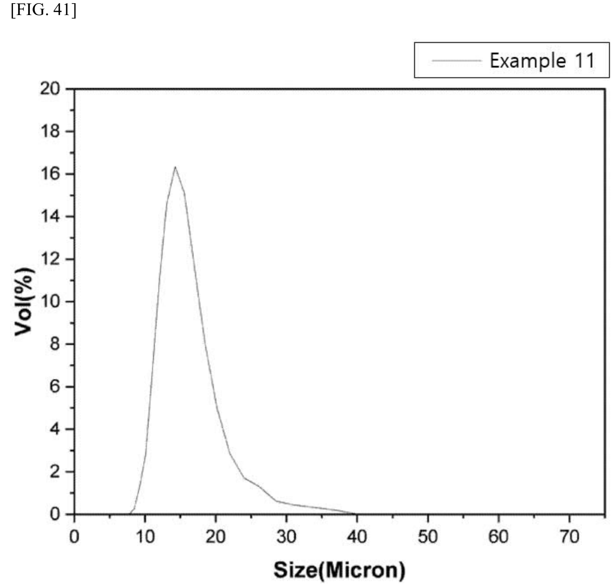

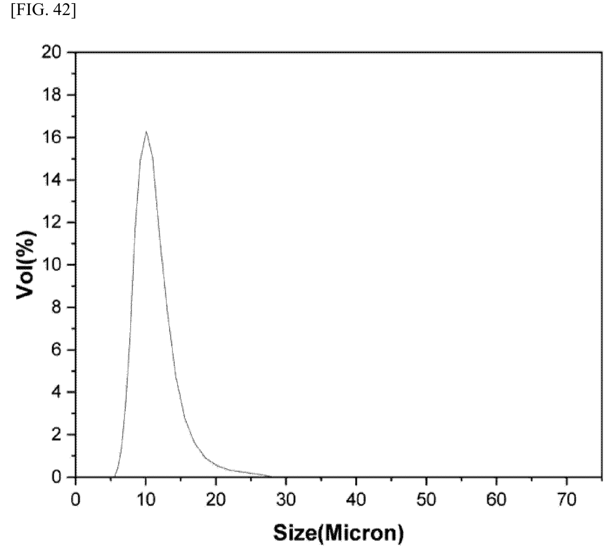

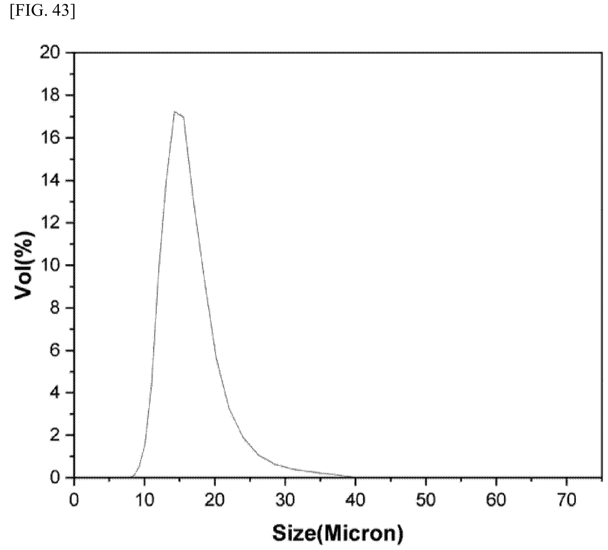

Furthermore, frequency distribution graphs showing the cumulative volume distribution of the positive electrode active materials of Examples 1 to 11 and Comparative Examples 1 and 3 measured using a laser diffraction particle size analyzer, wherein the x-axis represents a linear scale for particle diameter with x-values increasing from left to right, and the y-axis represents weight distribution with y-values increasing from bottom to top were shown in FIG. 31 (Example 1), FIG. 32 (Example 2), FIG. 33 (Example 3), FIG. 34 (Example 4), FIG. 35 (Example 5), FIG. 36 (Example 6), FIG. 37 (Example 7), FIG. 38 (Example 8), FIG. 39 (Example 9), FIG. 40 (Example 10), FIG. 41 (Example 11), FIG. 42 (Comparative Example 1), and FIG. 43 (Comparative Example 3), respectively.

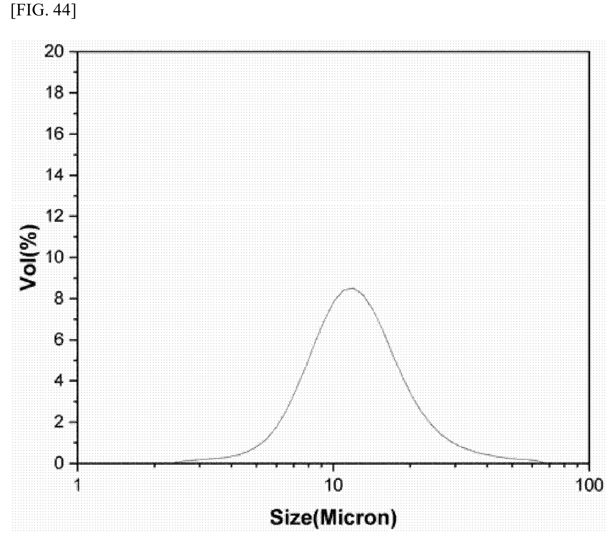

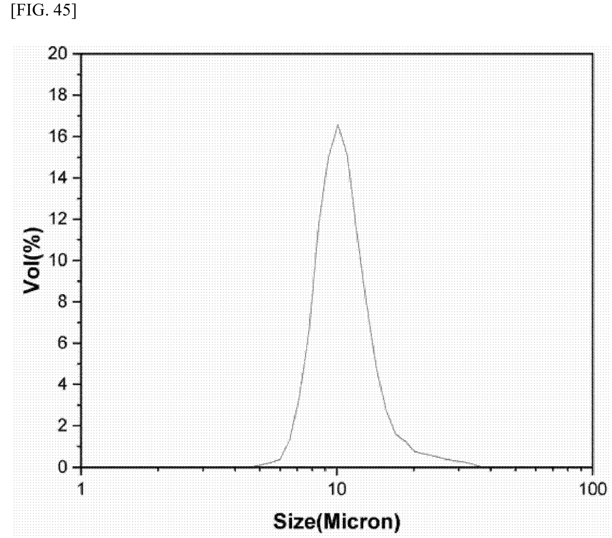

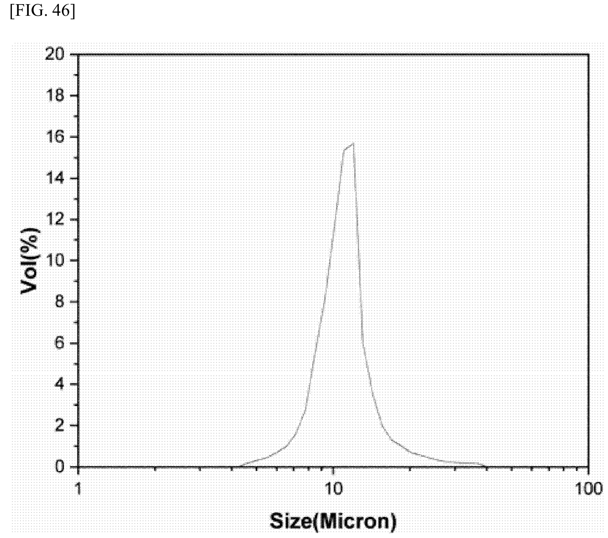

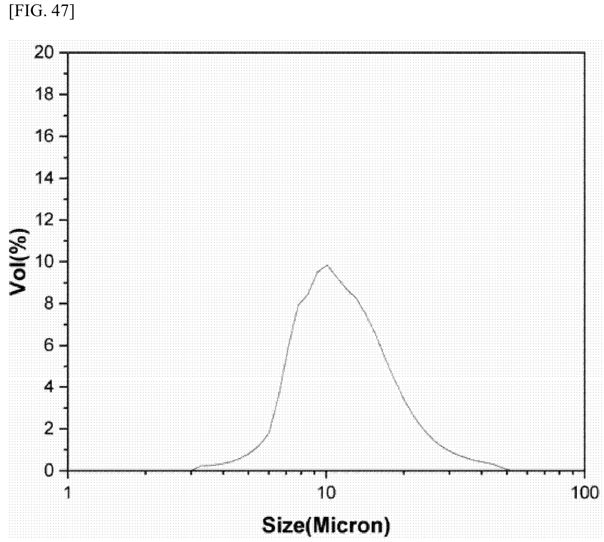

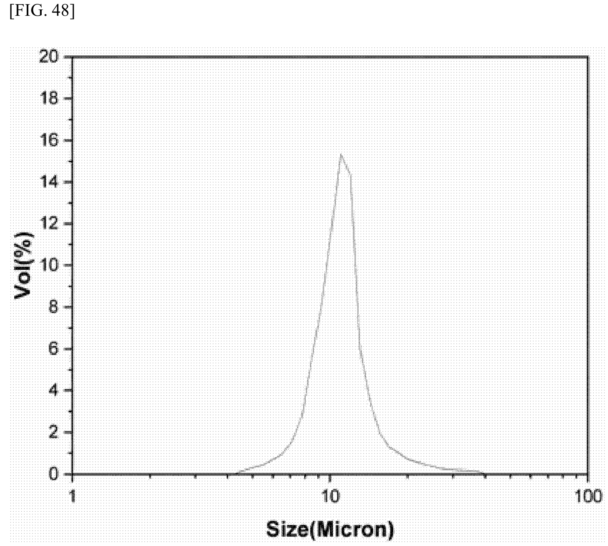

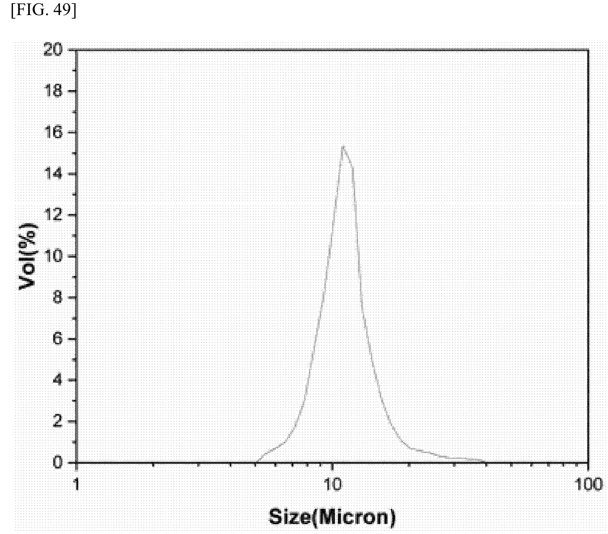

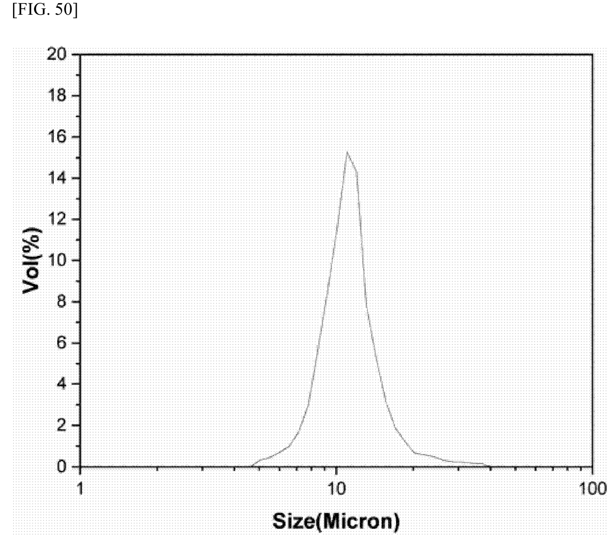

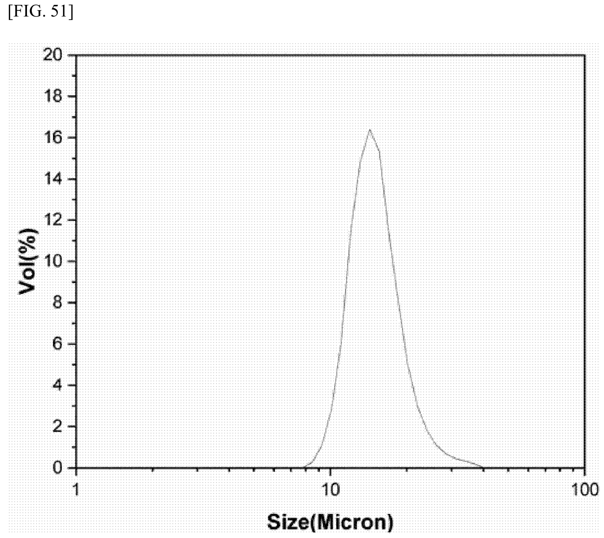

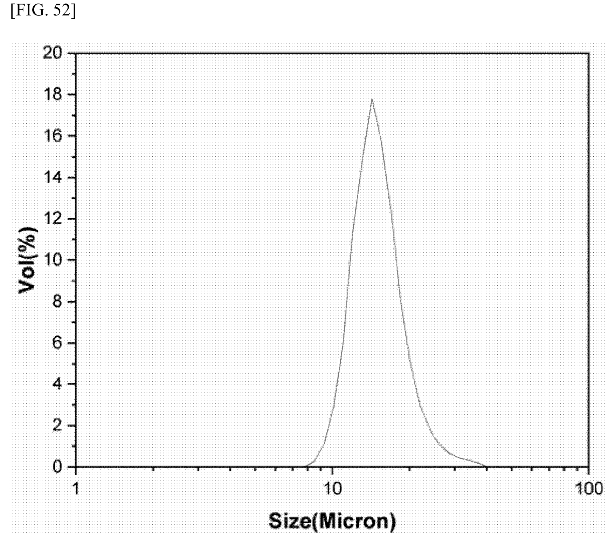

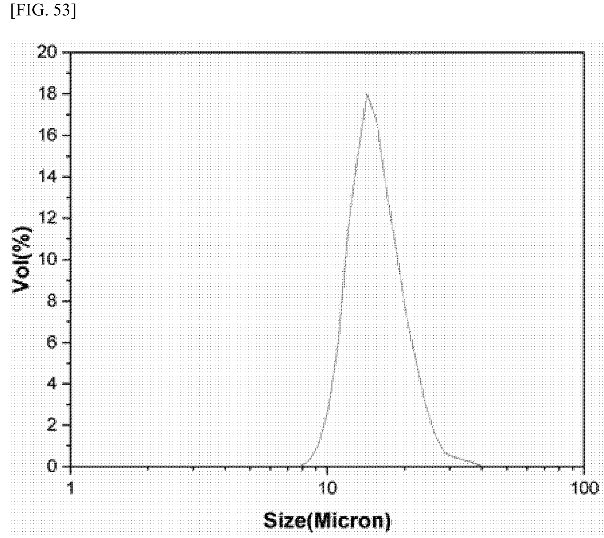

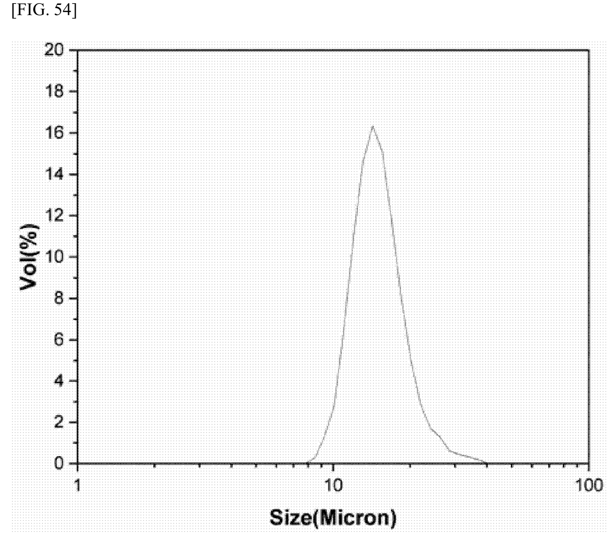

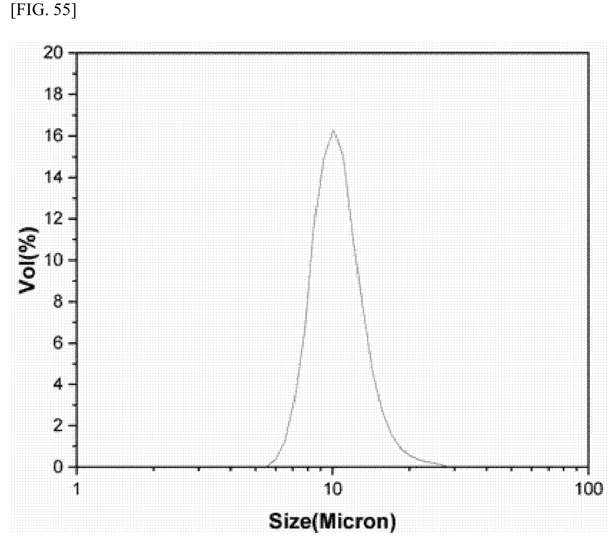

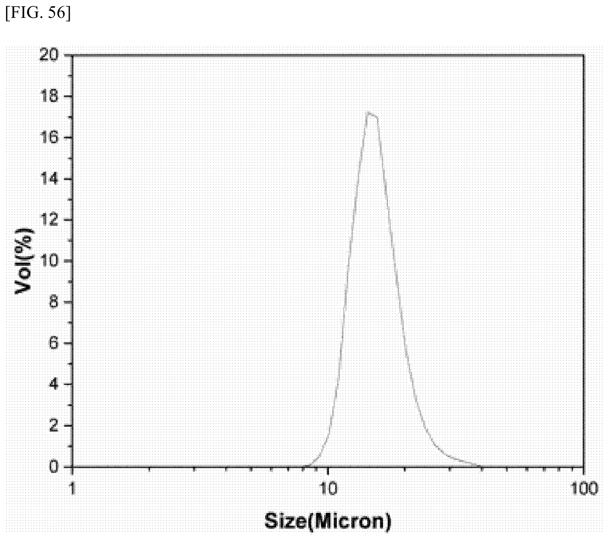

In addition, frequency distribution graphs showing the cumulative volume distribution of the positive electrode active materials of Examples 1 to 11 and Comparative Examples 1 and 3 measured using a laser diffraction particle size analyzer, wherein the x-axis represents a log scale for particle diameter with x-values increasing from left to right, and the y-axis represents weight distribution with y-values increasing from bottom to top were shown in FIG. 44 (Example 1), FIG. 45 (Example 2), FIG. 46 (Example 3), FIG. 47 (Example 4), FIG. 48 (Example 5), FIG. 49 (Example 6), FIG. 50 (Example 7), FIG. 51 (Example 8), FIG. 52 (Example 9), FIG. 53 (Example 10), FIG. 54 (Example 11), FIG. 55 (Comparative Example 1) and FIG. 56 (Comparative Example 3), respectively.

[Table 6]

| Division | $D_{min}$ (μm) | $D_{50}$ (μm) | $D_{max}$ (μm) | Mode (μm) | $P_{MODE}$ | Skewness value (S) | $S/P_{MODE}$ | $\theta_L$ | $\theta_R$ | $\theta_L/\theta_R$ | $\theta_L - \theta_R$ |
|---|---|---|---|---|---|---|---|---|---|---|---|
| Example 1 | 2.52 | 11.47 | 62.23 | 12.00 | 8.51 | 0.926 | 0.109 | 47.980 | 33.161 | 1.447 | 14.819 |
| Example 2 | 5.04 | 10.32 | 37.00 | 10.60 | 13.72 | 1.037 | 0.076 | 71.684 | 63.089 | 1.136 | 8.595 |
| Example 3 | 4.62 | 9.87 | 37.00 | 9.92 | 12.98 | 0.587 | 0.045 | 71.215 | 62.582 | 1.138 | 8.633 |
| Example 4 | 3.27 | 10.06 | 52.33 | 10.50 | 12.75 | 1.007 | 0.079 | 50.345 | 42.751 | 1.235 | 7.594 |
| Example 5 | 5.04 | 9.95 | 37.00 | 10.37 | 12.25 | 0.744 | 0.061 | 72.135 | 65.421 | 1.103 | 6.714 |
| Example 6 | 5.50 | 10.62 | 40.35 | 10.60 | 13.32 | 1.017 | 0.076 | 72.842 | 65.95 | 1.105 | 6.892 |
| Example 7 | 5.04 | 10.29 | 37.00 | 10.09 | 13.06 | 0.761 | 0.058 | 72.753 | 65.005 | 1.119 | 7.748 |
| Example 8 | 8.48 | 14.07 | 37.00 | 14.27 | 16.42 | 0.658 | 0.040 | 71.521 | 64.757 | 1.104 | 6.764 |

(continued)

| Division | $D_{min}$ (μm) | $D_{50}$ (μm) | $D_{max}$ (μm) | Mode (μm) | $P_{MODE}$ | Skewness value (S) | S/P MODE | $\theta_L$ | $\theta_R$ | $\theta_L/\theta_R$ | $\theta_L - \theta_R$ |
|---|---|---|---|---|---|---|---|---|---|---|---|
| Example 9 | 8.48 | 14.13 | 37.00 | 14.27 | 16.31 | 0.800 | 0.049 | 70.695 | 63.295 | 1.117 | 7.400 |
| Example 10 | 8.48 | 14.20 | 37.00 | 14.27 | 16.28 | 0.781 | 0.048 | 70.538 | 62.812 | 1.123 | 7.726 |
| Example 11 | 8.48 | 14.27 | 37.00 | 14.27 | 16.30 | 0.755 | 0.046 | 70.774 | 63.004 | 1.123 | 7.770 |
| Comparative Example 1 | 6.54 | 9.85 | 26.16 | 10.09 | 16.90 | 0.596 | 0.035 | 75.646 | 71.020 | 1.065 | 4.626 |
| Comparative Example 2 | 7.13 | 11.82 | 37.00 | 12.00 | 14.52 | 0.411 | 0.028 | 78.621 | 73.026 | 1.077 | 5.595 |
| Comparative Example 3 | 5.04 | 9.95 | 37.00 | 10.37 | 18.01 | 0.653 | 0.036 | 72.135 | 70.860 | 1.018 | 1.275 |
| Comparative Example 4 | 5.50 | 10.62 | 40.35 | 10.60 | 12.01 | 1.825 | 0.152 | 72.842 | 68.952 | 1.056 | 3.89 |
| Comparative Example 5 | 2.00 | 4.30 | 18.05 | 4.46 | 10.36 | 0.325 | 0.031 | 53.215 | 24.360 | 2.185 | 28.855 |

Referring to Table 6, it can be confirmed that in the case of the positive electrode active materials of Examples 1 to 11, the $D_{50}$ is 7.0 μm or more and 20.0 μm or less. Additionally, it can be confirmed that the ($\theta_L - \theta_R$) value is 6 or more and 20 or less. In addition, it can be seen that positive skewness is shown in the frequency distribution graph showing a cumulative volume distribution of the positive electrode active material measured using a laser diffraction particle size analyzer, wherein the x-axis represents a linear scale for particle diameter with x-values increasing from left to right, and the y-axis represents weight distribution with y-values increasing from bottom to top.

**Experimental Example 7: Measurement of Rolling Density**

Using an Auto Pellet Press (Carver, 3887.4), the zero point for the thickness was adjusted using a cylindrical mold for a circular pellet holder with a diameter of 13 mm. Then, 3 g of each of the positive electrode active materials prepared in Examples 1 to 11 and Comparative Examples 1 to 5 were taken into the circular pellet holder, and force was applied until the force equivalent to 9,000 kgf was reached to form pellets, and the thickness of the pellets were measured. Subsequently, the pellet volume and rolling density were calculated using Equations 4 and 2 below, respectively, and shown in Table 7 below.

[Equation 4]

$$\text{Pellet volume (cm}^3) = \pi \text{ (radius of circular pellet holder)}^2 \text{ X pellet thickness}$$

Rolling density (g/cm$^3$) = weight of positive electrode active material (g) / pellet volume (cm$^3$)          [Equation 2]

[Table 7]

| Division | Rolling density (g/cm$^3$) |
|---|---|
| Example 1 | 3.67 |
| Example 2 | 3.68 |
| Example 3 | 3.67 |
| Example 4 | 3.69 |
| Example 5 | 3.68 |
| Example 6 | 3.66 |
| Example 7 | 3.69 |
| Example 8 | 3.75 |
| Example 9 | 3.76 |
| Example 10 | 3.74 |
| Example 11 | 3.76 |
| Comparative Example 1 | 3.27 |
| Comparative Example 2 | 3.30 |
| Comparative Example 3 | 3.49 |
| Comparative Example 4 | 3.46 |
| Comparative Example 5 | 3.50 |

Referring to Table 7, it can be confirmed that in the case of the positive electrode active materials of Examples 1 to 11, the rolling density is 3.60 g/cm$^3$ or more. Specifically, it can be confirmed that the rolling density is 3.66 g/cm$^3$ or more.

**Experimental Example 8: Measurement** of BET Specific Surface Area

The specific surface area was measured by nitrogen gas adsorption and desorption methods. Specifically, after the weight of an empty cell was measured, 3 g of each of the positive electrode active materials prepared in Examples 1 to 11 and Comparative Examples 1 to 5 was taken, and pretreated at 130°C for 3 hours. After measuring the weight of the cell after the pretreatment process, a dewar container containing liquid nitrogen was prepared, and the cell was fastened. The BET specific surface area was measured from the amount of nitrogen gas adsorbed using a gas adsorption analyzer (Micromeritics TriStarr II) under a nitrogen atmosphere, and shown in Table 8 below.

[Table 8]

| Division | Specific surface area (m$^2$/g) |
|---|---|
| Example 1 | 0.305 |
| Example 2 | 0.294 |
| Example 3 | 0.240 |
| Example 4 | 0.305 |
| Example 5 | 0.312 |
| Example 6 | 0.322 |

(continued)

| Division | Specific surface area (m²/g) |
|---|---|
| Example 7 | 0.307 |
| Example 8 | 0.332 |
| Example 9 | 0.328 |
| Example 10 | 0.270 |
| Example 11 | 0.338 |
| Comparative Example 1 | 0.504 |
| Comparative Example 2 | 0.592 |
| Comparative Example 3 | 0.631 |
| Comparative Example 4 | 0.729 |
| Comparative Example 5 | 0.748 |

Referring to Table 8, it can be confirmed that in the case of the positive electrode active materials of Examples 1 to 11, the BET specific surface area is 0.20 m²/g or more and 0.35 m²/g or less. Specifically, it can be confirmed that the BET specific surface area is 0.240 m²/g or more and 0.338 m²/g or less.

Experimental Example 9: Manufacturing and Charging/Discharging Evaluation of Coin-type Half-cells

95 parts by weight of each of the positive electrode active materials prepared in Examples 1 to 11 and Comparative Examples 1 to 5, 2 parts by weight of a conductive material (Denka, FX35), and 3 parts by weight of a binder (KUREHA, KF9709) were mixed in an N-methylpyrrolidone (NMP) solvent to prepare a positive electrode slurry. The prepared positive electrode slurry was coated on one surface of an aluminum current collector having a thickness of 20 μm and rolled so that the porosity of the positive electrode active material layer was 24% by volume, thereby preparing a positive electrode.

An electrode assembly was manufactured by using a lithium metal electrode as an -anode and interposing a porous polyethylene separator between the - anode and the positive electrode. This electrode assembly was placed inside a battery case and an electrolyte was injected to manufacture a lithium secondary battery. In this case, the electrolyte was prepared by dissolving 1 M $LiPF_6$ in an organic solvent prepared by mixing ethylene carbonate (EC):ethyl methyl carbonate (EMC):dimethyl carbonate (DMC) in a volume ratio of 3:3:4.

For the lithium secondary batteries including the positive electrode active materials of Examples 1 to 11 and Comparative Examples 1 to 5 prepared above, the charge capacity and discharge capacity were measured by charging in CC/CV mode up to 4.25 V at constant current of 0.1 C at 25°C (end current 0.05 C) and then discharging in CC mode until 2.5 V, and shown in Table 9 below. Here, 1 C = 200 mA/g was set.

In addition, the lithium secondary batteries prepared above were repeatedly charged and discharged for 50 cycles, wherein one cycle consists of charging in CC/CV mode up to 4.25 V at constant current of 0.5 C at 45°C (end current 0.05 C) and then discharging in CC mode until 2.5 V at constant current of 1.0 C, and the percentage of the discharge capacity of the 50th cycle compared to the discharge capacity of the first cycle was taken as the capacity retention rate, and shown in Table 9 below.

[Table 9]

| Division | Charging cap acit y | Dischargin g capa city | Efficien c y | Direct current resistan ce | High-temperature (45°C) capacity retention rate |
|---|---|---|---|---|---|
| | (mAh/g) | (mAh/g) | (%) | (Ω) | (%) |
| Example 1 | 233.6 | 209.0 | 89.5 | 18.5 | 96.17 |
| Example 2 | 233.4 | 208.4 | 89.3 | 20.2 | 96.30 |
| Example 3 | 233.6 | 207.1 | 88.7 | 20.4 | 96.93 |
| Example 4 | 231.1 | 205.8 | 89.1 | 19.4 | 96.57 |
| Example 5 | 232.6 | 207.7 | 89.3 | 18.4 | 95.80 |

(continued)

| Division | Charging capacity | Dischargin g capa city | Efficien c y | Direct current resistan ce | High-temperature (45°C) capacity retention rate |
|---|---|---|---|---|---|
| | (mAh/g) | (mAh/g) | (%) | (Ω) | (%) |
| Example 6 | 231.7 | 208.7 | 90.1 | 18.2 | 96.20 |
| Example 7 | 232.0 | 207.9 | 89.6 | 13.2 | 96.50 |
| Example 8 | 247.9 | 216.5 | 87.3 | 29.2 | 93.67 |
| Example 9 | 247.6 | 216.3 | 87.3 | 30.2 | 94.00 |
| Example 10 | 247.4 | 215.1 | 86.9 | 30.2 | 95.45 |
| Example 11 | 245.9 | 212.4 | 86.4 | 30.5 | 94.92 |
| Comparati ve Exa mpl e 1 | 232.4 | 212.1 | 91.3 | 19.6 | 94.90 |
| Comparati ve Exa mpl e 2 | 231.1 | 211.7 | 91.6 | 20.4 | 94.50 |
| Comparati ve Exa mpl e 3 | 242.6 | 222.8 | 91.8 | 24.5 | 95.20 |
| Comparati ve Exa mpl e 4 | 242.9 | 223.4 | 92.0 | 23.1 | 95.30 |
| Comparati ve Exa mpl e 5 | 232.3 | 198.6 | 85.5 | 26.0 | 95.00 |

**Experimental Example 10: Evaluation of High-Rate Discharge Capacity**

For the lithium secondary battery prepared in Experimental Example 9, the discharge capacity was measured by charging in CC/CV mode up to 4.25 V at constant current of 0.5 C at 25°C (end current 0.05 C) and then discharging in CC mode until 2.5 V at constant current of 0.1 C. In addition, the discharge capacity was measured by charging in CC/CV mode up to 4.25 V at constant current of 0.5 C at 25°C (end current 0.05 C) and then discharging in CC mode until 2.5 V at constant current of 1.0 C; the discharge capacity was measured by charging in CC/CV mode up to 4.25 V at constant current of 0.5 C at 25°C (end current 0.05 C) and then discharging in CC mode until 2.5 V at constant current of 2.0 C, and the percentage compared to the discharge capacity when charging at 0.5 C and then discharging at 0.1 C is shown in Table 10 below.

[Table 10]

| Division | (1.0 C discharge capacity) / (0.1 C discharge capacity) $\times$ 100 (%) | (2.0 C discharge capacity) / (0.1 C discharge capacity) $\times$ 100 (%) |
|---|---|---|
| Example 1 | 92.77 | 90.64 |
| Example 2 | 92.72 | 90.64 |
| Example 3 | 92.70 | 90.48 |
| Example 4 | 92.66 | 90.44 |
| Example 5 | 92.82 | 90.43 |
| Example 6 | 92.85 | 90.58 |
| Example 7 | 92.83 | 90.64 |
| Example 8 | 93.43 | 91.02 |
| Example 9 | 93.38 | 90.95 |
| Example 10 | 93.35 | 90.87 |
| Example 11 | 93.04 | 89.78 |
| Comparative Example 1 | 87.47 | 86.18 |
| Comparative Example 2 | 87.60 | 86.28 |
| Comparative Example 3 | 90.44 | 87.63 |
| Comparative Example 4 | 90.84 | 88.74 |
| Comparative Example 5 | 91.54 | 89.57 |

Referring to Tables 9 and 10, it can be confirmed that the battery including each of the positive electrode active material of Examples 1 to 11 has large discharge capacity, high efficiency and high-temperature capacity retention rate, low direct current resistance, and excellent rate characteristics. In contrast, it can be confirmed that the battery including each of the positive electrode active material of Comparative Examples 1 to 4 has poor rate characteristics, and the battery including the positive electrode active material of Comparative Example 5 has small discharge capacity, low efficiency, and poor rate characteristics.

From these results, it can be confirmed that the positive electrode active material of the present invention is a positive electrode active material capable of simultaneously solving the problems of conventional secondary particles and single particles in a high-nickel positive electrode active material, wherein it is possible to improve not only cell characteristics such as improved lifespan and reduced gas generation but also energy density due to excellent density characteristics by implementing a positive electrode active material in the form of a secondary particle with a primary particle size of micron level.

**Claims**

1. A positive electrode active material comprising:

   a secondary particle in which a plurality of primary particles are aggregated,
   wherein the plurality of primary particles have an average particle size of 1.5 $\mu$m or more and 5.0 $\mu$m or less as measured from an SEM image, the particle size of the primary particle being a particle size based on a long diameter of the primary particle,
   wherein the plurality of primary particles includes disk-type primary particles,
   wherein the disk-type primary particle has interior angles on a same side of 150° or more and 210° or less in the primary particle observed from SEM images of a surface or cross-section of the secondary particle, when an imaginary tangent line with a greatest number of contact points is drawn for each of two boundary lines of the primary particle that exist within an angle of 45° or less with respect to a long diameter direction, and one imaginary line is drawn that intersects the two tangent lines, and
   wherein a (003) plane has a largest area ratio among crystal planes on a surface of the primary particle.

2. The positive electrode active material of claim 1, wherein the plurality of primary particles include three or more disk-type primary particles.

3. The positive electrode active material of claim 1, comprising:
   a lithium transition metal composite oxide including nickel, cobalt, and manganese.

4. The positive electrode active material of claim 1, comprising:
   a lithium transition metal composite oxide including nickel in an amount of 60 mol% or more among all transition metals.

5. The positive electrode active material of claim 1, comprising:
   a lithium transition metal composite oxide having an average composition represented by Chemical Formula 1 below:

   [Chemical Formula 1]          $Li_xNi_aCo_bMn_cM^1_dO_2$

   wherein:

   the $M^1$ is at least one selected from the group consisting of Al, Zr, B, W, Mo, Cr, Nb, Mg, Hf, Ta, La, Ti, Sr, Ba, Ce, V, F, P, S, and Y; and
   $0.9 \leq x \leq 1.3$, $0.6 \leq a < 1.0$, $0 < b < 0.4$, $0 < c < 0.4$, $0 \leq d \leq 0.2$, and $a+b+c+d=1$.

6. The positive electrode active material of claim 1, wherein the plurality of primary particles include single crystal primary particles.

7. The positive electrode active material of claim 1,
   wherein the secondary particle has an average particle diameter ($D_{50}$) of 7.0 $\mu$m or more and 20.0 $\mu$m or less according to a cumulative volume distribution measured using a laser diffraction particle size analyzer.

8. The positive electrode active material of claim 1, wherein the disk-type primary particles have a short diameter of 0.3 μm or more, and an aspect ratio (long diameter/short diameter) of 1.5 or more.

9. The positive electrode active material of claim 1, wherein the disk-type primary particles have a short diameter of 0.8 μm or more, and an aspect ratio (long diameter/short diameter) of 1.5 or more.

10. A positive electrode comprising the positive electrode active material according to any one of claims 1 to 9.

11. A lithium secondary battery comprising:

the positive electrode according to claim 10;
a negative electrode; and
a separator and an electrolyte interposed between the positive electrode and the negative electrode.

[FIG. 1]

[FIG. 2]

[FIG. 3]

[FIG. 4]

[FIG. 5]

[FIG. 6]

[FIG. 7]

[FIG. 8]

**EP 4 682 988 A1**

[FIG. 9]

48

[FIG. 10]

[FIG. 11]

[FIG. 12]

(A)

(B)

[FIG. 13]

(A)

(B)

[FIG. 14]

(A)

(B)

[FIG. 15]

(A)

(B)

[FIG. 16]

(A)

(B)

[FIG. 17]

[FIG. 18]

[FIG. 19]

[FIG. 20]

[FIG. 21]

[FIG. 22]

12EA
Center region

14EA
Outer region

[FIG. 23]

3EA

Center region

6EA

Outer region

[FIG. 24]

8EA
Center region

9EA
Outer region

[FIG. 25]

6EA

Center region

6EA

Outer region

[FIG. 26]

12EA

Center region

19EA

Outer region

[FIG. 27]

7EA
Center region

9EA
Outer region

[FIG. 28]

12EA

Center region

13EA

Outer region

[FIG. 29]

| 203EA | 180EA |
| Center region | Outer region |

[FIG. 30]

[FIG. 31]

[FIG. 32]

[FIG. 33]

[FIG. 34]

[FIG. 35]

[FIG. 36]

[FIG. 37]

[FIG. 38]

[FIG. 39]

[FIG. 40]

[FIG. 41]

[FIG. 42]

[FIG. 43]

[FIG. 44]

[FIG. 45]

[FIG. 46]

[FIG. 47]

[FIG. 48]

[FIG. 49]

[FIG. 50]

[FIG. 51]

[FIG. 52]

[FIG. 53]

[FIG. 54]

[FIG. 55]

[FIG. 56]

## INTERNATIONAL SEARCH REPORT

International application No.

**PCT/KR2024/005816**

### A. CLASSIFICATION OF SUBJECT MATTER

**H01M 4/525**(2010.01)i; **H01M 4/131**(2010.01)i; **H01M 4/36**(2006.01)i; **H01M 10/052**(2010.01)i; **H01M 4/505**(2010.01)i; **H01M 4/04**(2006.01)i; **H01M 10/0525**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/525(2010.01); C01G 53/00(2006.01); H01M 10/052(2010.01); H01M 10/0525(2010.01); H01M 4/36(2006.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 양극(cathode), 디스크 형태(disk type), 일차입자(primary particle), 이차입자(secondary particle), 종횡비(aspect ratio), 길이(length)

### C. DOCUMENTS CONSIDERED TO BE RELEVANT

| Category* | Citation of document, with indication, where appropriate, of the relevant passages | Relevant to claim No. |
|---|---|---|
| Y | KR 10-2022-0057480 A (LG ENERGY SOLUTION, LTD.) 09 May 2022 (2022-05-09) See claims 1, 4, 6-9 and 11-13; paragraphs [0092], [0096], [0149]-[0155], [0171] and [0188]-[0191]; and figure 2. | 1-11 |
| Y | KR 10-2019-0065963 A (SAMSUNG SDI CO., LTD.) 12 June 2019 (2019-06-12) See claims 1 and 5; and paragraphs [0021]-[0022] and [0028]. | 1-11 |
| A | JP 2018-538663 A (LG CHEM, LTD.) 27 December 2018 (2018-12-27) See entire document. | 1-11 |
| A | KR 10-2022-0106897 A (SAMSUNG SDI CO., LTD.) 01 August 2022 (2022-08-01) See entire document. | 1-11 |
| A | KR 10-2022-0122576 A (ECOPRO BM CO., LTD.) 02 September 2022 (2022-09-02) See entire document. | 1-11 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 August 2024** | **08 August 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/005816**

| Patent document cited in search report | | | Publication date (day/month/year) | Patent family member(s) | | | Publication date (day/month/year) |
|---|---|---|---|---|---|---|---|
| KR | 10-2022-0057480 | A | 09 May 2022 | CN | 116420251 | A | 11 July 2023 |
| | | | | EP | 4220772 | A1 | 02 August 2023 |
| | | | | JP | 2023-546964 | A | 08 November 2023 |
| | | | | KR | 10-2686481 | B1 | 19 July 2024 |
| | | | | US | 2023-0378456 | A1 | 23 November 2023 |
| | | | | WO | 2022-092922 | A1 | 05 May 2022 |
| KR | 10-2019-0065963 | A | 12 June 2019 | CN | 111587500 | A | 25 August 2020 |
| | | | | CN | 111587500 | B | 29 July 2022 |
| | | | | EP | 3723172 | A2 | 14 October 2020 |
| | | | | KR | 10-2185126 | B1 | 01 December 2020 |
| JP | 2018-538663 | A | 27 December 2018 | CN | 108140819 | A | 08 June 2018 |
| | | | | CN | 108140819 | B | 16 March 2021 |
| | | | | EP | 3386010 | A1 | 10 October 2018 |
| | | | | EP | 3386010 | B1 | 31 July 2019 |
| | | | | JP | 6723544 | B2 | 15 July 2020 |
| | | | | KR | 10-2006207 | B1 | 02 August 2019 |
| | | | | KR | 10-2017-0063397 | A | 08 June 2017 |
| | | | | US | 10873104 | B2 | 22 December 2020 |
| | | | | US | 2018-0254511 | A1 | 06 September 2018 |
| KR | 10-2022-0106897 | A | 01 August 2022 | CN | 114784263 | A | 22 July 2022 |
| | | | | EP | 4032861 | A1 | 27 July 2022 |
| | | | | KR | 10-2669978 | B1 | 30 May 2024 |
| | | | | US | 2022-0238872 | A1 | 28 July 2022 |
| KR | 10-2022-0122576 | A | 02 September 2022 | CN | 113451563 | A | 28 September 2021 |
| | | | | EP | 3885319 | A1 | 29 September 2021 |
| | | | | JP | 2021-158105 | A | 07 October 2021 |
| | | | | JP | 2023-143957 | A | 06 October 2023 |
| | | | | JP | 7329489 | B2 | 18 August 2023 |
| | | | | KR | 10-2021-0120525 | A | 07 October 2021 |
| | | | | KR | 10-2021-0154958 | A | 21 December 2021 |
| | | | | KR | 10-2341296 | B1 | 21 December 2021 |
| | | | | KR | 10-2435944 | B1 | 24 August 2022 |
| | | | | KR | 10-2540267 | B1 | 07 June 2023 |
| | | | | US | 11695114 | B2 | 04 July 2023 |
| | | | | US | 2021-0305558 | A1 | 30 September 2021 |
| | | | | US | 2023-0282822 | A1 | 07 September 2023 |

Form PCT/ISA/210 (patent family annex) (July 2022)

**REFERENCES CITED IN THE DESCRIPTION**

**Patent documents cited in the description**

- KR 1020230056231
- KR 1020240057079
- KR 101785262
- KR 101785262 B1
- KR 1020170119573 A